(19)

Europäisches
Patentamt
European
Patent Office
Office européen
des brevets

(11) EP 4 407 410 A1

(12) **EUROPEAN PATENT APPLICATION**
published in accordance with Art. 153(4) EPC

(43) Date of publication:
**31.07.2024 Bulletin 2024/31**

(21) Application number: **22892055.9**

(22) Date of filing: **10.11.2022**

(51) International Patent Classification (IPC):
**G06F 3/01** (2006.01)

(52) Cooperative Patent Classification (CPC):
**G06F 3/01; G06F 9/50; G06F 9/54;** Y02P 90/02

(86) International application number:
**PCT/CN2022/131166**

(87) International publication number:
**WO 2023/083262 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.11.2021 CN 202111340372**
**28.12.2021 CN 202111633492**

(71) Applicant: **Huawei Technologies Co., Ltd.**
**Shenzhen, Guangdong 518129 (CN)**

(72) Inventors:
• **WANG, Chenglu**
**Shenzhen, Guangdong 518129 (CN)**

• **GAN, Jiadong**
**Shenzhen, Guangdong 518129 (CN)**
• **PAN, Shaowu**
**Shenzhen, Guangdong 518129 (CN)**
• **SHIU, Ying Wai**
**Shenzhen, Guangdong 518129 (CN)**
• **ZHOU, Xinyu**
**Shenzhen, Guangdong 518129 (CN)**
• **ZHOU, Jianhui**
**Shenzhen, Guangdong 518129 (CN)**
• **WANG, Songtao**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **MULTIPLE DEVICE-BASED METHOD FOR PROVIDING SERVICE, AND RELATED APPARATUS AND SYSTEM**

(57) This application discloses a multi-device based method and system for providing a service, and a related apparatus. In the method, a plurality of devices form a communication system, and a central control device in the plurality of devices may schedule a part of or all resources in the communication system in a unified manner, to provide a service for a user. The central control device schedules the part of or all resources in the communication system in a unified manner, so that the resources in the system can be efficiently integrated, cross-device resource interconnection and sharing can be implemented, and a natural and intelligent service can be provided for the user.

FIG. 3

**Description**

This application claims priorities to Chinese Patent Application No. 202111340372.5, filed with the China National Intellectual Property Administration on November 12, 2021 and entitled "MULTI-DEVICE BASED METHOD AND SYSTEM FOR PROVIDING SERVICE, AND RELATED APPARATUS", and to Chinese Patent Application No. 202111633492.4, filed with the China National Intellectual Property Administration on December 28, 2021 and entitled "MULTI-DEVICE BASED METHOD AND SYSTEM FOR PROVIDING SERVICE, AND RELATED APPARATUS", both of which are incorporated herein by reference in their entireties.

**TECHNICAL FIELD**

This application relates to the field of terminals and communication technologies, and in particular, to a multi-device based method and system for providing a service, and a related apparatus.

**BACKGROUND**

With popularization of terminal devices, an individual may have a plurality of terminal devices, for example, a mobile phone, a tablet computer, and a smart screen. How to use resources of a plurality of terminal devices to provide a natural and intelligent service for a user is a current and future research direction.

**SUMMARY**

This application provides a multi-device based method and system for providing a service, and a related apparatus, to implement cross-device resource interconnection and sharing, and provide a natural and intelligent service for a user.

According to a first aspect, an embodiment of this application provides a multi-device based communication system for providing a service. The communication system includes a plurality of electronic devices, the plurality of electronic devices include a central control device, and the central control device is configured to manage a plurality of resources to enable the plurality of resources to perform the following steps: A first resource in the plurality of resources detects a first event, where there is one or more first resources; and a second resource in the plurality of resources executes a to-be-executed task corresponding to the first event, where there is one or more second resources, and all resources included in the first resource and/or the second resource come from at least two different electronic devices. The plurality of resources managed by the central control device include a part of or all resources of the plurality of electronic devices.

The plurality of resources may include, but are not limited to, a camera resource, a microphone resource, a sensor resource, a display resource, or a computing resource. When there are a plurality of first resources, the first resources may be a plurality of resources of a same type (for example, a plurality of camera resources, where the plurality of camera resources may be a plurality of camera resources of a same device, or a plurality of camera resources of a plurality of devices), or a plurality of resources of different types (for example, a camera resource and a microphone resource).

According to the communication system in the first aspect, the central control device may schedule the part of or all resources in the communication system in a unified manner, so that the resources in the system can be efficiently integrated, cross-device resource interconnection and sharing can be implemented, and a natural and intelligent multi-device collaboration service can be provided for a user.

With reference to the first aspect, in some implementations, there is one or more first resources, and there is one or more second resources. That all resources included in the first resource and/or the second resource come from at least two different electronic devices may be as follows: A plurality of first resources come from a plurality of different electronic devices; or a plurality of second resources come from a plurality of different electronic devices; or any two or more resources in the first resource and the second resource come from different electronic devices. For example, when there is only one first resource and one second resource, the first resource and the second resource come from different devices; or when the first resource or the second resource includes a plurality of resources, any resource in the first resource and any resource in the second resource come from different devices; and the like. The plurality of different electronic devices mentioned above are all electronic devices in the communication system.

With reference to the first aspect, in some implementations, the central control device is further configured to manage the plurality of resources to enable the plurality of resources to perform the following step: Before the second resource executes the to-be-executed task corresponding to the first event, a third resource in the plurality of resources recognizes a user intention indicated by the first event, and determines the to-be-executed task that meets the user intention.

In the foregoing implementation, the third resource in the communication system may recognize the user intention indicated by the first event, and segment the user intention into the to-be-executed task, so that the second resource subsequently executes the to-be-executed task.

With reference to the first aspect, in some implementations, the resource managed by the central control device is a composable capability, and the composable capability is a resource described in a preset manner. The first resource is a first composable capability, and the second resource is a second composable capability.

The preset manner may include, for example, but is not limited to, a preset format, protocol, standard, or the like.

In the foregoing implementation, each device may deconstruct a resource of the device into a composable capability in a unified preset manner. The composable capability obtained through deconstruction in the unified manner is decoupled from a device, a device model, and a device manufacturer. Therefore, the composable capability can be invoked by another device in the communication system in a cross-device manner without obstacles. In other words, the central control device can schedule the composable capability in a unified manner, to meet a user requirement. In addition, the resource is described in the preset manner, so that the method provided in this embodiment of this application can adapt to different devices, and devices of different types and manufacturers can be added to the communication system to jointly provide a service for the user.

With reference to the foregoing implementation, in some implementations, the central control device is further configured to: before managing the plurality of resources to enable the plurality of resources to perform the steps in the first aspect, configure composable capabilities of a part of or all the plurality of electronic devices into a virtual aggregation device. Both the first composable capability and the second composable capability are composable capabilities of the virtual aggregation device. After configuring the virtual aggregation device, the central control device may manage the composable capabilities of the virtual aggregation device.

Configuring the virtual aggregation device by the central control device means configuring parameters of the composable capabilities of the part of or all the plurality of electronic devices. The configuration of the parameters includes a configuration of a parameter related to a data processing flow direction. After the central control device configures the virtual aggregation device, an information collection and processing flow direction is specified.

In the foregoing implementation, after the central control device configures the virtual aggregation device, for an upper-layer application in each physical device in the communication system, the application may sense the independent virtual aggregation device, but does not sense a plurality of other independent physical devices. In this way, each upper-layer application can schedule a resource in another physical device more conveniently.

In the foregoing implementation, the central control device configures the virtual aggregation device, so that preparations before startup may be made in advance for a composable capability that may be used subsequently, a response speed can be improved when the composable capability is subsequently started to provide a service for the user, and a response delay can be shortened. In addition, the virtual aggregation device is configured, so that the communication system may need to aggregate only a part of composable capabilities in the communication system, to avoid wasting unnecessary resources.

In some implementations, the central control device is further configured to: before configuring the composable capabilities of the part of or all the plurality of electronic devices into the virtual aggregation device, receive composable capability information sent by a device other than the central control device, where the composable capability information indicates a composable capability provided by the corresponding device. The central control device is specifically configured to configure, based on composable capability information of the plurality of electronic devices, the composable capabilities of the part of or all the plurality of electronic devices into the virtual aggregation device.

In some implementations, the composable capability information may further include an attribute of the composable capability, and the attribute of the composable capability includes any one or more of the following: a position, an orientation, a category, performance, a parameter, a version, or a size of the composable capability. The attribute of the composable capability may be used by the central control device to better manage the resources of the electronic devices subsequently.

In other words, before the central control device configures the virtual aggregation device, the electronic devices in the communication system may further synchronize composable capability information with each other. In this way, the central control device may learn a composable capability of another device in the communication system, to facilitate subsequent flexible scheduling of a part of or all resources in the communication system, provide a service for the user, and implement cross-device resource interconnection and sharing.

In some implementations, the electronic devices in the communication system may periodically synchronize the composable capability information with each other, or may synchronize the composable capability information with each other after a new device joins the communication system or a new device goes online. When composable capability information in a device is updated, the device may also send composable capability information to another electronic device in the communication system. In this way, the central control device can learn an available composable capability in the communication system in time, to schedule a part of or all resources in the communication system more flexibly, and provide a better service for the user.

In some implementations, a composable capability indicated by composable capability information that is sent by another device and received by the central control device may be a part of or all composable capabilities of the electronic device. The part of or all composable capabilities may be determined based on an authorization result when the another device joins the communication system. A higher level of an authorization result obtained when an electronic device joins the communication system indicates more types and/or larger quantities of composable capabilities provided by the electronic device for another device to invoke. In this way, the electronic device can open more composable capabilities only to the another trusted device, to ensure information security of the electronic device.

In some other implementations, the part of or all composable capabilities may alternatively be determined by the user based on a requirement of the user.

In some implementations, after the central control device configures the virtual aggregation device, the virtual aggregation device is configured to run a single smart assistant, and the single smart assistant is configured to support the central control device in managing the plurality of resources to enable the plurality of resources to perform the steps in the first aspect. In other words, a physical device in which a composable capability included in the virtual aggregation device is located is configured to run the single smart assistant.

The virtual aggregation device runs the single smart assistant, so that the single smart assistant can help the central control device flexibly schedule the part of or all resources in the communication system, to provide a natural and intelligent service for the user. There is no need for each device to run a smart assistant, and then no need for a plurality of smart assistants to internally interact through negotiation.

With reference to the foregoing implementation, in some implementations, the central control device is specifically configured to configure the composable capabilities of the part of or all the plurality of electronic devices into the virtual aggregation device based on one or more of the following: a user status, a device status, an environment status, a user profile, a global context, or a memory. In this way, the virtual aggregation device can be configured based on information of a plurality of aspects, and the virtual aggregation device can provide a better service for the user.

With reference to the foregoing implementation in which the central control device configures the virtual aggregation device, in some implementations, the central control device is specifically configured to configure the following items into the virtual aggregation device: a composable capability of the central control device, and a fourth composable capability of an electronic device other than the central control device in the communication system. The fourth composable capability may be determined in the following two manners:

(1) The fourth composable capability is determined by the central control device according to a preset policy.

For example, the preset policy may include the following policies.

Comprehensive detection policy: For example, the central control device determines all composable capabilities of the electronic device other than the central control device as the fourth composable capability. The comprehensive detection policy can be used to obtain various types of information comprehensively and accurately, to provide a service for the user.

Privacy first policy: For example, the central control device determines a composable capability that is for collecting non-privacy content and that is of the electronic device other than the central control device as the fourth composable capability. The privacy first policy ensures that user privacy is not disclosed.

Power consumption first policy: For example, the central control device determines a composable capability of an electronic device that is connected to a power supply and that is other than the central control device as the fourth composable capability. The power consumption first policy is used, so that the environment information can be obtained when a battery level of each device is considered, to avoid that the battery of each device in the communication system is exhausted.

(2) The fourth composable capability is determined based on environment information after the central control device learns the environment information by using the composable capability of the central control device.

In the foregoing determining manner (2), an initial configuration of the virtual aggregation device is determined based on an exploration result of the central control device. This is flexible and convenient.

In the foregoing implementation, the plurality of devices in the communication system may be initialized in different environments as the virtual aggregation device with the central control device, and preparations before startup may be made in advance for a composable capability that may be used subsequently.

In some implementations, an initialization process of the virtual aggregation device may be performed when the communication system is started for the first time or restarted, or when a new device joins.

With reference to the foregoing implementation of initializing the virtual aggregation device, in some implementations, after the central control device configures the composable capabilities of the part of or all the plurality of electronic devices into the virtual aggregation device, the central control device is further configured to manage the plurality of resources to enable the plurality of resources to perform the following steps: The first composable capability detects a second event, and the second composable capability determines a service solution based on the second event. Then, the central control device is further configured to reconfigure a composable capability corresponding to the service solution into the virtual aggregation device.

In some implementations, the central control device is further configured to manage the plurality of resources to enable the plurality of resources to perform the following steps: The second resource analyzes a user requirement based on the second event, and determines a service solution based on the user requirement.

In some implementations, the second resource may analyze the user requirement based on the second event by using any one of a fixed rule, a knowledge graph, or machine learning.

In the foregoing implementation of reconfiguring the virtual aggregation device, based on an existing virtual aggregation device, the central control device may continuously detect the user status, the device status, the environment status, and the like through the virtual aggregation device, analyze a potential service requirement of the user based on detected information, and adaptively adjust the virtual aggregation device, that is, reconfigure the virtual aggregation device. In this way, a dynamic and adaptive reconfiguration of the virtual aggregation device can be controlled in a scenario in which the user status, the device status, and the environment status continuously change, so that the virtual aggregation device can accurately and personalizedly meet a determined or potential (not occurred) service requirement of the user, to provide a better service for the user. The existing virtual aggregation device may be an initialized virtual aggregation device, or may be a virtual aggregation device reconfigured for a plurality of times.

With reference to the first aspect or any one of the foregoing implementations, in some implementations, the first event includes any one of the following:

a first operation entered by a user;
an event in which the user status changes;
an event in which a distance between the user and the electronic device changes;
an event in which the environment status changes; and
an event in which the electronic device obtains a notification message or obtains information about a to-be-executed schedule.

In other words, the communication system provided in this embodiment of this application may not only provide a service for the user in response to an interaction behavior of the user, but also provide a service for the user based on information such as a user status change, an environment change, and the device status, to implement a natural and intelligent multi-device collaboration service.

In some implementations, the first composable capability may be determined in any one of the following manners.

(1) The first composable capability includes a plurality of composable capabilities for collecting first modality data.

In other words, for specific modality data, the communication system may use a plurality of composable capabilities for collecting the modality data to detect first time. In this way, modality information collected through a plurality of channels can be fused to obtain more accurate and richer modality information. This improves accuracy of a subsequent operation.

(2) The first composable capability is determined by the central control device based on one or more of a user habit, activenesses of composable capabilities, distances between the composable capabilities and the user, and a default sorting.

For example, the central control device may preferentially select, based on the user habit, a composable capability that is most frequently invoked in a history record as the first composable capability, or select a composable capability with a highest activeness as the first composable capability, or select a composable capability that is closest to the user as the first composable capability, or select a composable capability that is sorted in the front by default as the first composable capability. The default sorting may be determined based on a device priority.

(3) The first composable capability includes a composable capability selected by the user.

In this way, the central control device may select the first composable capability based on an actual requirement of the user.

(4) The first composable capability includes a composable capability of an electronic device on which the user focuses.

In this way, the central control device may select, as the first composable capability, the composable capability of the device on which the user focuses.

In some implementations, the second composable capability may be determined in any one of the following manners:

(1) The second composable capability includes a composable capability of a device in which the first composable capability is located.

In this way, the central control device may select both the first composable capability and the second composable capability from the same device.

(2) The second composable capability is determined by the central control device based on one or more of a user habit, activenesses of composable capabilities, distances between the composable capabilities and the user, and a default sorting.

For example, the central control device may preferentially select, based on the user habit, a composable capability that is most frequently invoked in a history record as the second composable capability, or select a composable capability with a highest activeness as the second composable capability, or select a composable capability that is closest to the user as the second composable capability, or select a composable capability that is sorted in the front by default as the second composable capability. The default sorting may be determined based on a device priority.

(3) The second composable capability includes a composable capability selected by the user.

In this way, the central control device may select the second composable capability based on an actual requirement of the user.

(4) The second composable capability includes a composable capability of an electronic device on which the user focuses.

In this way, the central control device may select, as the second composable capability, the composable capability of the device on which the user focuses.

With reference to the foregoing two implementations, in some implementations, the central control device is further configured to determine, in any one of the following manners, the device on which the user focuses:

determining, based on an image captured by a fourth device, the device on which the user focuses;

determining, based on an audio captured by a fourth device and an audio and an image captured by a fifth device, the device on which the user focuses; or

determining, based on an image captured by a fourth device and an image captured by a fifth device, the device on which the user focuses.

The fourth device and the fifth device each may be any device in the communication system.

With reference to the first aspect, in some implementations, the plurality of electronic devices in the communication system are configured to determine the central control device from the plurality of electronic devices in any one of the following cases:

(1) An electronic device in the plurality of electronic devices receives a second operation. In other words, the communication system may determine the central control device when being triggered by the user.

(2) Preset time is reached. In other words, the communication system may periodically or aperiodically determine the central control device according to a preset rule.

(3) An electronic device joins or leaves the communication system.

(4) The plurality of electronic devices form the communication system for preset duration. In other words, after the communication system is formed, the communication system may delay determining the central control device. In this way, the communication system may collect more comprehensive device information to select the central control device, so as to select a more appropriate central control device.

With reference to the first aspect and the foregoing implementation, the plurality of electronic devices in the communication system may determine the central control device by using the following several policies:

Policy 1: Determine the central control device from the plurality of electronic devices based on one or more of resource stability, a device modality, or the user habit. For example, a device with a stable computing resource, a device with a stable memory resource, a device with a stable power supply, a device with a large quantity of available modalities, or a device frequently used by the user may be determined as the central control device.

Policy 2: Determine an electronic device of a preset type in the plurality of electronic devices as the central control device. For example, a smart screen may be determined as the central control device.

Policy 3: Determine an electronic device selected by the user as the central control device. In this way, the central control device may be determined based on the actual requirement of the user.

Policy 4: Determine the central control device from the plurality of electronic devices based on historical interaction information of each electronic device.

In some implementations, the historical interaction information of the electronic device may include but is not limited to any one or more of the following: a device identifier, a device type, current power consumption, an available resource, a device modality, a current use status, online information, offline information, information about historical interaction with another device in the communication system 10, a device position (for example, a bedroom or a living room), an orientation, and a type of an environment in which the device is located (for example, an office or a home range).

In some implementations, Policy 4 specifically includes:

determining an electronic device with a largest average quantity of online devices as the central control device, where an average quantity of online devices is an average quantity that is of online devices in the communication system in unit time and that is collected by an electronic device in a statistical time period;

determining an electronic device with a largest normalized standard deviation of the average quantity of online devices as the central control device;

determining, as the central control device, an electronic device whose average quantity of online devices is greater than a first value and whose normalized standard deviation of the average quantity of online devices is greater than a second value; or

determining an electronic device whose average quantity of online devices has a largest mathematical expectation value as the central control device.

With reference to the first aspect and the foregoing implementation, there are a plurality of central control devices determined by the plurality of electronic devices in the communication system, and the plurality of central control devices are connected to all of the electronic devices in the communication system at same time or in a same space. In this way, the central control device may directly interact with another device in the communication system, to fully use information about each electronic device to provide a service for the user.

In some implementations, the central control device is specifically configured to manage the plurality of resources to enable the plurality of resources to perform the following steps: The third resource segments the user intention into a plurality of to-be-executed tasks by modality; and different second resources execute the to-be-executed tasks in different modalities.

In the foregoing implementation, the user intention is segmented into the plurality of to-be-executed tasks by modality, and the to-be-executed tasks in different modalities are distributed to different second resources for execution, so that a better service can be provided for the user.

With reference to the first aspect, in some implementations, the to-be-executed task that meets the user intention includes a plurality of tasks having a logical relationship, where the logical relationship includes any one or more of the following: a sequence relationship, a condition relationship, a cyclic relationship, or Boolean logic. The central control device is specifically configured to manage the plurality of resources to enable the plurality of resources to perform the following step: The second resource executes, according to the logical relationship, the plurality of tasks having the logical relationship.

In the foregoing implementation, the plurality of resources provided in this embodiment may execute, according to an explicit instruction or an implicit instruction of the user, the plurality of tasks having the logical relationship. In this way, the communication system provided in this embodiment can execute more types of tasks, can better meet complex requirements of the user, and can provide a better service for the user.

With reference to the first aspect, in some implementations, the central control device is further configured to manage the plurality of resources to enable the plurality of resources to perform the following steps: Before the third resource recognizes the user intention indicated by the first event, a plurality of first resources receive an interaction input. The third resource generates a global context based on the interaction input. The global context includes one or more of the following: time at which the first resource receives the interaction input, the first resource, interaction content of the interaction input, physiological feature information of a user corresponding to the interaction input, device information of an electronic device to which the first resource belongs, or device information of a target device controlled by the interaction input. The central control device is specifically configured to manage the plurality of resources to enable the plurality of resources to perform the following step: The third resource recognizes, based on the global context, the user intention indicated by the first event.

With reference to the foregoing implementation in which the third resource recognizes, based on the global context, the user intention indicated by the first event, in some implementations, the interaction input includes a historical input and a current input. The global context includes historical interaction information and current-round interaction information. The central control device is specifically configured to manage the plurality of resources to enable the plurality of resources to perform the following steps: The first resource obtains the historical interaction information based on the historical input, and obtains the current-round interaction information based on the current input. The third resource matches, from the historical interaction information, first historical interaction information associated with the current-round interaction information. The third resource recognizes, based on the first historical interaction information, the user intention indicated by the first event.

In some implementations, the first historical interaction information includes historical interaction information related to a first user, where the first user is a user that triggers the current input; or historical interaction information received by a sixth device at first time, where the sixth device is a first device or a near-field device of the first device, and an interval between the first time and time of receiving the current-round interaction information is less than first duration; or second historical interaction information received at second time, where a target device of the second historical interaction information is a target device or a near-field device of the current-round interaction information, and an interval between the second time and time of receiving the current-round interaction information is less than second duration; or historical interaction information whose correlation with the current-round interaction information is greater than a threshold. In the foregoing implementation, when the third resource recognizes, based on the global context, the user intention indicated by the first event, the third resource may analyze the service requirement of the user based on the received information of the user status, the device status, the environment status, the historical interaction information, and the like. Therefore, the user intention can be determined more accurately and personalized, so that a better service can be provided for the user.

With reference to the first aspect, in some implementations, the first event includes first dialogue information. The first dialogue information includes a first instruction and a second instruction, an intention corresponding to the first instruction is associated with an intention corresponding to the second instruction, and the first instruction includes a first pronoun. The central control device is further configured to manage the plurality of resources to enable the plurality of resources to perform the following step: before the second resource recognizes the user intention indicated by the first event, replacing an object indicated by the first pronoun in the first dialogue information with an object corresponding to the second instruction, to obtain second dialogue information. The central control device is specifically configured to manage the plurality of resources to enable the plurality of resources to perform the following step: The third resource recognizes, based on the second dialogue information, the user intention indicated by the first event.

In some implementations, a step of replacing the first pronoun in the first dialogue information with the object corresponding to the second instruction, to obtain the second dialogue information may be as follows: 1. Segment the first dialogue information into the first instruction and the second instruction, where the first instruction includes the first pronoun. 2. Recognize the first instruction including the first pronoun. 3. Recognize, based on an intention classification template, the intention corresponding to the first instruction and the intention corresponding to the second instruction. 4. Combine the first instruction and the second instruction when it is determined that the intention corresponding to the first instruction is associated with the intention corresponding to the second instruction. 5. Replace, based on the combined first instruction and second instruction, the object indicated by the first pronoun with the object corresponding to the second instruction, to obtain the second dialogue information.

In the foregoing implementation, when the first dialogue information entered by the user in a single round includes a pronoun, before recognizing the indicated user intention based on the first dialogue information, the third resource may first replace the pronoun in the first dialogue information with a corresponding reference object, to obtain the second dialogue information obtained by replacing the pronoun. In this way, the third resource may more accurately determine the user intention based on the second dialogue information, to provide a better service for the user.

With reference to the first aspect, in some implementations, the central control device is further configured to manage the plurality of resources to enable the plurality of resources to perform the following step: Before the third resource recognizes the user intention indicated by the first event, the first resource receives an interaction input within first preset time. The third resource determines a memory based on the interaction input, where the memory indicates a habit or preference for an interaction between the user and a device. The central control device is specifically configured to manage the plurality of resources to enable the plurality of resources to perform the following step: The third resource recognizes, based on the memory, the user intention indicated by the first event.

In some implementations, the memory may be classified into a short-term memory and a long-term memory, where the short-term memory may indicate, based on an interaction input that meets a first condition, a habit or preference for an interaction between the user and the device. The long-term memory may indicate, based on an interaction input that meets a second condition, a habit or preference for an interaction between the user and the device.

In some implementations, the first condition may be that the interaction input is received within a preset time window (for example, within the latest 6 hours). The second condition may be that the interaction input is consecutively received in a plurality of preset time windows (for example, within 6 hours or within 8 hours).

In some implementations, the first condition may be that in a specified time period 1 (for example, from 00:00 to 24:00), a quantity of times for receiving the interaction input is greater than a third threshold. The second condition may be that in a plurality of consecutive specified time periods 1 (for example, from 00:00 to 24:00), a quantity of times for receiving the interaction input in each specified time period 1 is greater than the third threshold.

In some embodiments, the third resource may construct the memory based on the interaction input by using a principal component analysis algorithm, or one or more artificial neural network algorithms such as CNN, RNN, and LSTM.

In the foregoing implementation, the third resource may construct, based on the interaction input of the user, the memory that indicates the habit or preference of the user. The third resource may recognize, based on the memory, the user intention indicated by the first event. In this way, the third resource can accurately and personalizedly meet a determined or potential (not occurred) service requirement of the user, to provide a better service for the user. With reference to the first aspect, in some implementations, the central control device is further configured to manage the plurality of resources to enable the plurality of resources to perform the following step: Before the third resource recognizes the user intention indicated by the first event, the third resource obtains a user profile. The central control device is specifically configured to manage the plurality of resources to enable the plurality of resources to perform the following step: The third resource recognizes, based on the user profile, the user intention indicated by the first event.

In the foregoing implementation, the third resource may construct the user profile based on the interaction input of the user, and the third resource may recognize, based on the memory, the user intention indicated by the first event. In this way, the third resource can accurately and personalizedly meet a determined or potential (not occurred) service requirement of the user, to provide a better service for the user.

In some implementations, the central control device is specifically configured to manage the plurality of resources to enable the plurality of resources to perform the following steps: The third resource recognizes, based on any one or more of the following: a user status, a device status, an environment status, the user profile, the global context, or the memory, the user intention indicated by the first event, and determines the to-be-executed task that meets the user intention. In this way, the user intention indicated by the first time may be recognized based on information of a plurality of aspects, to provide a better service for the user.

In some implementations, the first event includes a plurality of types of modality data, and the central control device is specifically configured to manage the plurality of resources to enable the plurality of resources to perform the following step: The first resource collects corresponding modality data by using a first sampling rate, where the first sampling rate is a preset sampling rate, or the first sampling rate is a sampling rate of a resource with a highest activeness in a plurality of resources included in the first resource. In this way, different first resources can collect data by using a unified sampling rate, and multi-modality data with a small data amount difference may be obtained, so that the third resource can fuse the multi-modality data more conveniently and quickly, to recognize the user intention indicated by the first event.

In some implementations, composable capabilities of the plurality of electronic devices in the communication system include an interaction composable capability and a service composable capability. The first composable capability belongs to the interaction composable capability, and the second composable capability belongs to the service composable capability.

In some implementations, composable capabilities of the plurality of electronic devices in the communication system include any one or more of the following: a camera resource, a microphone resource, a sensor resource, a display resource, or a computing resource that is described in the preset manner.

With reference to the first aspect, in some implementations, the plurality of electronic devices in the communication system may perform communication by using any one or more of the following technologies: a WLAN, Wi-Fi P2P, BT, NFC, IR, ZigBee, UWB, a hotspot, a Wi-Fi softAP, a cellular network, or a wired technology.

According to a second aspect, an embodiment of this application provides a multi-device based method for providing a service. The method is applied to a central control device, and the method includes: The central control device manages a plurality of resources to enable the plurality of resources to perform the following steps: A first resource in the plurality of resources detects a first event, where there is one or more first resources. A second resource in the plurality of resources executes a to-be-executed task corresponding to the first event, where there is one or more second resources, and all resources included in the first resource and/or the second resource include at least resources of two different electronic devices. The plurality of resources managed by the central control device include a part of or all resources of a plurality of electronic devices, and the plurality of electronic devices include the central control device.

According to the method in the second aspect, the central control device may schedule the part of or all resources of the plurality of devices in a communication system in a unified manner, so that the resources in the system can be efficiently integrated, cross-device resource interconnection and sharing can be implemented, and a natural and intelligent multi-device collaboration service can be provided for a user.

With reference to the second aspect, in some implementations, there is one or more first resources, and there is one or more second resources. That all resources included in the first resource and/or the second resource come from at least two different electronic devices may be as follows: A plurality of first resources come from a plurality of different electronic devices. Alternatively, a plurality of second resources may come from a plurality of different electronic devices. Alternatively, a plurality of first resources include a first sub-resource, a plurality of second resources include a second sub-resource, and the first sub-resource and the second sub-resource come from different electronic devices. The plurality of different electronic devices mentioned above are all electronic devices in the communication system.

With reference to the second aspect, in some implementations, before the second resource executes the to-be-executed task corresponding to the first event, the central control device may manage the plurality of resources to enable the plurality of resources to perform the following steps: A third resource in the plurality of resources recognizes a user intention indicated by the first event, and determines the to-be-executed task that meets the user intention.

In the foregoing implementation, the central control device may manage the third resource, so that the third resource recognizes the user intention indicated by the first event, and segment the user intention into the to-be-executed task, so that the second resource subsequently executes the to-be-executed task.

For definitions of a resource and a composable capability in the second aspect, refer to the related descriptions in the first aspect.

With reference to the second aspect, in some implementations, before the central control device manages the plurality of resources to enable the plurality of resources to perform the steps in the second aspect, the central control device may configure composable capabilities of a part of or all the plurality of electronic devices into a virtual aggregation device, where both a first composable capability and a second composable capability are composable capabilities of the virtual aggregation device. After configuring the virtual aggregation device, the central control device may manage the composable capabilities of the virtual aggregation device.

Configuring the virtual aggregation device by the central control device means configuring parameters of the composable capabilities of a part of or all the plurality of electronic devices. The configuration of a parameter includes a configuration of a parameter related to a data processing flow direction. After the central control device configures the virtual aggregation device, an information collection and processing flow direction is specified.

For a technical effect of configuring the virtual aggregation device by the central control device in the second aspect, refer to the related description in the first aspect.

In some implementations, before the central control device configures the composable capabilities of a part of or all the plurality of electronic devices into the virtual aggregation device, the central control device may receive composable capability information sent by a device other than the central control device, where the composable capability information indicates a composable capability provided by the corresponding device. For a definition of the composable capability information herein, refer to the related descriptions in the first aspect. Then, the central control device may configure, based on composable capability information of the plurality of electronic devices, the composable capabilities of a part of or all the plurality of electronic devices into the virtual aggregation device.

For a manner of configuring the virtual aggregation device by the central control device, refer to the related description in the first aspect.

In some implementations, after the central control device configures the virtual aggregation device, the virtual aggregation device is configured to run a single smart assistant, and the single smart assistant is configured to support the central control device in managing the plurality of resources to enable the plurality of resources to perform the steps in the second aspect. That is, a physical device in which a composable capability included in the virtual aggregation device is located is configured to run the single smart assistant.

For a category of the first event in the second aspect, refer to the related description in the first aspect.

For manners of determining the first resource and the second resource in the second aspect, refer to the related descriptions in the first aspect.

For a manner of determining the central control device in the second aspect, refer to the related description in the first aspect.

In some implementations, the central control device manages the plurality of resources to enable the plurality of resources to perform the following steps: The third resource segments the user intention into a plurality of to-be-executed tasks by modality; and different second resources execute the to-be-executed tasks in different modalities. In this way, the third resource segments the user intention into the plurality of to-be-executed tasks by modality, and the central control device distributes the to-be-executed tasks in different modalities to different second resources for execution, so that a better service can be provided for the user.

For a type included in the to-be-executed task that meets the user intention in the second aspect, refer to the related description in the first aspect.

With reference to the second aspect, in some implementations, the central control device manages the plurality of resources to enable the plurality of resources to perform the following step: Before the third resource recognizes the user intention indicated by the first event, a plurality of first resources receive an interaction input. The third resource generates a global context based on the interaction input. The global context includes one or more of the following: time at which the first resource receives the interaction input, the first resource, interaction content of the interaction input, physiological feature information of a user corresponding to the interaction input, device information of an electronic device to which the first resource belongs, or device information of a target device controlled by the interaction input. The third resource recognizes, based on the global context, the user intention indicated by the first event.

With reference to the foregoing implementation in which the third resource recognizes, based on the global context, the user intention indicated by the first event, in some implementations, the interaction input includes a historical input and a current input. The global context includes historical interaction information and current-round interaction information. The central control device manages the plurality of resources to enable the plurality of resources to perform the following steps: The first resource obtains the historical interaction information based on the historical input, and obtains the current-round interaction information based on the current input. The third resource matches, from the historical interaction information, first historical interaction information associated with the current-round interaction information. The third resource recognizes, based on the first historical interaction information, the user intention indicated by the first event.

In the foregoing implementation, when the third resource recognizes, based on the global context, the user intention indicated by the first event, the third resource may analyze a service requirement of the user based on received information of a user status, a device status, an environment status, the historical interaction information, and the like. Therefore, the user intention can be determined more accurately and personalized, so that a better service can be provided for the user.

With reference to the second aspect, in some implementations, the first event includes first dialogue information. The first dialogue information includes a first instruction and a second instruction, an intention corresponding to the first instruction is associated with an intention corresponding to the second instruction, and the first instruction includes a first pronoun. The central control device manages the plurality of resources to enable the plurality of resources to perform the following step: before the second resource recognizes the user intention indicated by the first event, replacing an object indicated by the first pronoun in the first dialogue information with an object corresponding to the second instruction, to obtain second dialogue information. The third resource recognizes, based on the second dialogue information, the user intention indicated by the first event.

In some implementations, for a step of replacing the first pronoun in the first dialogue information with the object corresponding to the second instruction, to obtain the second dialogue information, refer to the related description in the first aspect.

In the foregoing implementation, when the first dialogue information entered by the user in a single round includes a pronoun, before recognizing the indicated user intention based on the first dialogue information, the third resource may first replace the pronoun in the first dialogue information with a corresponding reference object, to obtain the second dialogue information obtained by replacing the pronoun. In this way, the third resource may more accurately determine the user intention based on the second dialogue information, to provide a better service for the user.

With reference to the second aspect, in some implementations, the central control device manages the plurality of resources to enable the plurality of resources to perform the following step: Before the third resource recognizes the user intention indicated by the first event, the first resource receives an interaction input within first preset time. The third resource determines a memory based on the interaction input, where the memory indicates a habit or preference for an interaction between the user and a device. The third resource recognizes, based on the memory, the user intention indicated by the first event.

For a classification and definition of the memory in some implementations, refer to the related descriptions in the first aspect.

For an algorithm used for memory construction in some implementations, refer to the related description in the first aspect.

In the foregoing implementation, the third resource may construct, based on the interaction input of the user, the memory that indicates the habit or preference of the user. The third resource may recognize, based on the memory, the user intention indicated by the first event. In this way, the third resource can accurately and personalizedly meet a determined or potential (not occurred) service requirement of the user, to provide a better service for the user.

According to a third aspect, an embodiment of this application provides an electronic device, including a memory and one or more processors. The memory is coupled to the one or more processors, the memory is configured to store computer program code, the computer program code includes computer instructions, and the one or more processors invoke the computer instructions, so that the electronic device performs the method according to any one of the second aspect or the implementations of the second aspect.

According to a fourth aspect, an embodiment of this application provides a communication system. The communication system includes a plurality of electronic devices, the plurality of electronic devices include a central control device, and the central control device is configured to perform the method according to any one of the second aspect or the implementations of the second aspect.

According to a fifth aspect, an embodiment of this application provides a computer-readable storage medium, including instructions. When the instructions are run on an electronic device, the electronic device is enabled to perform the method according to any one of the second aspect or the implementations of the second aspect.

According to a sixth aspect, an embodiment of this application provides a computer program product. When the computer program product runs on a computer, the computer is enabled to perform the method according to any one of the second aspect or the implementations of the second aspect.

The technical solutions provided in this application are implemented, so that a plurality of devices form a communication system, and a central control device in the plurality of devices may schedule a part of or all resources in the communication system in a unified manner, to provide a service for a user. The central control device schedules the part of or all resources in the communication system in a unified manner, so that the resources in the system can be efficiently integrated, cross-device resource interconnection and sharing can be implemented, and a natural and intelligent service can be provided for the user.

## BRIEF DESCRIPTION OF DRAWINGS

FIG. 1A is a schematic diagram of a structure of a communication system according to an embodiment of this application;

FIG. 1B is a schematic diagram of a software structure of a single smart assistant running on a communication system 10;

FIG. 2 is a schematic diagram of a structure of an electronic device 100 according to an embodiment of this application;

FIG. 3 is a schematic flowchart of a multi-device based method for providing a service according to an embodiment of this application;

FIG. 4 shows an example of categories of composable capabilities according to an embodiment of this application;

FIG. 5A to FIG. 5M show a group of user interfaces related to forming a communication system 10 according to an embodiment of this application;

FIG. 6A is a diagram of a scenario in which selection of a central control device is delayed according to an embodiment of this application;

FIG. 6B and FIG. 6C each are a diagram of a scenario in which a central control device is selected according to an embodiment of this application;

FIG. 6D is a diagram of a scenario in which a device joins different communication systems according to an embodiment of this application;

FIG. 7 shows a virtual aggregation device according to an embodiment of this application;

FIG. 8A to FIG. 8D are a schematic diagram of a device on which a user focuses according to an embodiment of this application;

FIG. 9 is a diagram of a scenario in which a plurality of devices provide a service according to an embodiment of this application;

FIG. 10A is a diagram of another scenario in which a plurality of devices provide a service according to an embodiment of this application;

FIG. 10B is a schematic flowchart of a global context-based interaction method according to an embodiment of this application;

FIG. 10C is a schematic diagram of a software architecture applied to global context-based interaction according to an embodiment of this application;

FIG. 11 is a schematic flowchart of performing matching analysis according to a specified matching rule according to an embodiment of this application;

FIG. 12 is a schematic flowchart of performing matching analysis according to a specified algorithm according to an embodiment of this application;

FIG. 13 is a schematic flowchart of encoding dialogue information of a round of historical dialogue according to an embodiment of this application;

FIG. 14 is a schematic diagram of composition of a correlation model according to an embodiment of this application;

FIG. 15 is a diagram of another scenario in which a plurality of devices provide a service according to an embodiment of this application;

FIG. 16 is a schematic flowchart of a multi-instruction coreference resolution method in a single-round dialogue according to an embodiment of this application;

FIG. 17A is a schematic flowchart of semantic unit recognition according to an embodiment of this application;

FIG. 17B is a schematic diagram of a semantic unit recognition model according to an embodiment of this application;

FIG. 17C is a schematic flowchart of an example of performing coreference resolution by using dialogue interaction information according to an embodiment of this application;

FIG. 18 is a diagram of another scenario in which a plurality of devices provide a service according to an embodiment of this application;

FIG. 19A is a schematic flowchart of executing a long-term task according to an embodiment of this application;

FIG. 19B is a schematic diagram of an execution process of constructing a long-term task according to an embodiment of this application;

FIG. 20 is a schematic flowchart of a personalized interaction method according to an embodiment of this application;

FIG. 21A is a schematic diagram of a memory model according to an embodiment of this application;

FIG. 21B is a diagram of another scenario in which a plurality of devices provide a service according to an embodiment of this application;

FIG. 21C is a diagram of another scenario in which a plurality of devices provide a service according to an embodiment of this application;

FIG. 21D is a schematic flowchart of a user profile-based interaction method according to an embodiment of this application; and

FIG. 22 and FIG. 23 each are a diagram of a scenario in which a plurality of devices provide a service according to an embodiment of this application.

## DESCRIPTION OF EMBODIMENTS

The technical solutions according to embodiments of this application are clearly and completely described in the following with reference to the accompanying drawings. In the descriptions of embodiments of this application, unless otherwise stated, "/" indicates or, for example, A/B may indicate A or B. In addition, "and/or" in this specification merely describes an association relationship between associated objects, and indicates that three relationships may exist. For example, A and/or B may indicate that there are three cases: Only A exists, both A and B exist, and only B exists. In addition, in the descriptions of embodiments of this application, "a plurality of" means two or more.

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be recognized by the user. A common representation form of the user interface is a graphical user interface (graphical user interface, GUI), which is a user interface that is displayed in a graphical manner and that is related to a computer operation. The user interface may be a visual interface element like a text, an icon, a button, a menu, a tab, a text box, a dialogue box, a status bar, a navigation bar, or a widget that is displayed on a display of the electronic device.

This application provides a multi-device based method and system for providing a service, and a related apparatus. In the method, a plurality of devices form a communication system, the plurality of devices may determine a central control device through negotiation, and the central control device may select an appropriate resource in the communication system to detect a specific event, analyze a user intention indicated by the specific event, and execute a task that meets the user intention. In this way, the central control device may schedule a part of or all resources in the communication system in a unified manner, to provide various services required by the user, and meet a user requirement.

The central control device schedules the resources of the plurality of devices in the communication system in a unified manner, so that the resources in the system can be efficiently integrated, cross-device resource interconnection and sharing can be implemented, and a natural and intelligent multi-device collaboration service can be provided for the user. In addition, if the user sends an instruction to any device in the communication system, another device in the communication system may continue to execute a corresponding task under management of the central control device, and the user does not need to send an additional cross-device operation instruction. This may be considered as providing a continuous and uninterrupted service to the user.

The central control device may also be referred to as a central device.

For ease of description, in the following embodiments of this application, a device configured to detect a specific event, a device configured to analyze a user intention indicated by the specific event, and a device executing a task that meets the user intention are respectively referred to as a first device, a second device, and a third device.

The central control device, the first device, the second device, and the third device may be a same device, or may be different devices.

The central control device, the first device, the second device, and the third device each may include one or more devices. This is not limited in embodiments of this application.

For details about a policy of determining the central control device through negotiation by the plurality of electronic devices in the communication system, and a policy of selecting the first device, the second device, and the third device in the communication system by the central control device, refer to detailed descriptions of the following method embodiments. Details are not described herein.

In some embodiments, the central control device may select an appropriate first device, second device, or third device with reference to one or more of the following: a user status, a device status, an environment status, a user profile, a global context, or a memory that is historically detected by the communication system. For definitions and obtaining manners of the user status, the device status, the environment status, the user profile, the global context, and the memory, refer to detailed descriptions of the following embodiments.

The specific event may include an interaction operation entered by the user, or may include an event in which the user status, the device status, or the environment status changes. For details, refer to related descriptions of the following method embodiments.

In embodiments of this application, the plurality of devices in the communication system may jointly run a single smart assistant. The smart assistant supports the plurality of devices in the communication system in determining the central control device through negotiation, and supports the central control device in selecting the appropriate resource from the plurality of devices in the communication system to detect the specific event, analyze the user intention indicated by the specific event, and execute the task that meets the user intention. The plurality of devices run the single smart assistant, and the devices can share and synchronize information based on the smart assistant. This ensures consistency of interaction contexts, user profiles, and personalized data, and provides continuous and consistent interaction experience for the user. In addition, the plurality of devices in the communication system run one smart assistant, so that system power consumption can be reduced.

In embodiments of this application, each device in the communication system may deconstruct or encapsulate a resource of the device into a standardized composable capability in a unified manner, and provide an interface of a standard specification for invoking by another device in the communication system. Therefore, a composable capability is a single capability component abstracted from a physical device. The composable capability may be classified into a plurality of different types. For details, refer to detailed descriptions of the following embodiments. The central control device may select an appropriate composable capability in the communication system to detect the specific event, analyze the user intention indicated by the specific event, and execute the task that meets the user intention.

The composable capability obtained through deconstruction in a unified manner is decoupled from a device, a device model, and a device manufacturer. Therefore, the composable capability can be invoked by the another device in the communication system in a cross-device manner without obstacles. In other words, the central control device can schedule the resource of each device in a unified manner, to meet a user requirement. In addition, the resource of each device is deconstructed as a standardized composable capability in a unified manner, which is equivalent to that different devices use a same resource description specification, so that the method provided in this application adapts to different devices, supports devices of different types and manufacturers in joining the communication system to jointly provide a service for the user, and has a wide application scope.

In the following embodiments of this application, a central control device may combine a part of or all resources in a communication system into a virtual aggregation device based on an actual requirement of a user. For example, the central control device may combine a part of or all composable capabilities in the communication system into the virtual aggregation device. The virtual aggregation device may be configured to detect a specific event, analyze a user intention indicated by the specific event, and execute a task that meets the user intention. The virtual aggregation device is obtained through combination, so that various resources required by the user may be prepared in advance based on the actual requirement of the user, and these resources can be conveniently and quickly used subsequently to meet a user requirement. The virtual aggregation device obtained through combination adaptively selects an appropriate composable capability. In one aspect, an interaction peripheral that is close to the user, is interested by the user, is less interfered, has high accuracy, and/or has a strong perception capability can be selected, to avoid impact of interaction signals picked up by ineffective and inefficient peripherals on interaction accuracy. In another aspect, capabilities of some devices with insufficient resources can be expanded, and an AI algorithm model with a strong computing capability and/or high accuracy in the system can be selected to improve interaction recognition accuracy.

The following first describes a communication system provided in embodiments of this application.

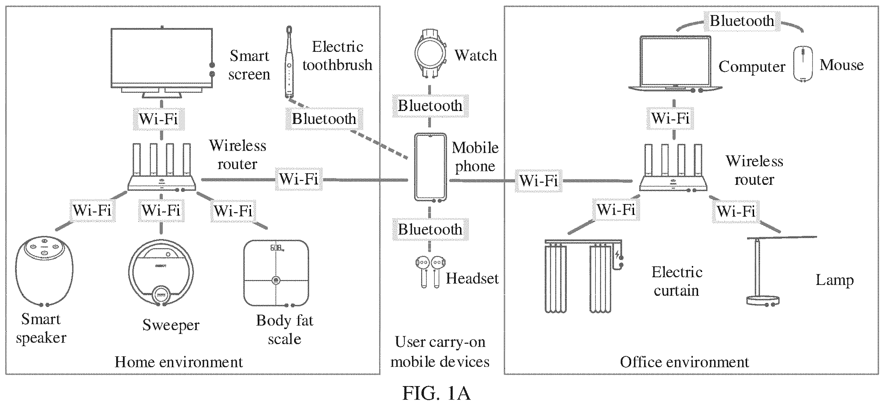

FIG. 1A is a schematic diagram of a structure of a communication system 10 according to an embodiment of this application.

As shown in FIG. 1A, the communication system 10 includes a plurality of electronic devices.

The plurality of electronic devices in the communication system 10 may be of various types. This is not limited in this embodiment of this application. The plurality of electronic devices may include intelligent devices such as a mobile phone, a tablet computer, a desktop computer, a laptop computer, a handheld computer, a notebook computer, a smart screen, a wearable device, an augmented reality (augmented reality, AR) device, a virtual reality (virtual reality, VR) device, an artificial intelligence (artificial intelligence, AI) device, a head unit, a smart headset, a game console, and a digital camera, may further include Internet of Things (internet of things, IoT) devices or smart home devices such as a smart speaker, a smart lamp, a smart air conditioner, a water heater, a kettle, an oven, a coffee maker, a camera, a doorbell, and a millimeter wave sensor, and may further include office devices such as a printer, a scanner, a fax machine, a copier, and a projector. This is not limited thereto. The plurality of electronic devices in the communication system 10 may further include non-portable terminal devices such as a laptop (laptop) computer having a touch-sensitive surface or a touch panel, and a desktop computer having a touch-sensitive surface or a touch panel.

The communication system 10 may include movable electronic devices such as a mobile phone, a tablet computer, and a smart band, or may include immovable devices such as a smart screen, a smart lamp, and a smart air conditioner.

The communication system 10 may include electronic devices produced by a same manufacturer, or may include electronic devices produced by different manufacturers. This is not limited in this embodiment of this application.

In this embodiment of this application, communication systems in different scenarios may include different devices. For example, the scenarios may include a smart home scenario, a sports and health scenario, an audio and video entertainment scenario, a smart office scenario, or a smart travel scenario. For example, as shown in FIG. 1A, the smart home scenario may include a smart screen, an electric toothbrush, a wireless router, a smart speaker, a sweeper, a body fat scale, a watch, a mobile phone, and a headset. The smart office scenario may include a computer, a mouse, a wireless router, an electric curtain, a desk lamp, a watch, a mobile phone, and a headset.

The plurality of electronic devices in the communication system 10 may include intelligent devices configured with a software operating system (operating system, OS), such as a mobile phone, a smart screen, and a computer, or may include non-intelligent devices not configured with an OS, such as a water heater and a kettle. Different electronic devices may be configured with different OSs, including but not limited to Harmony OS®, Android®, iOS®, Windows®, Linux®, and the like. All electronic devices may alternatively be configured with a same software operating system. For example, all may be configured with Harmony OS®.

A connection and a session are established between an electronic device and a part of or all other electronic devices in the communication system 10, and communication may be performed based on the connection and the session. In other words, any two electronic devices in the communication system 10 may be directly connected and communicate with each other, or may indirectly communicate with each other through another electronic device, or may have no connection or communication relationship.

For example, in the communication system 10, a smartphone A may directly communicate with a smart screen B, the smart screen B may indirectly communicate with a smart band C through a mobile phone, and the smart screen B and a smart speaker D may have no connection relationship and cannot directly communicate with each other.

After a communication connection is established between electronic devices, it may be considered that the electronic devices join a same communication system. The connection may be established between the electronic devices in a plurality of manners. For example, the connection may be established when being triggered by a user, or the connection may be actively established by a device. This is not limited herein.

In some embodiments, the communication system 10 may further require only authorization or permission authentication on the electronic device or a user who uses the electronic device, and allow the electronic device to join the communication system 10 only after the authorization succeeds or the permission authentication succeeds. For details about a manner of performing authorization or permission authentication on the electronic device or the user, refer to related descriptions of the following embodiments.

The electronic devices in the communication system 10 may establish a connection and communicate with each other by using any one or more of the following technologies: a wireless local area network (wireless local area network, WLAN), a wireless fidelity direct (Wi-Fi direct)/wireless fidelity peer-to-peer (Wi-Fi peer-to-peer, Wi-Fi P2P), Bluetooth (Bluetooth, BT), near field communication (near field communication, NFC), infrared (infrared, IR), ZigBee (ZigBee), ultra wideband (ultra wideband, UWB), a hotspot, a Wi-Fi softAP, a cellular network, a wired technology, a remote connection technology, or the like. The Bluetooth may be classic Bluetooth or Bluetooth low energy (Bluetooth low energy, BLE).

For example, the electronic device may communicate with another device in a same wireless local area network through the wireless local area network (WLAN). For another example, the electronic device may discover another nearby device by using a short-range communication technology like BT or NFC, and communicate with the another device after establishing a communication connection. For another example, an electronic device may work in a wireless access point (access point, AP) mode and create a wireless local area network. After another electronic device is connected to the wireless local area network created by the electronic device, the electronic device may communicate with the another device through a Wi-Fi softAP. For another example, a plurality of electronic devices may log in to a same account, a family account, or associated accounts, for example, log in to a same system account (for example, a Huawei account), then separately communicate, by using a cellular network technology like 3G, 4G, or 5G or a wide area network technology, with a server (for example, a server provided by Huawei) that maintains the system account, and then communicate with each other through the server. The family account is an account shared by family members. The associated accounts are a plurality of accounts that are bound.

In this embodiment of this application, a plurality of different connection manners may exist in a communication system. For example, as shown in FIG. 1A, the mobile phone and the electric toothbrush may communicate with each other through Bluetooth, and the mobile phone and the smart screen may communicate with each other through Wi-Fi.

It can be learned that the electronic devices in the communication system 10 may perform short-range communication or long-range communication. In other words, the electronic devices in the communication system 10 may be located in a same physical space, or may be located in different physical spaces.

The electronic devices in the communication system 10 may synchronize or share device information with each other based on communication connections between the devices. The device information may include, for example, but

**EP 4 407 410 A1**

is not limited to, a device identifier, a device type, an available capability of the device, and status information that is of a user, a device, and an environment and that is collected by the device.

In this embodiment of this application, the plurality of electronic devices in the communication system 10 may determine a central control device through negotiation based on the device information of the devices, and the central control device may select an appropriate resource from the plurality of devices in the communication system 10 to detect a specific event, analyze a user intention indicated by the specific event, and execute a task that meets the user intention.

In some embodiments of this application, the central control device may alternatively be implemented as a distributed system, and may be distributed on the plurality of devices in the communication system 10, to implement a function of the central control device by using a part of or all resources of the plurality of devices.

In this embodiment of this application, the central control device may combine a part of resources in the communication system into a virtual aggregation device based on an actual requirement of the user. For example, the central control device may combine a part of or all composable capabilities in the communication system into the virtual aggregation device. The virtual aggregation device may be configured to detect the specific event, analyze the user intention indicated by the specific event, and execute the task that meets the user intention. The virtual aggregation device may be deployed on one or more physical devices in the communication system 10, and may be obtained by integrating all or a part of resources in the one or more physical devices.

In this embodiment of this application, each electronic device in the communication system 10 may deconstruct resources of the electronic device into standardized composable capabilities in a unified manner. The composable capabilities may be classified into a plurality of different types. For details, refer to detailed descriptions of the following embodiments. For example, the smart screen may abstract composable capabilities such as screen display, camera recording, speaker audio playing, microphone audio pickup, and multimedia playing services.

An independent smart assistant may be installed and run on each electronic device in the communication system 10, or no independent smart assistant may be installed. This is not limited herein. The smart assistant is an application constructed based on artificial intelligence, and uses a speech semantic recognition algorithm to perform a voice interaction with the user in a real-time question-and-answer mode to help the user complete operations such as information query, device control, and text input. The smart assistant usually performs phased cascade processing, and implements the foregoing functions sequentially through voice wake-up, front-end voice processing, automatic speech recognition, natural language understanding, dialogue management, natural language generation, text-to-speech, and a response output.

In this embodiment of this application, the plurality of electronic devices in the communication system 10 may jointly run a single smart assistant. The smart assistant is deployed on the communication system 10. In some embodiments, the communication system 10 runs an instance of the smart assistant, and identifiers (for example, process numbers) running in all devices are the same. In some other embodiments, the communication system 10 may alternatively run a plurality of instances of the smart assistant. An instance is a running application. An instance may refer to a process or a thread. A process is an execution activity of an application on a computer. A thread is a single sequential control flow in the execution of the application. One process may include a plurality of threads.

In this embodiment of this application, the single smart assistant jointly run by the plurality of electronic devices in the communication system 10 may be implemented as any one or more of a system application, a third-party application, a service interface, an applet, or a web page.

The single smart assistant running in the communication system 10 is configured to support the communication system 10 in performing a multi-device based method for providing a service according to embodiments of this application.

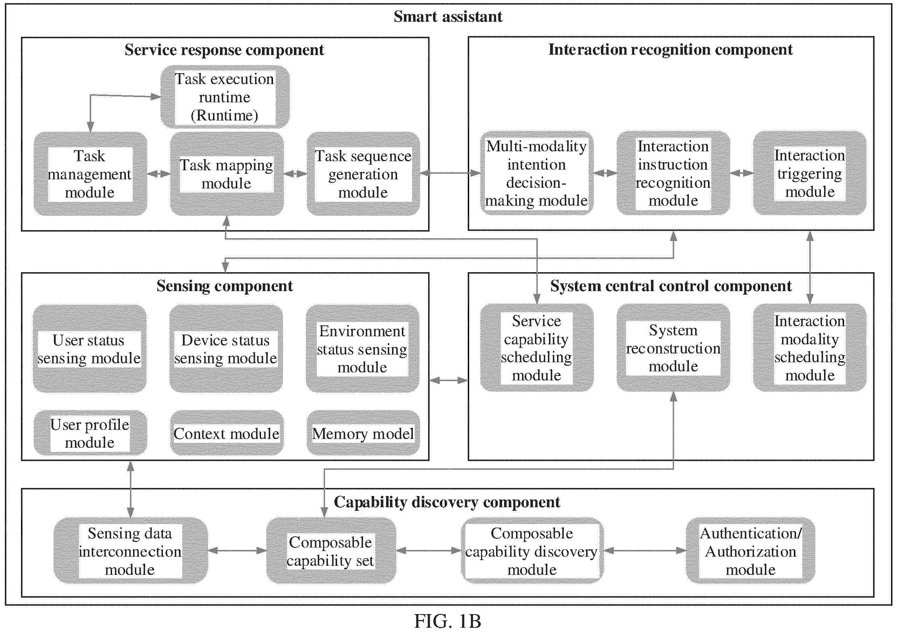

FIG. 1B is a schematic diagram of a software structure of a single smart assistant running in the communication system 10 according to an embodiment of this application. The smart assistant in the communication system 10 may be a single smart assistant on a virtual aggregation device.

As shown in FIG. 1B, the smart assistant may include the following components:

1. Capability discovery component

The capability discovery component may be deployed on each electronic device in the communication system 10.

The capability discovery component is configured to synchronize a composable capability with another electronic device in the communication system 10, and is further configured to manage an available composable capability in the communication system 10. The capability discovery component may be further configured to perform authorization or permission authentication on a peer device or a user before a connection is established between devices in the communication system 10.

In some embodiments, the capability discovery component may further include: an authentication/authorization module, a composable capability discovery module, a composable capability set, and a sensing data interconnection module.

16

The authentication/authorization module is used by another device to perform, before a connection is established between a local device and the another device, authentication and authorization on the local device or a user using the local device. For a manner of performing authentication and authorization, refer to descriptions of the following method embodiments.

The composable capability discovery module is configured to: discover another device in the communication system 10 and a composable capability of the another device, and synchronize the composable capability of the local device to the another device in the communication system 10. For a manner of discovering the another device by the composable capability discovery module, refer to descriptions of the following method embodiments.

The composable capability set is used by the user to manage the composable capabilities of the local device and the another discovered device.

The sensing data interconnection module is configured to manage a format specification of various types of data sensed by a sensing component. According to this specification, various types of data collected by each device in the communication system 10 can be managed in a standardized manner, so that the data can be invoked across devices, and cross-device resource interconnection and sharing can be implemented.

## 2. Sensing component

The sensing component may be deployed on an electronic device having a sensing capability in the communication system 10.

The sensing component may be configured to sense status information of a user, status information of a device, and status information of an environment, and is further configured to create and maintain a user profile, a context, and a memory.

In some embodiments, the sensing component may further include a user status sensing module, a device status sensing module, an environment status sensing module, a user profile module, a context module, and a memory model.

The user status sensing module, the device status sensing module, and the environment status sensing module are respectively configured to sense the status information of the user, the status information of the device, and the status information of the environment.

The user profile module is configured to create and maintain the user profile of the user based on an interaction between the user and each device in the communication system 10.

The context module is configured to create and maintain the global context for the communication system 10 based on a history of the interaction between the user and each device in the communication system 10.

The memory model is configured to create and maintain the memory of the communication system 10 based on the history of the interaction between the user and each device in the communication system 10, an operation history of the device, and the like.

## 3. System central control component

The system central control component is deployed on a central control device determined through negotiation by each electronic device in the communication system 10.

The system central control component is configured to select, based on various types of information obtained by the sensing component and an actual requirement of the user, an appropriate available capability in the communication system 10 maintained by the capability discovery component, to dynamically construct the virtual aggregation device. The system central control component is further configured to select an appropriate composable capability in the communication system 10 to detect a specific event, analyze a user intention indicated by the specific event, and execute a task that meets the user intention.

In some embodiments, the system central control component may further include a system reconstruction module, an interaction modality scheduling module, and a service capability scheduling module.

The system reconstruction module is configured to select, based on the various types of information obtained by the sensing component and the actual requirement of the user, the appropriate available composable capability in the communication system 10 maintained by the capability discovery component, to dynamically construct the virtual aggregation device.

The interaction modality scheduling module is configured to select the appropriate composable capability in the communication system 10 to detect the specific event and analyze the user intention indicated by the specific event.

The service capability scheduling module is configured to select the appropriate composable capability in the communication system 10 to execute the task that meets the user intention.

4. Interaction recognition component

The interaction recognition component is deployed on an electronic device in which the composable capability that is selected by the central control device and that is configured to detect the specific event and analyze the user intention indicated by the specific event is located. The specific event may be a modality or a combination of a plurality of modalities. Modalities may include, for example, a text, a voice, a vision, an action, a situation (for example, a user position, and a distance between the user and the device), and a scenario (for example, an office scenario, a home scenario, and a commute scenario).

The interaction recognition component is configured to: determine, based on the various types of information obtained by the sensing component, whether the specific event is detected, analyze the user intention indicated by the detected specific event, and further segment the user intention into a multi-modality form.

In some embodiments, the interaction recognition component may further include an interaction triggering module, an interaction instruction recognition module, and a multi-modality intention decision-making module.

The interaction triggering module is configured to determine, based on the various types of information obtained by the sensing component, whether the specific event is detected.

The interaction instruction recognition module is configured to analyze the user intention indicated by the detected specific event.

The multi-modality intention decision-making module is configured to segment the user intention into to-be-executed tasks in the multi-modality form.

5. Service response component

The service response component is deployed on an electronic device in which the composable capability that is selected by the central control device and that is configured to execute the task that meets the user intention is located.

The service response component is configured to: arrange a response task sequence based on the user intention obtained through analyzing by the interaction recognition component, and control a response task to be executed according to a specific logical relationship; and is further configured to dynamically connect or switch devices/capabilities based on the various types of information obtained by the sensing module to execute the response task.

In some embodiments, the service response component may be configured to perform multi-modality tasks.

In some embodiments, the service response component may further include a task sequence generation module, a task mapping module, a task management module, and a task execution runtime (Runtime).

The task sequence generation module is configured to generate one or more tasks that meet the user intention.

The task mapping module is configured to map the one or more tasks to an appropriate composable capability for execution.

The task management module is configured to control, based on the user intention obtained through analyzing by the interaction recognition component, the one or more tasks to be executed according to the specific logical relationship.

The task execution runtime (Runtime) is configured to run the response task.

The software structure of the smart assistant shown in FIG. 1B is merely an example, and does not constitute a specific limitation on the smart assistant running in the communication system 10. In some other embodiments of this application, the smart assistant may include more or fewer components than those shown in the figure, or combine some components, or split some components, or have different component arrangements. The components shown in the figure may be implemented by using hardware, software, or a combination of software and hardware.

The component or module shown in FIG. 1B may be deployed in a form of a device-side program and/or a cloud service, or may be deployed and run on one or more devices by using a distributed or centralized architecture. For example, the authentication/authorization module, the user profile module, the context module, the memory model, the interaction instruction recognition module, and the multi-modality intention decision-making module may be deployed in a device-cloud combination manner.

In some other embodiments, the communication system 10 may alternatively include a plurality of central control devices. The central control devices may form different virtual aggregation devices, run instances of a plurality of virtual aggregation devices, and separately run a single smart assistant on different virtual aggregation devices. In this way, different virtual aggregation devices may be formed for different users, to provide personalized services for different users.

For a specific function of each device in the communication system 10, refer to detailed descriptions of the following method embodiments.

In this embodiment of this application, a quantity of electronic devices in the communication system 10 may change. For example, some devices may be added to the communication system 10, or some devices may be reduced.

If a device is connected to the communication system 10 when the communication system 10 does not learn or store related information (for example, an identifier or a type) of the device, it is referred to as that the device joins the communication system 10. If a device is connected to the communication system 10 when the communication system 10 learns or stores related information (for example, an identifier or a type) of the device, it is referred to as that the device goes online.

Similarly, if the communication system 10 does not store related information of a device after the device is disconnected from the communication system 10, it is referred to as that the device leaves the communication system 10. If the communication system 10 still stores related information of a device after the device is disconnected from the communication system 10, it is referred to as that the device goes offline. The electronic device usually leaves the communication system 10 or goes offline from the communication system 10 due to reasons such as a position change or battery exhaustion.

The communication system 10 shown in FIG. 1A is merely an example. In a specific implementation, the communication system 10 may further include more devices. This is not limited herein. For example, the communication system 10 may further include a router configured to provide a WLAN, a server configured to provide an authentication/authorization service, a server configured to store composable capability information, a context, a user profile, or a memory, a server configured to manage an account, a server configured to manage the electronic devices in the communication system 10, and the like.

The communication system 10 may alternatively be referred to as another term like a distributed system or an interconnected system. This is not limited herein.

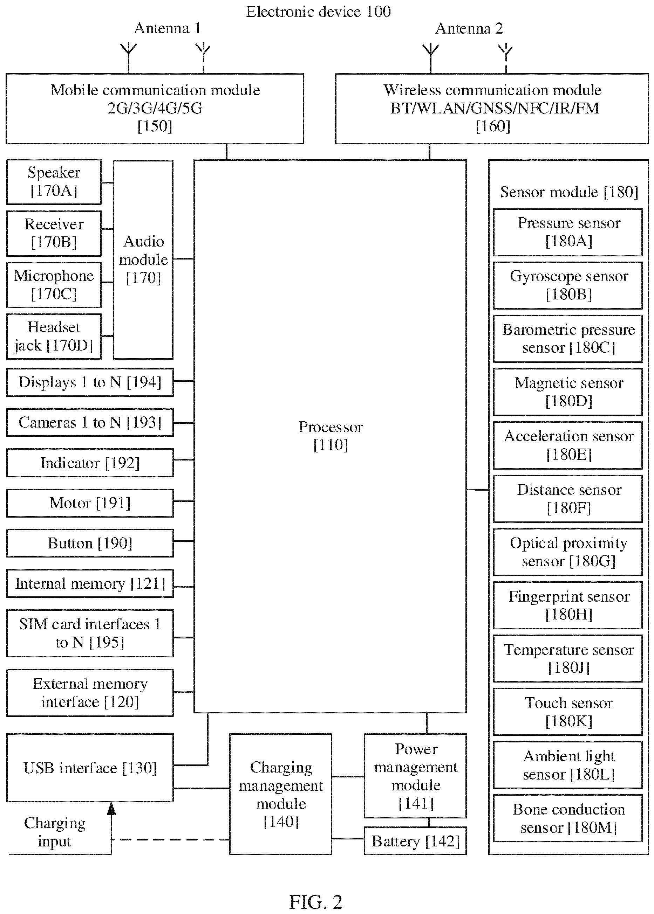

FIG. 2 is a schematic diagram of a structure of an electronic device 100 according to an embodiment of this application. The electronic device 100 may be any electronic device in the communication system 10.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In this embodiment of this application, the processor 110 may be configured to deconstruct resources of the electronic device 100 into standardized composable capabilities in a unified manner.

If the electronic device 100 shown in FIG. 2 is a central control device determined through negotiation by devices in the communication system 10, the processor 110 may be configured to select an appropriate resource from the plurality of devices in the communication system 10 to detect a specific event, analyze a user intention indicated by the specific event, and execute a task that meets the user intention.

If the electronic device 100 shown in FIG. 2 is a first device selected by the central control device, the processor 110 is configured to invoke a related component (for example, a display, a microphone, or a camera) of the electronic device to detect the specific event.

If the electronic device 100 shown in FIG. 2 is a second device selected by the central control device, the processor 110 is configured to analyze the user intention indicated by the specific event.

If the electronic device 100 shown in FIG. 2 is a third device selected by the central control device, the processor 110 is configured to invoke a related component (for example, a display, a microphone, or a camera) of the electronic device to execute the task that meets the user intention.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a WLAN (for example, Wi-Fi), BT, a global navigation satellite system (global navigation satellite system, GNSS), frequency modulation (frequency modulation, FM), NFC, IR, UWB, and the like. The wireless communication module 160 may be one or more components integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The mobile communication module 150 or the wireless communication module 160 is configured to support the electronic device 100 and another device in the communication system 10 in establishing a connection and communicating, and synchronizing or sharing device information with each other.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD). The display panel may be an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The internal memory 121 may include one or more random access memories (random access memories, RAMs) and one or more nonvolatile memories (nonvolatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is generally referred to as a DDR5 SDRAM), and the like. The nonvolatile memory may include a magnetic disk storage device, a flash memory (flash memory), and the like.

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia Card, eMMC), and the like according to storage specifications.

The random access memory may be directly read and written by using the processor 110, and may be configured to store an executable program (for example, a machine instruction) of an operating system or another running program, and may be further configured to store data of a user, data of an application, and the like.

The nonvolatile memory may also store an executable program, data of a user, data of an application, and the like, which may be loaded into the random access memory in advance for directly reading and writing by the processor 110.

The external memory interface 120 may be configured to connect to an external nonvolatile memory, to extend a storage capability of the electronic device 100. The external nonvolatile memory communicates with the processor 110 through the external memory interface 120, to implement a data storage function. For example, files such as music and videos are stored in the external nonvolatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and recognize a sound source, so as to implement a directional recording function and the like.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The acceleration sensor 180E may detect accelerations in various directions (usually on three axes) of the electronic device 100. When the electronic device 100 is still, a magnitude and a direction of gravity may be detected. The acceleration sensor 180E may be further configured to recognize a posture of the electronic device, and is used in applications such as switching between a landscape mode and a portrait mode and a pedometer.

The distance sensor 180F is configured to measure a distance. The electronic device 100 may measure the distance in an infrared manner or a laser manner. In some embodiments, in an image shooting scenario, the electronic device 100 may measure a distance through the distance sensor 180F to implement quick focusing.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The structure shown in FIG. 2 does not constitute a specific limitation on the electronic device 100. In some other embodiments of this application, the electronic device 100 may include more or fewer components than those shown in the figure, or combine some components, or split some components, or have components different from those in FIG. 2. The components shown in the figure may be implemented by using hardware, software, or a combination of software and hardware.

For details about functions of the modules of the electronic device 100, refer to detailed descriptions of the following method embodiments. Details are not described herein again.

Based on the communication system 10 shown in FIG. 1A, the architecture of the smart assistant shown in FIG. 1B, and the architecture of the electronic device shown in FIG. 2, the following describes a multi-device based method for providing a service according to embodiments of this application.

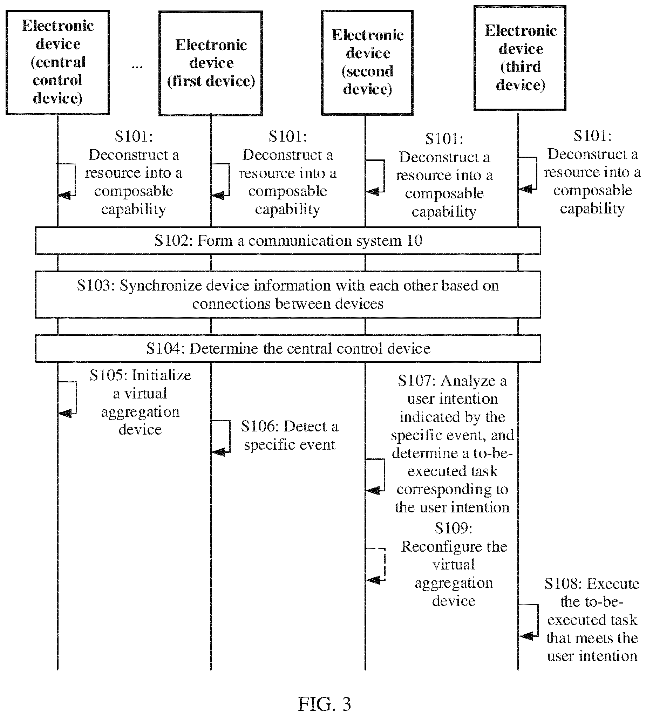

FIG. 3 shows an example of a process of a multi-device based method for providing a service.

As shown in FIG. 3, the method may include the following steps.

S101: An electronic device deconstructs a resource into a composable capability.

There may be one or more electronic devices that perform S 101.

The resource of the electronic device may include one or more of the following: a software resource, a hardware resource, a peripheral, a peripheral resource, or the like of the electronic device.

The hardware resource is related to hardware configured for the electronic device, and may include, for example, a camera, a sensor, an audio device, a display, a motor, a flash, and the like of the electronic device.

The software resource is related to software configured for the electronic device, and may include, for example, a memory resource, a computing capability (for example, a beautification algorithm capability and an audio and video codec capability), a network capability, a device connection capability, a device discovery capability, a data transmission capability, and the like of the electronic device. Further, the software resource may include a photographing service, a recording service, a fingerprint authentication service, a sports and health service, a playing service, an SMS message service, a speech recognition service, a video call service, and the like that are provided by the electronic device. The software resource may include a system resource, or may include a third-party resource. This is not limited herein.

The peripheral is a device that is connected to the electronic device and is configured to perform data and information exchange, transfer, storage, and the like. The peripheral may include, for example, an accessory device of the electronic device such as a mouse, an external display, a Bluetooth headset, and a keyboard, and a smartwatch, a smart band, and the like managed by the electronic device. The peripheral resource may include a hardware resource and a software resource. For the hardware resource and the software resource, refer to the foregoing related descriptions.

In this embodiment of this application, one electronic device may include any one or more types of resources, or may include one or more resources.

In this embodiment of this application, the electronic device may deconstruct or encapsulate the resource of the electronic device into a standardized composable capability in a unified manner, and provide an interface of a standard specification for invoking by another device in a communication system. The composable capability is a single capability component abstracted from a physical device.

Because the resource of the electronic device may change due to a connection to a new peripheral, installation/uninstallation of an application, and the like, the composable capability obtained by the electronic device through deconstruction may also change.

The electronic device may describe the resource of the electronic device as the standardized composable capability in a manner oriented to one or more of a capability, a service, or information. For example, the electronic device may deconstruct the resource of the electronic device into different composable capabilities based on different categories of capabilities (for example, a connection capability, an audio and video capability, and an image shooting capability), may deconstruct the resource of the electronic device into different composable capabilities based on different types of services (for example, a positioning service, a cloud positioning service, and a cloud computing service), or may deconstruct the resource of the electronic device into different composable capabilities based on different types of information (for example, image information and text information).

In other words, the composable capability is a resource described by the electronic device in a preset manner. The preset manner may include a preset format, protocol, standard, or the like.

In some embodiments, a device composable capability may be described by using Schema, Protobuf, an extensible markup language (extensible markup language, XML), JSON (JavaScript object notation), or the like, and files of different versions are described by using a forward/backward compatible composable capability.

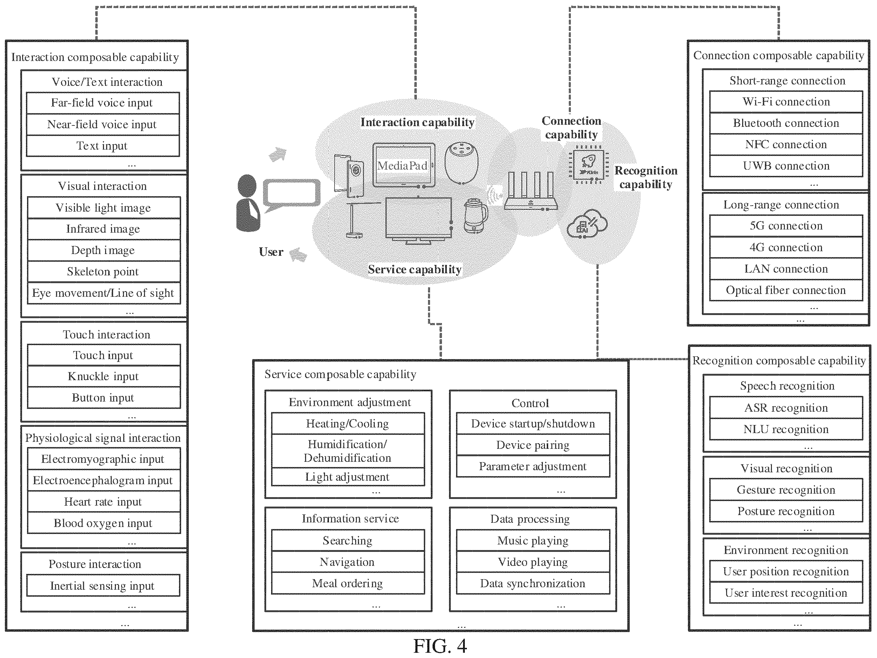

FIG. 4 shows an example of categories of composable capabilities according to an embodiment of this application.

As shown in FIG. 4, the resource of the electronic device may be deconstructed into the following four categories of composable capabilities:

1. Interaction composable capability

The interaction composable capability may be configured to detect a specific event. The specific event may include an interaction operation entered by a user, or may include an event in which a user status, a device status, or an environment status changes.

In some embodiments, based on a category of the interaction operation entered by the user, the interaction composable capability may further include but is not limited to one or a combination of the following categories:

Voice interaction composable capability: The voice interaction composable capability is configured to collect a voice instruction entered by the user and an ambient sound. The voice interaction composable capability may be obtained by encapsulating resources such as the microphone 170C, the receiver 170B, and an external headset or microphone of the electronic device.

Text interaction composable capability: The text interaction composable capability is configured to collect a text entered by the user. The text interaction composable capability may be obtained by encapsulating resources such as the display 194 of the electronic device.

Visual interaction composable capability: The visual interaction composable capability is configured to collect visual interaction information such as a visible light image, an infrared image, a depth image, a skeleton point, and an eye movement/a line of sight. The visual interaction composable capability may be obtained by encapsulating resources such as the camera 193 (for example, an infrared camera or a depth camera) of the electronic device.

Tactile interaction composable capability: The tactile interaction composable capability is configured to collect a touch input, a knuckle input, a button input, and the like of the user. The tactile interaction composable capability may be obtained by encapsulating resources such as the display 194, the touch sensor 180K, and the pressure sensor 180A of the electronic device.

Physiological signal interaction composable capability: The physiological signal interaction composable capability may be configured to collect physiological signals such as an electromyographic signal, an electroencephalogram, a heart rate, and blood oxygen. The physiological signal interaction composable capability may be obtained by encapsulating hardware resources such as an optical sensor and an electrode.

Posture interaction composable capability: The posture interaction composable capability is configured to collect posture information of the user. The posture interaction composable capability may be obtained by encapsulating resources such as the gyroscope sensor 180B, the acceleration sensor 180E, and an inertial sensor.

2. Recognition composable capability

The recognition composable capability may be configured to: recognize a user intention indicated by the specific event detected by the interaction composable capability, and determine a to-be-executed task corresponding to the user intention. Specifically, the interaction recognition composable capability may first recognize specific information (such as semantics and text information) indicated by the specific event, and then recognize the user intention indicated by the specific information.

In some embodiments, the recognition composable capability may further include but is not limited to one or a combination of the following categories:

Speech recognition composable capability: The speech recognition composable capability may be configured to recognize a speech, and may be obtained through encapsulation by using technologies such as automatic speech recognition (automatic speech recognition, ASR) and natural language understanding (natural language understanding, NLU).

Visual recognition composable capability: The visual recognition composable capability may be configured to recognize a gesture and a posture, and may be obtained through encapsulation by using resources such as a computer vision algorithm.

Environment recognition composable capability: The environment recognition composable capability may be configured to recognize a user position and a user interest, and may be obtained through encapsulation by using a position recognition algorithm or the like.

3. Service composable capability

The service composable capability is configured to execute a task that meets the user intention, to provide a service for the user.

In some embodiments, the service composable capability may further include but is not limited to one or a combination of the following categories:

Environment adjustment composable capability: The environment adjustment composable capability is configured to adjust an environment, for example, perform heating, cooling, humidification, dehumidification, illumination intensity adjustment, and the like, and may be obtained by encapsulating devices such as an air conditioner, a humidifier, and a lamp.

Control composable capability: The control composable capability is configured to control a device, for example, perform device startup and shutdown, device pairing, parameter adjustment, and the like.

Information service composable capability: The information service composable capability is configured to provide an information service like searching, navigation, and meal ordering.

Data processing composable capability: The data processing composable capability is configured to process various data, for example, play music, play a video, and synchronize data.

4. Connection composable capability

The connection composable capability is configured to support a connection, communication, and an interaction between devices, and may also be used to describe communication parameters such as communication delays and bandwidths of devices.

In some embodiments, the connection composable capability may further include one or a combination of the following categories:

Short-range connection composable capability: The short-range connection composable capability is configured to support a device in connecting to and communicating with another device by using a short-range communication technology. The short-range communication technology may include, for example, Wi-Fi, BT, NFC, and UWB. The short-range connection composable capability may be obtained by encapsulating resources such as the wireless communication module 160 and an antenna.

Long-range connection composable capability: The long-range connection composable capability is configured to support a device in connecting to and communicating with another device by using a long-range communication technology. The long-range communication technology may include, for example, a cellular technology (for example, 4G or 5G), a LAN, and a wired technology (for example, an optical fiber). The long-range connection composable capability may be obtained by encapsulating resources such as the mobile communication module 150, an antenna, and a wired interface.

This is not limited to the manner of classifying the categories of the composable capabilities shown in FIG. 4. In some other embodiments, the categories of the composable capabilities may be further classified in another manner. This is not limited herein. For example, classification may alternatively be performed based on a data type, and the data type may include an image/video, a voice, a text, and the like.

In this embodiment of this application, one electronic device may include any one or more categories of composable capabilities, or may include one or more composable capabilities.

In S101, the composable capability obtained through deconstruction in a unified manner is decoupled from a device, a device model, and a device manufacturer. Therefore, the composable capability can be invoked by the another device in the communication system in a cross-device manner without obstacles. In other words, the central control device can schedule resources of devices in a unified manner, to meet a user requirement. The resources of the devices are deconstructed into standardized composable capabilities in a unified manner, which is equivalent to that different devices use a same resource description specification, so that the method provided in this application adapts to different devices, and supports devices of different types and manufacturers in joining the communication system to jointly provide a service for the user.

In some embodiments of this application, after obtaining the standardized composable capability through deconstruction, the electronic device may further obtain an attribute of the composable capability. For example, the attribute of the composable capability may include the following two types: 1. Static information, for example, a category, a parameter (for example, a resolution of a captured image), performance (for example, a sound pickup range), a version, power consumption, and a size specification (for example, a display specification) of the composable capability. 2. Dynamic information, including information that changes in different environments, for example, a position (for example, indoor, outdoor, living room, bedroom, near field, or far field), an orientation, and whether being plugged in or not (for example, a mobile phone becomes less sensitive to power consumption when being plugged in). The attribute of the composable capability may be manually configured by the user (for example, the position of the composable capability is specified during device initialization), or may be detected by the device during device running (for example, an ultrasonic sensor is used to detect whether there is another device around).

S102: A plurality of electronic devices form a communication system 10.

In some embodiments of this application, the plurality of electronic devices may establish a session after establishing a connection, to form the communication system 10.

In some other embodiments of this application, the plurality of electronic devices may first establish a connection, and then establish a session after authentication and authorization is performed, to form the communication system 10.

That the plurality of electronic devices form the communication system 10 may also mean that the electronic devices join the communication system 10

That the plurality of electronic devices establish a connection or a session mentioned above may be that one electronic device establishes a connection or a session with all or a part of any other electronic devices. The electronic devices may establish a connection and communicate with each other by using one or more of the following technologies: a WLAN, Wi-Fi P2P, BT, NFC, IR, ZigBee, UWB, a hotspot, a Wi-Fi softAP, a cellular network, a wired technology, a remote connection technology, or the like. A plurality of different connection manners may exist in the communication system 10.

In embodiments of this application, the electronic device may establish a connection to another device in any one of the following manners:

Manner 1: The electronic device may be triggered by the user to establish the connection to the another device.

In some embodiments, the electronic device may receive an input user operation, and establish the connection between the electronic device and the another device when triggered by the user operation. An implementation of the user operation is not limited in embodiments of this application. For example, the user operation may include but is not limited to: a touch operation, tap operation, or touch and hold operation acting on a display, a voice instruction, an air gesture, an operation of shaking the electronic device, an operation of pressing a button, or the like.

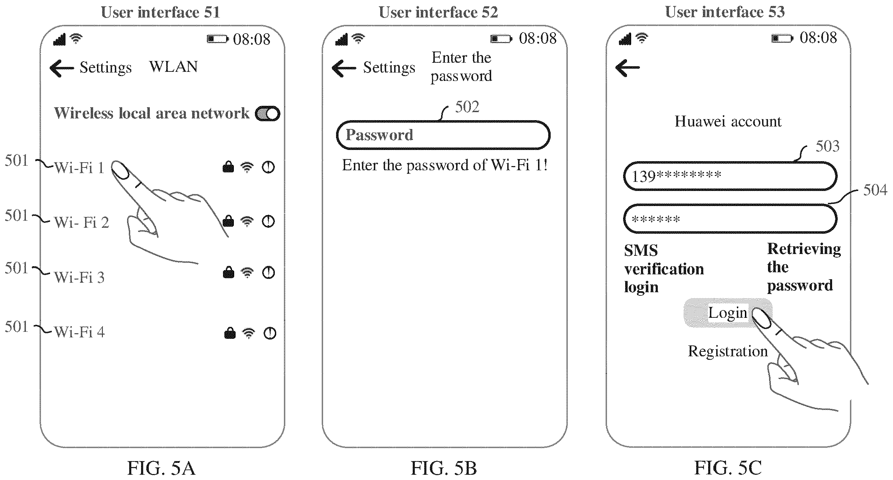

For example, refer to FIG. 5A. The electronic device may display, on a user interface 51 provided by a setting application, options 501 of a plurality of discovered surrounding wireless networks. After the user taps one of the options, a password input box 502 shown in FIG. 5B may be displayed. After the user enters an authentication password of a wireless network corresponding to the option, the wireless network may be joined. After joining the wireless network, the electronic device establishes a connection to another electronic device connected to the wireless network.

For another example, when triggered by the user, the electronic device may discover another nearby device by using a short-range communication technology like BT or NFC, or an NFC touch, or a Wi-Fi P2P technology, and establish a communication connection to the another device.

For another example, refer to FIG. 5C. After the user enters an account 503 and a password 504 of a system, the electronic device may log in to the account, and then establish, by using a cellular network technology like 3G, 4G, or 5G or a wide area network technology through a server (for example, a server provided by Huawei) that maintains the system account, a connection to another device that logs in to the same account, a family account, or an associated account.

In some other embodiments, the electronic device may receive an input user operation, and indicate, when triggered by the user operation, a device managed by the electronic device to establish a connection to another device.

For example, a smartphone may manage an IoT device (for example, a smart speaker, a smart lamp, or a smart screen). When the IoT device is powered on for the first time, the IoT device broadcasts information about the IoT device and pops up a window on the nearby smartphone to guide the user to enter a Wi-Fi password on the smartphone. Then, the smartphone may send the Wi-Fi password to the IoT device, to trigger the IoT device to join a Wi-Fi network.

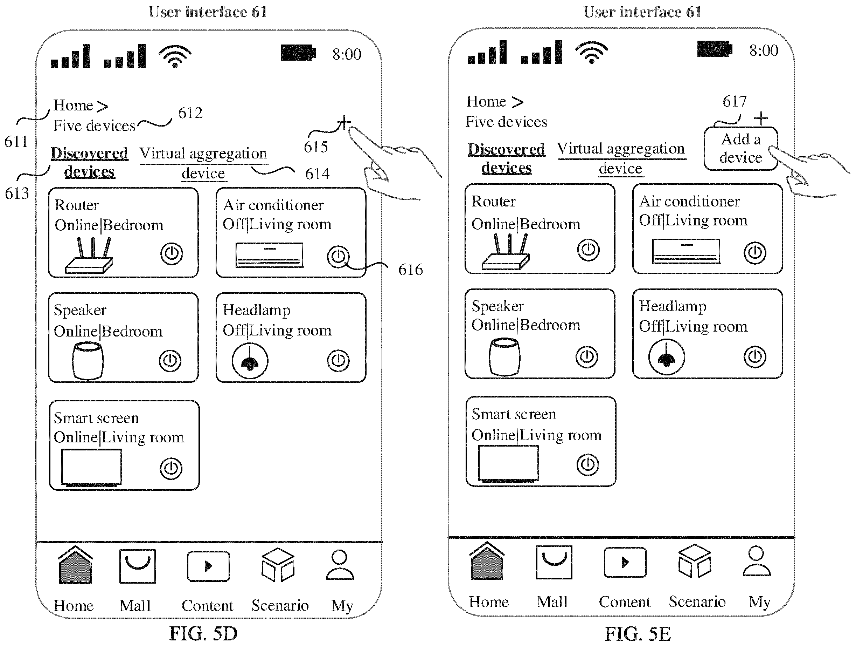

For example, refer to FIG. 5D. The electronic device may display a user interface 61. The user interface 61 may be provided by an AI Life app in the electronic device. AI Life is an application used to manage various devices of the user.

As shown in FIG. 5D, the user interface 61 displays a family name 611, a device quantity 612, a "Discovered devices" option 613, a "Virtual aggregation device" option 614, an "Add" control 615, one or more device options, a page option display area, and the like.

The family name 611 may indicate a name of an area covered by the communication system 10. The family name 611 may be set by the user. For example, the family name 611 may be "Home".

The device quantity 612 may indicate a quantity of devices included in the communication system 10. For example, when the family name 611 is "Home" shown in FIG. 5D, the quantity of devices included in the communication system 10 is "Five devices".

The "Discovered devices" option 613 may be used to trigger the electronic device to display a device option corresponding to one or more electronic devices included in the communication system 10. As shown in FIG. 5D, the "Discovered devices" option 613 is selected, and the electronic device may display device options (for example, a router device option, an air conditioner device option, a speaker device option, a headlamp device option, and a large screen device option) corresponding to one or more electronic devices (for example, a router, an air conditioner, a speaker, a headlamp, and a large screen) included in the communication system 10.

The "Virtual aggregation device" option 614 may be used to trigger the electronic device to display an electronic device to which each composable capability forming the virtual aggregation device belongs.

The "Add" control 615 may be used to trigger one or more electronic devices to be added to the communication system 10. A user interface displayed when the electronic device adds an electronic device to the communication system 10 in response to an operation acting on the "Add" control 615 is described in the following embodiments. Details are not described herein.

The one or more device options (for example, the router device option, the air conditioner device option, the speaker device option, the headlamp device option, and the large screen device option) may be used to display the electronic devices (for example, the router, the air conditioner, the speaker, the headlamp, and the large screen) specifically included in the communication system 10, positions (for example, bedroom or living room) in which the electronic devices are located, and device statuses (for example, online or disabled) of the electronic devices. Each device option may further include a corresponding controlling control (for example, a controlling control 616 in the air conditioner device option), to control startup or shutdown of a corresponding electronic device (for example, the air conditioner).

In response to a touch operation (for example, tapping) acting on the "Add" control 615, as shown in FIG. 5E, the electronic device may display an option 617 on the user interface 61. This option 617 may display a text prompt message "Add a device".

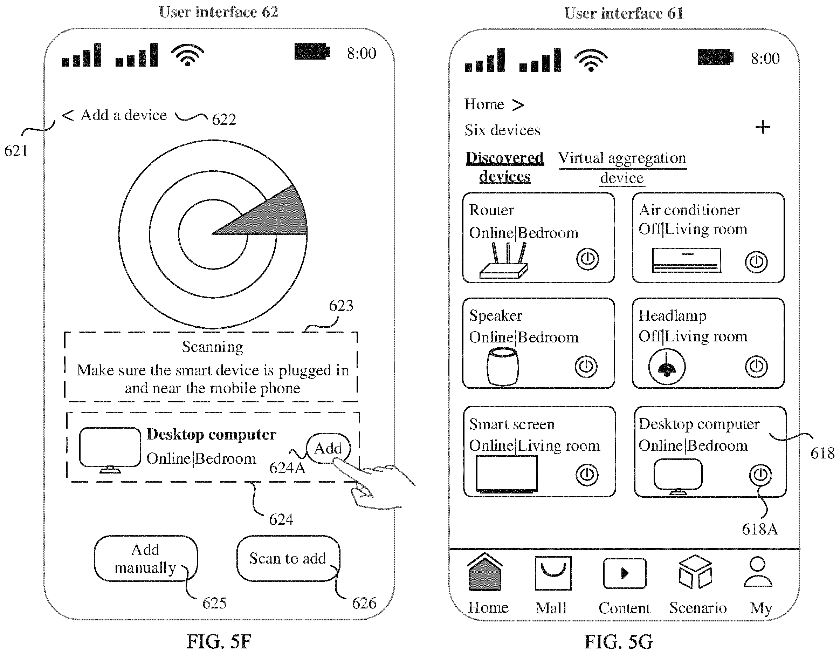

In response to a touch operation (for example, tapping) acting on the option 617, as shown in FIG. 5F, the electronic device may display a user interface 62. The user interface 62 includes a back control 621, a page title 622, a scan prompt 623, a scanned device display area 624, an "Add manually" control 625, and a "Scan to add" control 626.

The scan prompt 623 may be used to prompt the user a scanning status of the electronic device. For example, "Scanning" may indicate that the electronic device is scanning a nearby electronic device that may be added. For example, the electronic device may determine, in a Bluetooth communication manner, whether a nearby electronic device that can be added to the communication system 10 exists. The electronic device may broadcast a device discovery request through Bluetooth communication. After receiving the discovery request, the electronic device whose Bluetooth is in an enabled state may send a discovery response to the electronic device through Bluetooth communication. When receiving the discovery response, the electronic device may scan the smart home device, and display an "Add" control of the smart home device on the user interface. A method for scanning an electronic device by an electronic device is not limited in embodiments of this application.

The scan prompt 623 may further include content of a note for prompting the user to add the smart home device. The note may include "Make sure the smart device is plugged in and near the mobile phone".

The scanned device display area 624 may be used to display an electronic device scanned by the electronic device. For example, a desktop computer is scanned by the electronic device. The electronic device may display a name "Desktop computer" of the desktop computer, a device status "Online" of the desktop computer, a position "Bedroom" of the desktop computer, and an "Add" control 624A in the scanned device display area 624. The "Add" control 624A may be used to trigger the desktop computer to join the communication system 10.

The "Add manually" control 625 may help the user manually enter, in the electronic device, information about an electronic device that needs to be added, to add the electronic device to the communication system 10.

The "Scan to add" control 626 may be used to trigger the electronic device to start a scanning apparatus. That is, the user may add an electronic device to the communication system 10 by scanning data like a QR code or a bar code. An implementation method for manually adding an electronic device to the communication system 10 and for adding an electronic device to the communication system 10 by scanning a code is not limited in embodiments of this application.

In response to a touch operation (for example, tapping) acting on the "Add" control 624A, as shown in FIG. 5G, the electronic device may display a device option 618 of the desktop computer on the user interface 61. The device option 618 may include the name "Desktop computer" of the desktop computer, the device status "Online" of the desktop computer, and the position "Bedroom" of the desktop computer. The device option 618 may further include a controlling control 618A, and the controlling control 618A may be used by the user to control shutdown or startup of the desktop computer.

Manner 2: The electronic device may actively establish a connection to another device.

The electronic device may actively establish a connection to another device in some cases. In this way, no manual operation of the user is required, user behavior can be simplified, and efficiency of service provision based on a plurality of devices can be improved.

For example, the electronic device may actively search for a nearby wireless network. If the electronic device stores a password of the wireless network, the electronic device may actively join the wireless network. For example, after the user goes home every day, an electronic device carried by the user may automatically connect to a home network.

For another example, when the electronic device is located at a specific position (for example, a home or an office), the electronic device may actively join a communication system at the specific position.

It can be learned that, before a connection is established between electronic devices, authentication and authorization, for example, password authentication shown in FIG. 5B, may be first performed. The electronic device can establish a connection to another electronic device only after authentication and authorization are performed.

In some embodiments, after the electronic device establishes the connection to the another electronic device by using Manner 1 or Manner 2, the another electronic device may further perform authentication and authorization on the electronic device or the user that uses the electronic device, and allow the electronic device to establish a session with the another electronic device only after the authentication and authorization succeed, so as to form the communication system 10. The authentication and authorization performed by the another electronic device on the electronic device can ensure that only a trusted and secure device can connect to the another electronic device, and data security of the another electronic device can be ensured.

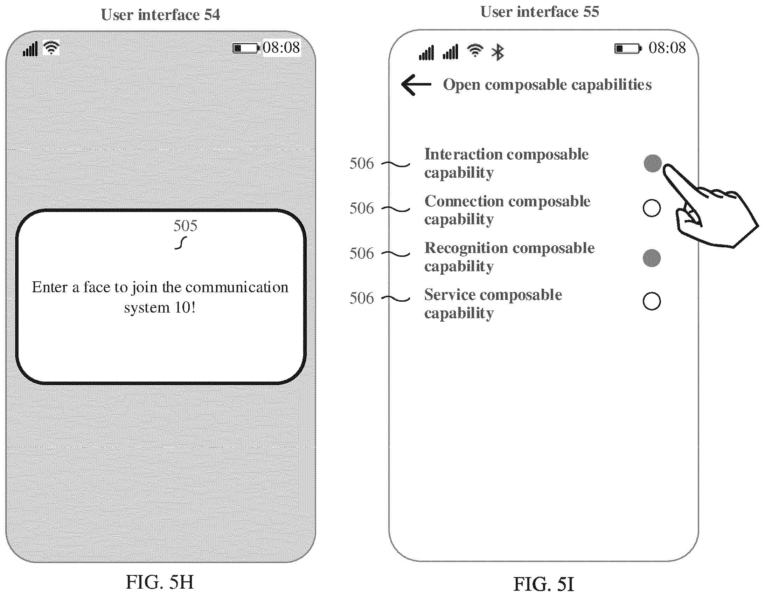

An authentication or authorization manner may include verifying a security level, a type, and the like of the electronic device. A device security level is mainly determined by software and hardware configurations of the electronic device. A manner of performing authentication or authorization on the user may include identity authentication. An identity authentication manner may include password (for example, a string including a number, a letter, and a symbol) authentication, graphical authentication, biometric feature (for example, a face, a voiceprint, a fingerprint, a palm shape, a retina, an iris, a human odor, a face shape, a blood pressure, blood oxygen, blood glucose, a respiratory rate, a heart rate, and an electrocardiograph wave of a cycle), and the like. For example, refer to FIG. 5C. After the user enters the password, the electronic device may display prompt information shown in FIG. 5H. The prompt information may be used to prompt the user to enter a face to complete authentication and authorization.

For example, refer to FIG. 5H. FIG. 5H shows a user interface displayed on the electronic device when authentication or authorization is performed on the electronic device. As shown in FIG. 5H, after receiving the wireless network password entered by the user in FIG. 5B, or after entering the account and the password in FIG. 5C, the electronic device may display a prompt box 505. The prompt box 505 may be used to prompt the user to enter a face to complete authentication and authorization on the electronic device.

In some embodiments, after the electronic device establishes the connection to the another electronic device by using Manner 1 or Manner 2, the electronic device may perform authentication and authorization on the another device, and establish a session with the another electronic device only after the authentication and authorization succeed, so as to form the communication system 10. The electronic device may perform authentication and authorization on the another device by verifying a security level or type of the another device. The authentication and authorization performed by the electronic device on the another electronic device can ensure that the electronic device establishes a session with another trusted and secure electronic device to form the communication system, and data security in the electronic device can be ensured.

In embodiments of this application, an authentication and authorization process before a connection is established between the electronic devices and an authentication and authorization process before a session is established between the electronic devices may be reused, that is, may be implemented as a same authentication and authorization process. In other words, the electronic devices may establish a connection and a session with each other after authentication and authorization are performed once. For example, in a manner of adding a device to the communication system 10 by using the AI Life app shown in FIG. 5D to FIG. 5G, a connection and a session may be established between the electronic devices after authentication and authorization are performed once. In some other embodiments, an authentication and authorization process before a connection is established between the electronic devices and an authentication and authorization process before a session is established between the electronic devices may be performed separately and independently.

In some embodiments, after the electronic device performs authentication and authorization on the another electronic device for the first time, the electronic device may record information about the another electronic device, to facilitate subsequent authentication and authorization performed by the electronic device on the another electronic device. Then, the electronic device may disconnect from the another electronic device or disconnect from the session due to reasons such as a position change or battery exhaustion. When the electronic device is subsequently connected to the another electronic device again or when the session is established again, authentication and authorization may be performed by using recorded information without a manual operation of the user. For example, when the user is in a home range, a mobile phone A joins the communication system 10 in the home range after authorization succeeds. When the user carrying the mobile phone A goes out and returns to the home range again, the mobile phone A can join the communication system 10 in the home range without manual operation of the user. In this way, an operation of the electronic device joining the communication system 10 can be simplified, and implementation efficiency of the method provided in this application can be improved.

The foregoing authentication and authorization performed on the electronic device may be performed locally by a device that performs authentication and authorization, or may be performed in combination with a cloud server.

After authentication and authorization on the electronic device succeeds, an authorization result of the electronic device may be classified into different levels. A setting of a level of the authorization result is not limited herein. For example, a higher security level of the electronic device indicates a higher level of the authorization result of the electronic device. In other words, the level of the authorization result reflects a degree of trust for the electronic device. A higher level of the authorization result indicates a higher degree of trust.

A range of a composable capability opened by the electronic device to the communication system 10 in a subsequent step may be different based on different levels of the authorization result. For details, refer to detailed descriptions in S103.

In embodiments of this application, after joining the communication system 10, the electronic device may leave the communication system 10 or go offline from the communication system 10 due to reasons such as a position change or battery exhaustion. After leaving the communication system 10, the electronic device may join the communication system 10 again. After going offline from the communication system 10, the electronic device may go online again.

In embodiments of this application, an electronic device may join a plurality of different communication systems. For example, when the mobile phone A is located in the home range, the mobile phone A may join a communication system at home. When the mobile phone A is located in the office, the mobile phone A may join a communication system in the office.

In S102, the plurality of electronic devices may be connected to each other to form the communication system, so that the plurality of electronic devices subsequently cooperate to provide a service for the user, to implement efficient and natural cross-device resource sharing.

S103: The electronic devices in the communication system 10 synchronize device information with each other based on connections between the devices.

In some embodiments, the electronic devices in the communication system 10 may synchronize device information with each other immediately after performing S102, that is, forming the communication system 10.

In some embodiments, if a new electronic device joins the communication system 10, or after a new electronic device goes online, the electronic device may synchronize device information with another device in the communication system 10.

In some embodiments, if device information of an electronic device in the communication system 10 is updated, the electronic device may synchronize device information with another device in the communication system 10.

In some embodiments, the electronic devices in the communication system 10 may alternatively periodically or aperiodically synchronize device information with each other according to a preset rule, for example, may synchronize device information every 30 seconds or every minute.

In embodiments of this application, the electronic devices in the communication system 10 may synchronize the device information with each other based on the connections between the devices. For example, if the electronic devices in the communication system 10 are connected to a same WLAN, the device information may be synchronized with each other by using the WLAN (for example, relayed by using a router). For another example, if the electronic devices in the communication system 10 are connected by using Bluetooth, the device information may be synchronized with each other based on the Bluetooth connection. For another example, if the electronic devices in the communication system 10 are remotely connected by logging in to a same account, the device information may be relayed by using a server that manages the account. If the communication system 10 includes two electronic devices that are not directly connected, the two electronic devices may synchronize device information with each other by using an intermediate device in the communication system 10.

In embodiments of this application, the device information synchronized between the electronic devices in the communication system 10 includes all or a part of composable capability information of the electronic device. The composable capability information is used to indicate or describe a corresponding composable capability. In some embodiments, the composable capability information may be further used to describe an attribute of the composable capability. An implementation form of the composable capability information is not limited in embodiments of this application. For a category and the attribute of the composable capability, refer to the related descriptions in S101.

In some embodiments, the electronic devices in the communication system may synchronize all composable capability information with each other. All composable capability information of the electronic device is information about all composable capabilities obtained by the electronic device by deconstructing the resource of the electronic device in S101.

In some embodiments, the electronic devices in the communication system may synchronize a part of or all the composable capability information with each other. A part of composable capability information sent by the electronic device to another device in the communication system 10 may be determined according to any one of the following policies:

1. The electronic device determines, based on a level of an authorization result when joining the communication system 10, composable capability information to be sent to another device in the communication system 10. A higher level of the authorization result indicates more composable capability information sent by the electronic device to the another device in the communication system 10.

The authorization result may include a result of authorization performed by the electronic device in the communication system 10, and/or a result of authorization performed by the communication system 10 on the electronic device. For details, refer to the related descriptions in S102.

A higher level of the authorization result indicates more composable capability information synchronized by the electronic device to the another device in the communication system 10 in S103. Because the level of the authorization result reflects a degree of trust between the electronic device and the another device in the communication system 10, by using the first policy, the electronic device can open more composable capabilities only to the another trusted device, to ensure information security of the electronic device.

2. The electronic device determines, based on a requirement of the user, the composable capability information to be sent to the another device in the communication system 10.

For example, the user may manually set, on the electronic device, a composable capability open to the another device in the communication system 10, and the electronic device may send corresponding composable capability information to the another device in the communication system 10 according to the setting of the user.

For example, refer to FIG. 5I. FIG. 5I shows an example of a manner in which the user sets a composable capability open to another device in the communication system 10. FIG. 5I is a user interface 55 provided by the setting application in the electronic device, and one or more composable capability options 506 are displayed on the user interface 55. The one or more composable capability options 506 may correspond to the composable capabilities obtained through deconstruction by the electronic device in S101. The electronic device may detect a user operation performed on the composable capability option 506, and open a composable capability corresponding to the composable capability option 506 to another device in the communication system 10. This is not limited to the coarser-grained composable capability classification shown in FIG. 5I. In some other embodiments, the electronic device may further display a finer-grained composable capability for the user to select.

This is not limited to the manner shown in FIG. 5I. In some other embodiments, the user may further set, in another manner, the composable capability opened by the electronic device to the another device in the communication system 10. For example, the user may open different composable capabilities for different communication systems. For another example, the user may open different composable capabilities for a same communication system under a scenario condition, for example, in different time periods.

3. The electronic device determines, according to a policy of the electronic device, the composable capability information to be sent to the another device in the communication system 10.

The electronic device may synchronize only a part of the composable capability information to the another device in the communication system 10 based on factors such as user privacy and device power consumption.

For example, to ensure power consumption, the electronic device may hide a posture interaction composable capability, and send only another composable capability to the another device in the communication system 10.

For another example, the electronic device may open a visual interaction composable capability with low confidentiality to the another device, but does not open a payment composable capability to the another device.

The devices in the communication system 10 synchronize composable capability information with each other, to facilitate subsequent implementation of cross-device resource sharing.

In some embodiments of this application, the device information synchronized between the electronic devices in the communication system 10 may further include a device attribute of the electronic device. The device attribute may include, for example, one or more of the following: a device identifier, a device type, current power consumption, an available resource, a device modality, a current use status, online information, offline information, information about a historical interaction with another device in the communication system 10, a device position (for example, a bedroom or a living room), an orientation, a type of an environment in which the device is located (for example, an office or a home range), and the like.

The device identifier may be an IP address or a MAC address of the device. The device type may be, for example, a rich device and a thin device, or may be classified into a smart screen, an air conditioner, and a printer based on a device form.

The available resource may include, for example, a computing resource, a memory resource, a battery resource, and the like. The device modality refers to an information interaction manner provided or supported by the electronic device, and may include, for example, a voice interaction modality, a display interaction modality, a light interaction modality, and a vibration interaction modality. The current use status may include, for example, a currently enabled application or hardware of the device.

The online information may include a quantity of times, time, duration, and the like of going-online of the electronic device. Similarly, the offline information may include a quantity of times, time, duration, and the like of going-offline of the electronic device.

The information about the historical interaction between the electronic device and the another device indicates a rule of the interaction between the electronic device and the another device. The historical interaction information may include, for example, one or more of an interaction service type, a service initiator, a service responder, interaction duration, service initiation time, service end time, an average quantity of online devices in a statistical time period, a normalized standard deviation of the average quantity of online devices in the statistical time period, and a quantity of historical online devices in the statistical time period. Services exchanged between electronic devices may include, for example, file transfer, video connection, audio connection, signaling transmission, and data distribution. For example, when a tablet computer connects a locally played video to a smart screen in response to an operation of the user, the tablet computer and the smart screen may record interaction behavior information corresponding to the current video connection service. The interaction behavior information may include one or more of the following information: a service type-video connection, a service initiator-the tablet computer, a service responder-the smart screen, interaction duration-two hours and 15 minutes, service initiation time-19:37 January 1, and service end time-21:52 January 1.

The average quantity of online devices in the statistical time period, the normalized standard deviation of the average quantity of online devices in the statistical time period, and the quantity of historical online devices in the statistical time period may be collected by the electronic device based on online information and offline information of the another device in the communication system 10 in the statistical time period. The statistical time period may be set based on an actual requirement, for example, may be the latest one day, three days, one week, or one month.

The average quantity of online devices is an average quantity that is of online devices in the communication system 10 in unit time (for example, one day or one week) and that is collected by the electronic device in the statistical time period. If a device goes online a plurality of times in unit time, the statistics are collected only once, and a quantity of online times of the device is not accumulated. For example, it is assumed that the statistical time period is from January 1 to January 7. In this case, a quantity of online devices collected by the electronic device in the statistical time period is shown in Table 1.

**Table 1**

| January 1 | January 2 | January 3 | January 4 | January 5 | January 6 | January 7 |
|-----------|-----------|-----------|-----------|-----------|-----------|-----------|
| 3 | 4 | 5 | 2 | 6 | 8 | 7 |

At this time, an average quantity of online devices per day is (3+4+5+2+6+8+7)/7=5.

The normalized standard deviation of the average quantity of online devices is a value obtained by dividing a standard deviation of a quantity that is of online devices in the communication system 10 in unit time (for example, one day or one week) and that is collected by the electronic device in the statistical time period by the average quantity of online devices.

For example, it is assumed that the electronic device calculates, based on the data in Table 1, a standard deviation of the quantity of online devices collected on each day. In this case, a process of calculating the standard deviation may be expressed as:

$$\sqrt{\left[\frac{(3-5)^2+(4-5)^2+(5-5)^2+(2-5)^2+(6-5)^2+(8-5)^2+(7-5)^2}{7}\right]}=2.$$

Then, the electronic device divides the standard deviation 2 by the average quantity 5 of online devices per day, to obtain the normalized standard deviation of the quantity of online devices per day as 2/5=0.4.

The quantity of historical online devices refers to a total quantity of different online devices collected by the electronic device in the statistical time period. For example, it is assumed that a total quantity of online devices that is obtained by the electronic device through calculation based on the data in Table 1 is 3+4+5+2+6+8+7=35, and a same device may exist among the devices. Therefore, the quantity of historical online devices may be less than 35.

In embodiments of this application, the device information synchronized between the electronic devices in the communication system 10 may further include user information. For detailed content and functions of the user information, refer to the following description related to a user profile.

The devices in the communication system 10 synchronize device attributes with each other, to facilitate subsequent determining of the central control device by the communication system 10.

S104: The communication system 10 determines the central control device.

In embodiments of this application, the electronic devices in the communication system 10 may perform S104 in any one of the following cases:

1. The electronic devices in the communication system 10 may perform S103 when triggered by the user. For example, the user may enter an operation on the central control device (for example, a router or a mobile phone) in the communication system 10, and trigger the central control device to notify, by broadcasting or the like, the another device in the communication system 10 to jointly perform S103. The user operation for triggering S103 may also be referred to as a second operation.

2. The electronic devices in the communication system 10 may alternatively perform S103 periodically or aperiodically according to a preset rule. For example, the electronic devices in the communication system 10 may perform S104 once a week or once a month. In other words, the plurality of electronic devices in the communication system 10 may determine the central control device when preset time is reached.

3. S 104 is performed when a new device joins or leaves the communication system 10. When an electronic device goes online or offline, a previous central control device may be used, and S104 does not need to be performed again.

4. When the previous central control device goes offline, the electronic devices in the communication system 10 cooperatively perform S103, that is, reselect a central control device. A reason why the central control device goes offline may include, for example, a position of the central control device changes, a battery is exhausted, and the user manually triggers the central control device to go offline.

In some other embodiments of this application, after the communication system 10 determines the central control device, the central control device may continuously retain an identity of the central control device regardless of whether the central control device is offline. This can avoid a problem of frequent selection of the central control device caused by frequent going-online and going-offline of the central control device.

5. After performing S102, the communication system 10 may perform S104 after waiting for preset duration.

The preset duration may be set based on an actual requirement. This is not limited in embodiments of this application. For example, the preset duration may be set to 10 seconds, 1 minute, 1 hour, 12 hours, 1 day, 2 days, 3 days, or the like.

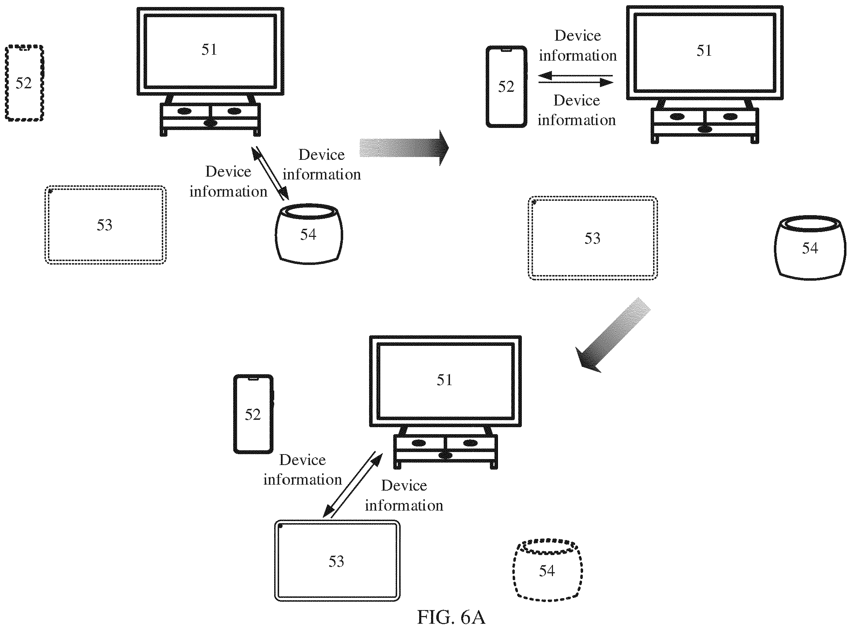

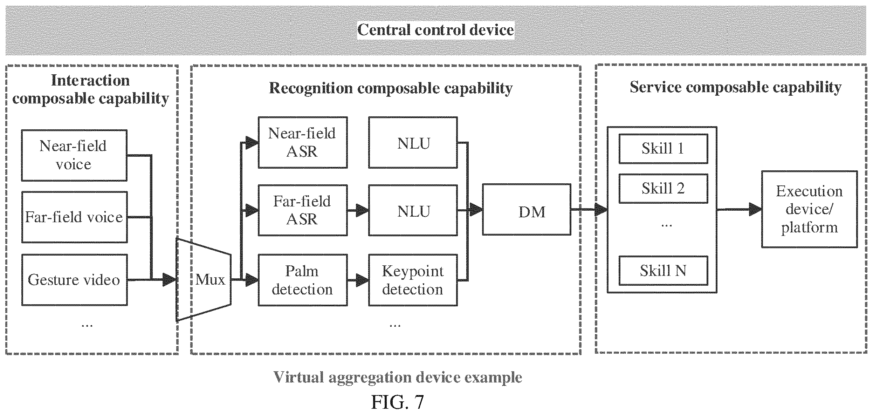

Within the preset duration, the electronic devices in the communication system 10 may fully and comprehensively synchronize the device information with each other. For example, within the preset duration, there may be a newly online device, and the newly online device may synchronize device information of the newly online device to another device. For example, refer to FIG. 6A. It is assumed that preset statistical duration is two days. After a smart large screen 51 synchronizes interaction statistical information with a smart speaker 54, the smart large screen 51 enters a waiting state. It is assumed that the smart large screen 51 finds that a mobile phone 52 and the smart speaker 54 go online on a first day, the smart large screen 51 may send device information to the mobile phone 52, and receive device information sent by the mobile phone 52. As shown in FIG. 7, it is assumed that the smart large screen 51 finds that the mobile phone 52 and a tablet computer 53 go online on a second day, the smart large screen 51 may send the device information to the tablet computer 53, and receive device information sent by the tablet computer 53. After the second day ends, the smart large screen 51 ends the waiting state and completes synchronization of the interaction statistical information. In this case, in addition to obtaining device information of a smart speaker 54, the smart large screen 51 further obtains the device information of the mobile phone 52 and the device information of the tablet computer 53.

By delaying selection of the central control device in the foregoing fifth manner, the communication system 10 may collect more comprehensive device information to select the central control device, and can select a more appropriate central control device.

In embodiments of this application, the electronic devices in the communication system 10 may perform S104, that is, negotiate, select, decide, or determine the central control device, based on a connection between devices by broadcasting, multicasting, querying, or the like. When the electronic devices negotiate the central control device, communication may be performed for a plurality of times. A negotiation process and a quantity of interactions between the electronic devices are not limited in embodiments of this application.

In embodiments of this application, there may be one or more central control devices in the communication system 10.

In embodiments of this application, when the communication system 10 determines the central control device, the electronic devices in the communication system 10 may perform interaction negotiation for one or more times, or may not perform interaction. This is not limited herein.

The electronic devices in the communication system 10 may determine the central control device according to a specific policy. The policy is not limited in embodiments of this application. The following lists several manners in which the communication system 10 determines the central control device.

1. One or more devices are selected from the plurality of electronic devices in the communication system 10 as central control devices based on one or more factors of stability or availability of a resource, device modality availability, and a user habit.

For example, the electronic devices in the communication system 10 may determine, as the central control device, a device with a stable computing resource, a device with a stable memory resource, a device with a stable power supply, a device with a large quantity of available modalities, or a device commonly used by the user. For example, in the home range, the communication system 10 may select a smart screen that is normally connected to a power supply as the central control device.

2. One or more devices are selected from the plurality of electronic devices in the communication system 10 as central control devices based on historical interaction information of the electronic devices in the communication system 10.

(1) In some embodiments, the communication system 10 may determine an electronic device with a largest average quantity of online devices as the central control device. For example, it is assumed that interaction statistical information of the devices in the communication system 10 is shown in Table 2. In this case, the smart screen may be determined as the central control device.

**Table 2**

|  | Tablet computer | Smart screen | Smart speaker | Mobile phone |
|---|---|---|---|---|
| Average quantity of online devices per day | 1 | 4 | 3 | 3 |
| Normalized standard deviation of the quantity of online devices per day | 0.2 | 0.5 | 0.7 | 0.1 |
| Quantity of historical online devices | 2 | 6 | 6 | 4 |

(2) In some embodiments, the communication system 10 may determine an electronic device with a largest normalized standard deviation of the average quantity of online devices as the central control device. For example, refer to Table 2. The communication system 10 may determine the smart speaker as the central control device.

(3) In some embodiments, the communication system 10 may determine, as a candidate target device, an electronic device whose average quantity of online devices is greater than a first value and whose normalized standard deviation of the average quantity of online devices is greater than a second value. The first value and the second value are preset parameters.

When there is only one target device, the target device may be directly determined as the central control device.

When there are a plurality of target devices or there is no target device, the communication system 10 may determine the central control device based on one or more of decision factors such as a quantity of historical online devices, a device type, a memory size, and a device identifier. The foregoing decision factors may have different priorities. The communication system 10 may sequentially compare target devices starting from a decision factor with a highest priority, and select an optimal electronic device as the central control device.

For example, refer to Table 2. It is assumed that the smart screen and the smart speaker each meet that an average quantity of online devices is greater than the first value and a normalized standard deviation of the average quantity of online devices is greater than the second value. Therefore, the smart screen and the smart speaker are target devices. Because a quantity of historical online devices of the smart screen is the same as that of the smart speaker, the smart screen may further obtain memory sizes of the smart screen and the smart speaker. It is assumed that a memory of the smart screen is 6 GB, and a memory of the smart speaker is 512 MB. The memory of the smart screen is greater than the memory of the smart speaker. Therefore, the communication system 10 may determine the smart screen as the central control device.

(4) In some embodiments, the communication system 10 may model a quantity of online devices of each device by using Poisson distribution, and calculate a mathematical expected value of the quantity of online devices of each device by using maximum likelihood estimation. The communication system 10 may determine an electronic device with a maximum mathematical expected value of the quantity of online devices as the central control device.

Optionally, in some embodiments, another probability statistical model may be used to model the quantity of online devices of each device, and the central control device may be determined based on one or more of statistical parameters such as a mathematical expectation, a variance, and a standard deviation of the device.

According to the foregoing second policy, the central control device is selected based on the historical interaction information of the electronic devices in the communication system 10, and an electronic device interacting with a large quantity of devices in the communication system 10 may be determined as the central control device. In this way, the central control device interacts with another device, and can undertake tasks of collecting information and coordinating calculation, to obtain various types of data of the another device, generate a profile of the another device, generate a global context, generate a memory, and the like, so as to ensure an effect of providing a service based on a plurality of devices.

3. If the communication system 10 determines one central control device by using the foregoing first or second policy, and there is another device that does not establish a direct connection to the central control device in the communication system 10, the communication system 10 may determine more central control devices in a continuation selection manner.

In an actual application scenario, one central control device determined by using the foregoing first or second policy may not be directly connected to a part of electronic devices in the communication system 10, that is, cannot directly interact with the electronic devices at same time or in a same space.

For example, it is assumed that the central control device is a smart screen in a living room. The user opens the smart screen in the living room to watch a program in the daytime. In the evening, the user closes the smart screen in the living room, returns to a bedroom, and opens a smart screen in the bedroom to watch the program. In this case, although the smart screen in the living room and the smart screen in the bedroom are located in a same local area network, the smart screen in the living room and the bedroom smart screen cannot directly interact with each other at the same time, and the smart screen in the living room cannot obtain historical interaction information of the smart screen in the bedroom.

To fully use historical interaction information of electronic devices that do not directly interact with the central control device, a non-central control device in the communication system 10 may continuously select a plurality of central control devices in a continuation selection manner, to comprehensively obtain historical interaction information of each electronic device in the communication system 10. In this way, the plurality of selected central control devices may be connected to all devices in the communication system 10 at same time or in a same space.

In some embodiments, there is a direct connection relationship between the central control device that is selected continuously and a device that is not directly connected to a central control device that is selected for the first time. Specifically, after a central control device is determined for the first time, the central control device and another directly connected device form a group. The another device directly connected to the central control device may be referred to as a candidate device. The central control device may send group information to the candidate device. The group information may include an identifier of the central control device and an identifier of the candidate device. After receiving the group information, the candidate device determines whether an outlier device that is not included in the group exists in devices directly connected to the candidate device, and adds the candidate device as a central control device if an outlier device exists. As an added central control device, the candidate device also sends the group information to another device to query an outlier device until there is no outlier device in the entire communication system 10.

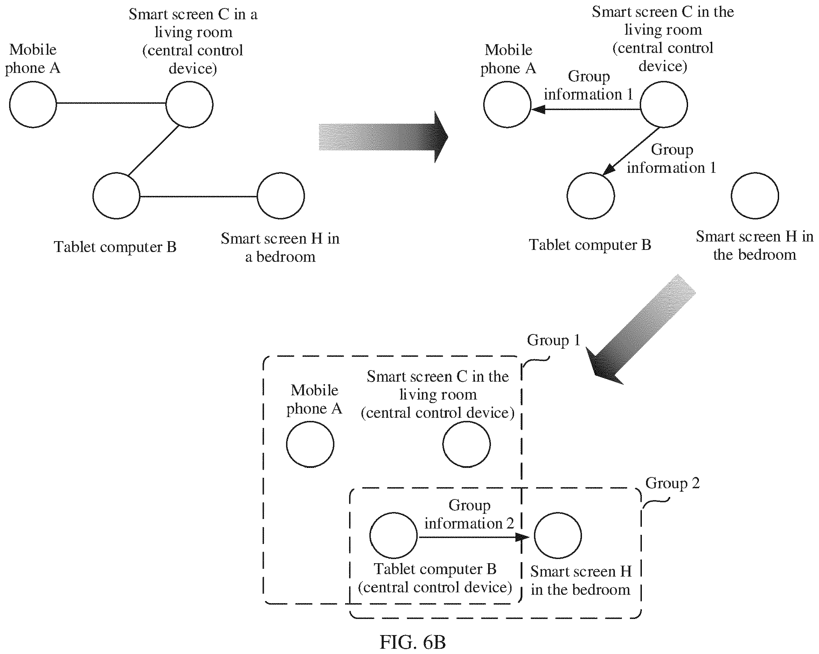

FIG. 6B is an example of a topology diagram of the communication system 10, and shows an example of continuously selecting a central control device. As shown in FIG. 6B, the communication system 10 includes a mobile phone A, a tablet computer B, a smart screen C in a living room, and a smart screen H in a bedroom. Lines in the figure indicate direct connections between devices. If a central control device determined for the first time is the smart screen C, the smart screen C may send group information to the mobile phone A and the tablet computer B. After receiving the group information, the tablet computer B may learn that the smart screen H connected to the tablet computer B is an outlier device, and then the tablet computer B determines the tablet computer B as a central control device.

As shown in the dotted box in FIG. 6B, the mobile phone A, the tablet computer B, the smart screen C, and the smart screen H may be classified into two different groups in the foregoing continuation selection manner. A group 1 in which the smart screen C is used as a central control device includes the mobile phone A, the tablet computer B, and the smart screen C. A group 2 in which the tablet computer B is used as a central control device includes the tablet computer B and the smart screen H.

In some other embodiments, there may be no direct connection relationship between the central control device that is selected continuously and a device that is not directly connected to a central control device that is selected for the first time. Specifically, after a central control device is determined for the first time, the central control device and another directly connected device form a group, and the central control device may send group information to a candidate device. After receiving the group information, the candidate device determines whether an outlier device that is not included in the group exists in devices directly connected to the candidate device. If the outlier device exists, the candidate device and the outlier device form a group, and negotiate a new central control device in the group. The newly negotiated central control device also sends the group information to another device to query an outlier device until there is no outlier device in the entire communication system 10.

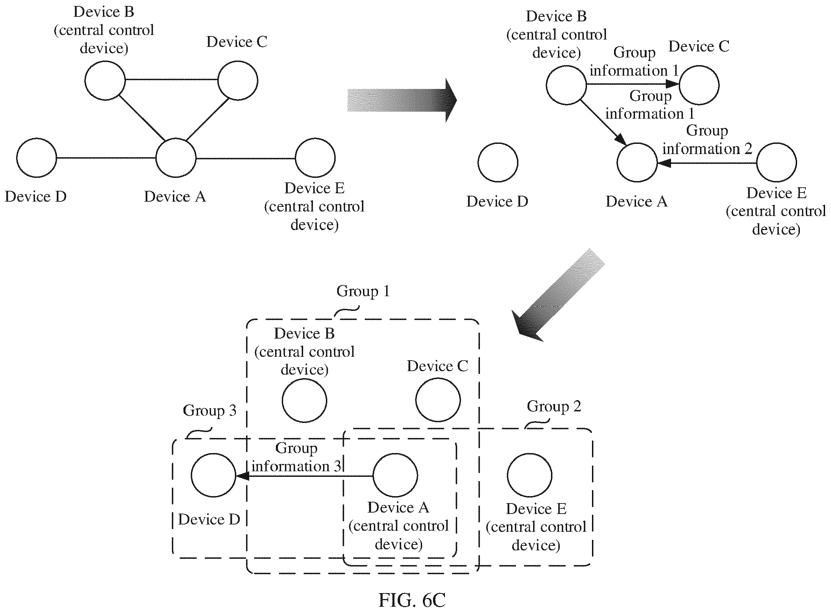

FIG. 6C is an example of a topology diagram of the communication system 10, and shows an example of continuously selecting a central control device. As shown in FIG. 6C, it is assumed that a local area network includes five electronic devices: a device A, a device B, a device C, a device D, and a device E. Lines in the figure indicate direct connections between the devices.

It is assumed that the communication system 10 determines the device B and the device E as central control devices for the first time. The device B may send group information 1 to the device A and the device C. The group information 1 includes a device identifier of the device A, a device identifier of the device B, and a device identifier of the device C. The device E may send group information 2 to the device A. The group information 2 includes the device identifier of the device A and a device identifier of the device E.

After receiving the group information 1 and the group information 2, the device A detects that neither the group information 1 nor the group information 2 has a device identifier of the device D. Therefore, the device A may determine the device D as an outlier device. Then, both the device A and the device D may continue to select a new central control device. For example, the device A may be determined as an added central control device. Then, the device A may send group information 3 to the device D. The group information 3 includes the device identifier of the device A and the device identifier of the device D.

As shown in the dotted box in FIG. 6C, the device A, the device B, the device C, the device D, and the device E may be classified into three different groups in the foregoing continuation selection manner. A group 1 in which the device B is used as a central control device includes the device A, the device B, and the device C. A group 2 in which the device E is used as a central control device includes the device A and the device E. A group 3 in which the device A is used as a central control device includes the device A and the device D.

According to the foregoing third policy for continuously selecting a central control device, a plurality of central control devices may be determined in the communication system 10, and the plurality of central control devices may be connected to all devices in the communication system 10.

Therefore, the non-central control device may determine the outlier device in the foregoing continuation selection manner, and determine a new central control device with the outlier device. The new central control device may interact with the outlier device, to comprehensively obtain historical interaction information of each electronic device in the communication system 10, so as to fully use information about each electronic device to provide a service for the user.

4. The communication system 10 determines, as a central control device, a device selected by the user.

The user may input a user operation (for example, a voice command, or a touch operation acting on an electronic device) to the communication system 10, and set one or more devices in the communication system 10 as a central control device. In this way, the communication system may select the central control device based on an actual requirement of the user.

This is not limited to the foregoing four policies for selecting a central control device. In embodiments of this application, the communication system 10 may alternatively select a central control device by using another policy. This is not specifically limited herein. For example, the communication system 10 may further select a central control device by using a Raft algorithm, a Paxos algorithm, or the like. For another example, the communication system 10 may further select a central control device based on a device type. For example, a smart screen is always selected as a central control device. For another example, the communication system 10 may further fixedly use an electronic device as a central control device, and no change is made subsequently.

In some embodiments, for a same communication system, different time periods may correspond to different central control devices. For example, for a communication system in a home range, a smart screen in a living room may be selected as a central control device in the daytime, and a mobile phone may be selected as a central control device in the evening.

In embodiments of this application, the electronic device may be mobile. Therefore, the electronic device may join different communication systems at different times. When the electronic device is in different communication systems, the electronic device may correspond to different central control devices. For a manner of selecting the central control device by the communication system, refer to the foregoing related description. The electronic device may store an identifier of the communication system and an identifier of a corresponding central control device in an association manner, to perform different operations after entering different communication systems. The identifier of the communication system may include, for example, a local area network identifier and a position of the communication system. The position of the communication system may include GPS positioning, a position manually calibrated by the user, a device list and derived information thereof, and the like.

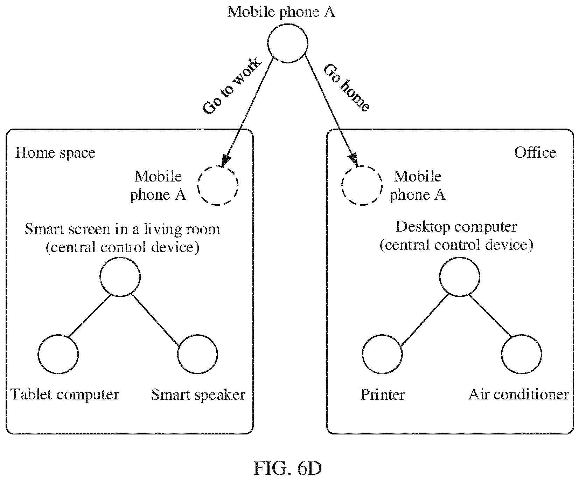

For example, refer to FIG. 6D. When going to work in the daytime, the user may enter an office carrying a mobile phone, and the mobile phone joins a communication system in the office. A central control device of the communication system may be a desktop computer. After being off duty in the evening, the user may enter a home range carrying the mobile phone, and the mobile phone joins a communication system in the home range. A central control device of the communication system may be a smart screen.

In embodiments of this application, S101 to S104 may be performed by a plurality of electronic devices separately running some functions of a single smart assistant, and S105 to S 108 may be performed by the plurality of electronic devices jointly running the single smart assistant. In other words, the single smart assistant jointly run by the plurality of electronic devices supports the communication system 10 in performing steps S105 to S108.

S105: The central control device initializes the virtual aggregation device by using a composable capability of each device in the communication system 10.

In embodiments of this application, initializing the virtual aggregation device means configuring the virtual aggregation device when a status and capability of a front-end virtual aggregation device are not provided or used.

In embodiments of this application, configuring the virtual aggregation device means that the central control device selects an appropriate resource in the communication system 10 for initialization, in other words, the central control device combines or constructs a virtual device by using a part of or all composable capabilities in the communication system. The resource initialization may include one or more operations such as loading a code or software library of the composable capability, starting a sensor or a peripheral (for example, a microphone or a camera) related to the composable capability, reading or recording data (for example, an audio or an image) related to the composable capability, and downloading dependent data or a calculation model from the Internet. The resource initialization may be performed by a physical device in which an aggregated composable capability is located.

That is, configuring the virtual aggregation device means configuring a parameter, a network connection, a connection relationship, a data channel for a selected composable capability, and configuring a configurable parameter (for example, a volume of a voice playing capability or a resolution of a camera) of the composable capability. The configuration of a parameter includes a configuration of a parameter related to a data processing flow direction. After the central control device configures the virtual aggregation device, an information collection and processing flow direction is specified. That is, after the virtual aggregation device is configured, composable capabilities used to collect and process information in the communication system 10 and a cooperation relationship between the composable capabilities may be determined. After the virtual aggregation device is configured, the composable capabilities of the virtual aggregation device are in a working state or a to-be-working state.

After the virtual aggregation device is configured, for an upper-layer application in each physical device in the communication system 10, the application may sense the independent virtual aggregation device, but does not sense a plurality of other independent physical devices. In this way, each upper-layer application can schedule a resource in another physical device more conveniently.

The virtual aggregation device is configured by performing S105, so that preparations before startup may be made in advance for a composable capability that may be used subsequently, and a response speed can be improved when the composable capability is subsequently started to provide a service for the user. In addition, by performing S105, the communication system 10 may need to aggregate only a part of composable capabilities in the communication system 10, to avoid wasting unnecessary resources.

In other words, by configuring the virtual aggregation device in S105, the central control device may continuously adjust and optimize a configuration in advance based on a scenario requirement. Therefore, when the user sends an instruction involving a plurality of devices, the central control device can immediately invoke a related configured composable capability to execute a task and provide a response. This effectively shortens a response delay of the instruction. In this way, the communication system 10 can actively provide a service and provide a long-term task for the user, to avoid a problem of a slow response and an unsupported active service caused by an instant collaborative combination triggered only when the user sends an instruction.

The virtual aggregation device includes the central control device and other part of or all composable capabilities selected by the central control device in the communication system 10.

For the upper-layer application, the virtual aggregation device is considered as a single complete device that can independently execute an application task, but capabilities (such as interaction and service) of the virtual aggregation device may actually come from different physical devices. That is, the virtual aggregation device is obtained by aggregating a part of or all capabilities provided by a plurality of physical devices. The composable capabilities of the virtual aggregation device may come from any one or more physical devices in the communication system 10. This is not limited herein.

The virtual aggregation device may be configured to perform steps S106, S107, S108, and S109.

In embodiments of this application, the central control device may select an appropriate composable capability based on a configuration, historical interaction information, a user preference, a user status, a device status, an environment status, and the like of each device in the communication system 10 to form the virtual aggregation device.

In embodiments of this application, the configuration of the virtual aggregation device may include the following two types:

1. Initialize the virtual aggregation device

In embodiments of this application, initialization of the virtual aggregation device may be performed in any one of the following cases:

Case 1: When the communication system 10 is started for the first time, the virtual aggregation device is initialized. A rule for starting the communication system 10 may be preset based on an actual requirement. For example, it may be set that the communication system is started after more than a specific quantity of devices access the communication system 10.

Case 2: When the communication system 10 is restarted, the virtual aggregation device is initialized. A rule for restarting the communication system 10 may be preset based on an actual requirement. For example, it may be set that the communication system is restarted after the previous central control device goes offline.

Case 3: When a new device joins the communication system 10 or a new device goes online, or a device leaves the communication system 10 or a device goes offline, the virtual aggregation device is initialized.

Case 4: Software of a part of or all devices in the communication system 10 is updated.

Case 5: A part of or all devices in the communication system 10 are faulty. Device failures may include, for example, a network connection failure, and audio component damage.

Case 6: Network environments of a part of or all devices in the communication system 10 change, for example, a network identifier changes, and a Wi-Fi connection changes to a wireless cellular network.

Case 7: The user manually triggers system initialization, for example, changes a user account, or resets the system.

A process in which the central control device initializes the virtual aggregation device may include the following steps:

Step 1: The central control device starts a composable capability of the central control device to obtain environment information.

Specifically, the central control device may start an interaction recognition composable capability of the central control device, for example, a user position recognition composable capability, to learn current environment information. In other words, the central control device may learn the current environment information by using positioning technologies such as GPS, GLONASS, and BDS, a position recognition algorithm, an indoor positioning technology, a millimeter wave sensor, and the like.

The environment information indicates an environment or a scenario in which the communication system 10 or the user is currently located. The environment or the scenario in which the communication system 10 or the user is currently located may be classified according to different rules. For example, the scenario may be classified into a public scenario (for example, an office) and a private scenario (for example, a home range) based on a privacy degree, may be classified into a multi-person scenario and a single-person scenario based on a quantity of people, may be classified into a manned scenario and an unmanned scenario based on whether there is a user, or may be classified into morning, noon, and evening scenarios based on time.

The environment information obtained by the central control device may be uni-modality information, or may be a combination of multi-modality information. For example, the environment information may include any one or more of the following: position information, a text, an audio, a video, and the like.

In step 1, the started composable capability of the central control device may be considered as an original virtual aggregation device. In other words, the central control device first configures the composable capability of the central control device as the virtual aggregation device, and then adds more composable capabilities in the communication system 10 to the virtual aggregation device by performing step 2 and step 3.

Step 2: The central control device invokes a composable capability of another device in the communication system 10 to obtain more environment information.

In step 2, the composable capability that is of the another device in the communication system 10 and that is invoked by the central control device may be referred to as a fourth composable capability.

Step 2 may specifically include the following two implementations:

(1) According to a preset setting and a historical configuration of the central control device, a corresponding dynamic policy is used to start the composable capability of the another device in the communication system 10 to obtain more environment information.

The central control device invokes another composable capability according to the preset setting, to comprehensively obtain more environment information. For example, the central control device may be set to use any subsequent policy, or may be set to be located in an environment (for example, the office or the home range). The central control device may obtain position information by using a GPS, a GLONASS, a BDS, or the like.

The dynamic policy may include, for example, a privacy first policy, a comprehensive detection policy, and a power consumption first policy. Different dynamic policies may be used in different environments. For example, the comprehensive detection policy may be used in the office, and the privacy first policy may be used in a bedroom space. Details are described below.

Comprehensive detection policy: The central control device starts all available composable capabilities (such as the camera and the microphone) to obtain the environment information. For example, the comprehensive detection policy is selected for public places such as the office, that is, all interaction recognition composable capabilities (such as the microphone and the camera) in the area are started to collect information. The comprehensive detection policy can be used to obtain various types of information comprehensively and accurately, to subsequently provide a service for the user.

Privacy first policy: The central control device invokes the composable capability of the another device in the communication system 10 to obtain more environment information based on a privacy degree of an environment in which the central control device is currently located. A higher privacy degree of the environment indicates more composable capabilities invoked by the central control device to obtain the environment information. For example, the privacy first policy is selected for private spaces such as a bedroom, and only non-content collection composable capabilities (such as human voice detection and infrared detection) are started to obtain basic environment information. The privacy first policy ensures that user privacy is not disclosed.

Power consumption first policy: The central control device starts an available composable capability on a device (for example, a smart screen or a smart speaker) that has a sufficient battery level currently in the communication system 10 to obtain the environment information. The power consumption first policy is used, so that the environment information can be obtained when a battery level of each device is fully considered, to avoid that the battery of each device in the communication system 10 is exhausted.

The foregoing implementation (1) is equivalent to that the communication system 10 performs initialization environment status detection according to the dynamic policy, to obtain a basis for an initial configuration of the virtual aggregation device.

(2) The central control device determines, by using an algorithm based on the environment information obtained by the central control device, the composable capability that is of the another device in the communication system 10 and that needs to be invoked, and obtains more environment information by using the composable capability.

First, in embodiments of this application, different scenarios may be predefined according to different scenario classification rules. For example, the scenario may be classified into a public scenario (for example, an office) and a private scenario (for example, a home range) based on a privacy degree, may be classified into a multi-person scenario and a single-person scenario based on a quantity of people, may be classified into a manned scenario and an unmanned scenario based on whether there is a user, or may be classified into morning, noon, and evening scenarios based on time.

For each scenario, minimum modality information required for determining the scenario, a minimum confidence level (namely, a confidence level threshold), and a composable capability that needs to be started are predefined. Detection requirements of a specific quantity of scenarios that can be met are viewed based on composable capability components of the central control device. For a scenario that meets the requirements, the central control device determines whether the communication system is in the scenario based on information collected by the central control device. A confidence level is a probability that the communication system determined based on modality information collected by the central control device is in the scenario. The composable capability that needs to be started in the scenario may be set based on a feature of the scenario or based on empirical data. This is not limited herein.

Refer to Table 3. The first four columns in Table 3 list several scenarios, corresponding required modality information, a minimum confidence level, and a composable capability that needs to be started as an example.

**Table 3**

| Scenario | Dependent modality category | Confidence level threshold | Actual confidence level | Composable capability that needs to be started |
|---|---|---|---|---|
| Scenario 1 | a, b, c, d | 0.7 | 0.75 | 1, 2, 3, 4, 5, 6 |
| Scenario 2 | b, c, d | 0.8 | 0.8 | 3, 4, 5, 9 |
| Scenario 3 | c, d, e | 0.85 | Not detected | 11, 12, 13 |

Then, the central control device determines, based on the modality information (namely, the environment information) obtained by the central control device and preset modality information required by each scenario (template), a scenario in which the central control device is currently located and an actual confidence level in different scenario categories. If the modality information obtained by the central control device includes a dependent modality category of a scenario, it may be determined whether the central control device is currently in the scenario. The central control device may determine, based on the modality information obtained by the central control device, whether the central control device is currently in the scenario by using a method like multi-modality machine learning, a deep learning algorithm, a sound event detection algorithm, AlexNet, VGG-Net, GooLeNet, ResNet, CNN, FNN, or CRNN.

For example, it is assumed that the modality information obtained by the central control device includes a, b, c, and d, it may be determined that the communication system 10 is currently in the scenario 1 and the scenario 2. (The scenario 3 cannot be detected due to a lack of modality e).

Finally, the central control device selects, from a plurality of determined scenarios, a union of composable capabilities that need to be started and that correspond to a part of scenarios in the plurality of scenarios, and continues to obtain more environment information. The part of scenarios in the plurality of scenarios may include: all scenarios whose actual confidence levels are greater than the confidence level threshold in the plurality of scenarios determined by the central control device, or first N scenarios whose actual confidence levels are greater than the confidence level threshold and whose confidence levels are the highest. N may be preset.

For example, it is assumed that actual confidence levels of scenarios determined based on the modality information obtained by the central control device are shown in the fourth column in Table 3, only actual confidence levels of the scenario 1 and the scenario 2 each are greater than the confidence level threshold. The central control device may invoke a union (1, 2, 3, 4, 5, 6, 9) of composable capabilities that need to be started and that correspond to the two scenarios to obtain more environment information.

For example, in a bedroom, the central control device learns, based on multi-sensor data by using multi-modality machine learning, that a current scenario is a user scenario, a single-person scenario, and a private scenario. It is assumed that N=3, and confidence levels of the three scenarios all rank top 3. Therefore, a union of composable capabilities that need to be started in the three scenarios is used to start all non-content collection composable capabilities, such as human voice detection and infrared detection.

In the foregoing manner (2), the central control device may dynamically start more composable capabilities under different scenario classification rules to obtain the environment information. In this manner, the multi-modality information and scenario information are considered in a finer granularity on the premise of information complementarity, and the composable capability can be dynamically started more flexibly.

This is not limited to the foregoing step 2 in which the central control device invokes, based on the environment information obtained by the central control device, the composable capability of the another device to obtain more environment information. In some other embodiments, the central control device may directly determine, according to a preset policy, to invoke the composable capability of the another device to obtain the environment information. The preset policy is not limited in embodiments of this application. In this way, a speed of obtaining the environment information by the central control device can be accelerated, and efficiency of configuring the virtual aggregation device can be improved.

The composable capability that is of the central control device and that is started in step 1 and the composable capability that is of the another device in the communication system 10 and that is started in step 2 form the composable capability of the virtual aggregation device.

In some embodiments, if the communication system 10 is powered off in the foregoing process of initializing the virtual aggregation device, because the central control device selected in the initialization phase and information (for example, a device list, a composable capability enabled status, and a device status) of each device obtained through interaction do not change greatly, a configuration status of the virtual aggregation device before the powering-off can be restored based on a memory.

In the foregoing process of initializing the virtual aggregation device, when the communication system 10 is started for the first time or restarted, or when a new device joins, a plurality of devices can be initialized in different environments as virtual aggregation devices with a central control device. When the virtual aggregation device is initialized, only a part of composable capabilities in the communication system 10 need to be started, to avoid wasting unnecessary computing resources. In addition, the central control device starts a component capability of a plurality of devices by using a dynamic policy, and determines a virtual initialization configuration based on an exploration result of the plurality of devices. The initialization configuration process can balance factors such as privacy, power consumption, and effectiveness based on a scenario, and is flexible and convenient.

This is not limited to the foregoing process of an initial configuration of the virtual aggregation device. In some embodiments of this application, the user may further manually adjust the virtual aggregation device. In other words, the communication system 10 may receive a user operation and aggregate the virtual aggregation device based on the user operation.

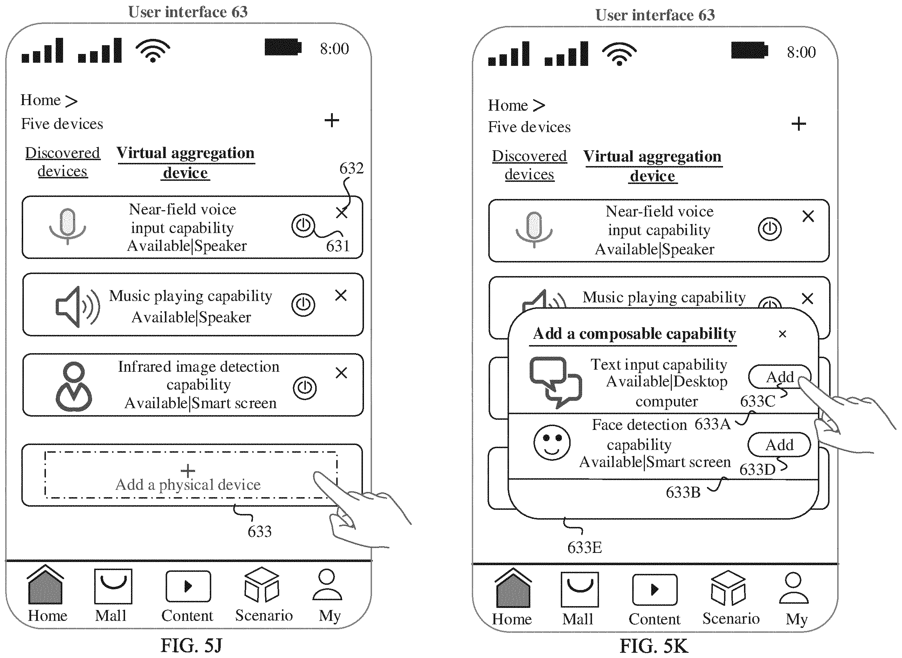

For example, refer to FIG. 5J. When the "Virtual aggregation device" option 614 on the user interface 61 shown in FIG. 5D is selected, the electronic device may display a user interface 63. The user interface 63 may include options corresponding to one or more composable capabilities (for example, a near-field voice input capability, a music playing capability, and an infrared image detection capability) forming the virtual aggregation device, an "Add a device" option 633, and the like.

The options corresponding to the one or more composable capabilities may display a state (for example, an available state or a disabled state) of each composable capability and an electronic device to which the composable capability belongs. The options corresponding to the one or more composable capabilities may further include a corresponding controlling control (for example, a controlling control 631 of the near-field voice input capability), to control enabling or disabling of a corresponding composable capability (for example, the near-field voice input capability). The options corresponding to the one or more composable capabilities may further include a deletion control (for example, a deletion control 632 in an option corresponding to the near-field voice input capability), so that the composable capability is no longer a part of the composition of the virtual aggregation device, in other words, the virtual aggregation device cannot invoke the composable capability.

The "Add a device" option 633 may be used to add a composable capability of a discovered device to the virtual aggregation device as a part of the composition of the virtual aggregation device. In other words, the virtual aggregation device can invoke the composable capability added to the composition of the virtual aggregation device.

In response to a touch operation (for example, tapping) acting on the deletion control 632, the electronic device may no longer display, on the user interface 63, the option corresponding to the near-field voice input capability. In other words, the near-field voice input capability running on a speaker is no longer a part of the composition of the virtual aggregation device, and the virtual aggregation device cannot invoke the near-field voice input capability on the speaker.

As shown in FIG. 5J, in response to a touch operation (for example, tapping) acting on the "Add a physical device" option 633, the electronic device may display a window 633E on the user interface 63 shown in FIG. 5K. The window 633E may display a composable capability included in the discovered device but not included in the virtual aggregation device, for example, a "Text input capability" option 633A on a desktop computer and a "Face detection capability" option 633B on a smart screen. The "Text input capability" option 633A may include a corresponding "Add" control 633C. The "Add" control 633C may be used to add a text input capability on the desktop computer to the virtual aggregation device, so that the virtual aggregation device can invoke the text input capability on the desktop computer. The "Face detection capability" option 633B may include a corresponding "Add" control 633D, and the "Add" control 633C may be used to add a face detection capability on the smart screen to the virtual aggregation device, so that the virtual aggregation device can invoke the face detection capability on the smart screen.

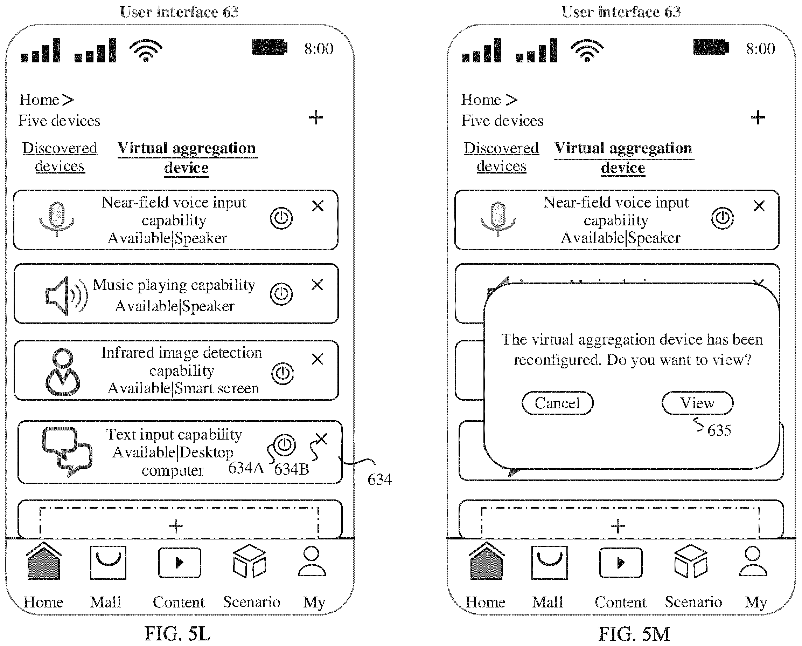

In response to a touch operation (for example, tapping) acting on the "Add" control 633C, as shown in FIG. 5L, the electronic device may display a text input capability option 634 on the user interface 63. In other words, the virtual aggregation device includes the text input capability on the desktop computer. The text input capability option 634 may include a name "Text input capability" of the composable capability, a status "Available" of the composable capability, and an electronic device "Desktop computer" to which the composable capability belongs. The device option 634 may further include a controlling control 634A and a deletion control 634B. For descriptions of the controlling control 634A and the deletion control 634B, refer to the descriptions in the foregoing embodiments. Details are not described herein again.

The user interfaces shown in FIG. 5D to FIG. 5G and FIG. 5J to FIG. 5L may be provided by any device in the communication system 10, for example, may be provided by the central control device.

In the foregoing example in which the user adds the composable capability to the virtual aggregation device shown in FIG. 5J to FIG. 5L, the user may select to add a required composable capability to the virtual aggregation device.

In some embodiments, after configuring the virtual aggregation device, the central control device may further trigger a physical device in which a composable capability is located in the virtual aggregation device to output prompt information, to prompt the user that a composable capability of the physical device is added to the virtual aggregation device. An implementation form of the prompt information is not limited. For example, the physical device may prompt the user by using a flashlight, vibration, or the like.

For example, refer to FIG. 7. FIG. 7 shows an example of a virtual aggregation device formed by a central control device. As shown in FIG. 7, the virtual aggregation device includes the central control device, an interaction composable capability that supports collecting a near-field voice, a far-field voice, and a gesture, a recognition composable capability that supports near-field ASR, far-field ASR, NLU, palm detection, and dialogue management (dialogue management, DM), and service composable capability that supports a skill 1 to a skill N. Data collected by the interaction composable capability that supports collecting a near-field voice, a far-field voice, and a gesture may be analyzed by the recognition composable capability that supports near-field ASR, far-field ASR, NLU, palm detection, and DM. Then, the service composable capability that supports a skill 1 to a skill N may be started based on an analysis result to execute a corresponding task.

After the virtual aggregation device is configured, the central control device may manage resources (namely, the composable capabilities) in the virtual aggregation device, and provide a service for the user by using the virtual aggregation device. In other words, the central control device may be configured to manage a part of or all resources of a plurality of electronic devices included in the communication system 10.

S106: The central control device triggers a first device in the virtual aggregation device to detect a specific event.

In embodiments of this application, the specific event may also be referred to as first time.

In embodiments of this application, the specific event is an event that implies a user intention.

In embodiments of this application, the specific event may be a modality or a combination of a plurality of modalities. Modalities may include, for example, a text, a voice, a vision (for example, a gesture), an action, a situation (for example, a user position, and a distance between the user and the device), and a scenario (for example, an office scenario, a home scenario, and a commute scenario).

The specific event may include the following types:

1. Interaction operation entered by the user

The interaction operation entered by the user may include but is not limited to a voice instruction, a touch operation (for example, a tap operation, a touch and hold operation, or a double-tap operation) performed on a display, an air gesture/a mid-air gesture, an operation acting on a button of the device, a posture, an eyeball rotation instruction, a mouth movement instruction, an operation of moving or shaking the device, and the like.

In some embodiments, the device may start to detect a voice instruction after receiving a wake-up word. For example, the wake-up word may include a voice wake-up word (for example, "Hey Celia"), or may include a gesture wake-up word (for example, an "OK" gesture).

For example, when using a mobile phone, if the user wants to project a screen, the user may output a voice instruction "Project a screen", or may tap a projection button on a display of the mobile phone.

When the specific event is implemented as the first type, the interaction operation entered by the user may also be referred to as a first operation.

2. Event in which the user status changes

The user status may include, for example, a user position, and a transaction (for example, exercising, working, or watching TV) performed by the user. The event in which the user status changes may include, for example, the user gets up, the user goes to sleep, the user goes out, and the user exercises.

3. Event in which a situation between the user and the device changes

The situation between the user and the device may include, for example, a distance between the user and the device. The event in which a situation between the user and the device changes may include, for example, the user moves the device (for example, picks up a mobile phone), and the distance between the user and the device changes (for example, increases or decreases).

4. Event in which the environment status changes

The environment status may include, for example, a temperature, a humidity, an ultraviolet intensity, an air volume, ambient light, and the like of the environment.

5. Event in which the device receives a notification message or obtains information about a to-be-executed schedule

The event in which the device obtains a notification message or obtains information about a to-be-executed schedule.

The notification message obtained by the electronic device may be actively generated by an application in the device in a running process, or may be sent by a server corresponding to the application in the device. For example, the electronic device may receive a notification message that is sent by a trusted organization to notify of extreme weather (for example, a storm or heavy snow).

The schedule is a plan and arrangement for a specific time point or time period. The schedule may also be referred to as an event, a transaction, a trip, or another name. This is not limited herein. The schedule information may come from a memo, a calendar (calendar), an alarm clock (clock), a booking application, an online conference application, or the like in the electronic device.

In some embodiments of this application, the central control device may select a part of or all resources in the virtual aggregation device to detect the specific event. The part of or all resources may be referred to as a first resource. There may be one or more first resources. The first resource may include a resource from one electronic device, or may include resources from a plurality of electronic devices. The first resource is a composable capability, for example, may be an interaction composable capability.

In some embodiments of this application, the central control device may select a part of or all interaction composable capabilities in the configured virtual aggregation device to detect the specific event.

The central control device may randomly select, or select according to a specific policy, a part of the interaction composable capabilities from the interaction composable capabilities of the virtual aggregation device to detect the specific event.

Specifically, the central control device may select, with reference to one or more of the following, an appropriate interaction composable capability to detect the specific event: a user status, a device status, an environment status, a user profile, a global context, or a memory that is historically detected by the virtual aggregation device.

For example, the foregoing policy may include any one or a combination of the following:

Policy 1: Select an interaction composable capability based on a modality channel.

Specifically, because the specific event may be a uni-modality, or may be a combination of a plurality of modalities, and there may be a plurality of collection channels of a specific modality, the central control device may select the first device and a first composable capability based on the channels. Specifically, a channel is a device or a composable capability for collecting a modality. For example, a specific event of a voice modality may be picked up by both a far-field device and a near-field device. For another example, a voice modality in the specific event may be picked up by using a voice interaction composable capability of the far-field device, and a gesture modality in the specific event may be collected by using a visual interaction composable capability.

In some embodiments, the central control device may select a part of channels from all collection channels to collect modality information of the specific event. For example, when a man-machine distance between the user and the device is long, a far-field sound pickup composable capability may be selected to collect a voice instruction.

In some embodiments, for specific modality information, the central control device may select a plurality of channels to collect the modality information. The modality information may be referred to as first modality data. For example, near-field and far-field sound pickup composable capabilities may be selected at the same time to collect a voice instruction. In this way, the modality information collected through the plurality of channels can be fused to obtain more accurate and richer modality information. This improves accuracy of a subsequent operation.

Policy 2: Composable capability activeness first.

Specifically, the central control device may select one or more composable capabilities with a relatively high activeness or a highest activeness to detect the specific event. The activeness of the composable capability is related to the following device information: (1) Whether a device in which the composable capability is located is in a started state. If the device is started, the activeness is high. (2) Last activation duration of the device in which the composable capability is located. Longer activation duration of the device indicates a higher activeness. (3) An input receiving frequency of the device in which the composable capability is located. A higher input receiving frequency of the device indicates a higher activeness.

Policy 3: Near user first.

Specifically, the central control device may select an interaction composable capability of a device that is closer to the user to detect the specific event. A distance between the device in which the composable capability is located and the user may be determined by detecting a strength of a biometric recognition signal (for example, a face, a voiceprint, skin electricity, or a heart rate).

Policy 4: User habit first.

Specifically, the central control device may preferentially select, based on a user habit, a composable capability that is most frequently invoked in a history record to detect the specific event.

Policy 5: User selection first.

Specifically, the user may independently select a composable capability for detecting the specific event, and the central control device may trigger the composable capability selected by the user to detect the specific event. A manner of selecting, by the user, the composable capability for detecting the specific event is not limited herein. For example, the composable capability may be selected by performing an operation on the central control device, or may be selected by using a voice or a gesture.

Policy 6: User attention first.

For a meaning of attention and a specific implementation of the policy 6, refer to related descriptions in S108. Details are not described herein again.

The foregoing policies can be used to effectively select the appropriate interaction composable capability to detect the specific event.

This is not limited to the foregoing several policies. In embodiments of this application, another policy may be used to select the interaction composable capability to detect the specific event. For example, the central control device may further select an interaction composable capability of a device closer to the central control device to detect the specific event, or select an interaction composable capability of a device that recently interacts with the central control device to detect the specific event.

Policy 7: Capability first.

Specifically, the central control device may select an interaction composable capability of a device with a stronger interaction capability or more interaction capabilities to detect the specific event. For example, the central control device may preferentially select an interaction composable capability of a mobile phone with a strong interaction capability to detect the specific event.

Policy 8: Preset default sorting first.

In some embodiments, the device or the user may preset a priority of a device for detecting the specific event. For example, the priority may be preset when the device is delivered from the factory or preset by the user during use. The preset device priority may be stored in a cloud server, or may be stored in any one or more devices in the communication system 10.

In a specific implementation, the central control device may preferentially select, based on the preset device priority, a service composable capability of a device with a high priority, to detect the specific event.

A part of or all interaction composable capabilities selected by the central control device from the virtual aggregation device for detecting the specific event may be referred to as a first composable capability, and a device in which the first composable capability is located is the first device.

There may be one or more first composable capabilities. There may also be one or more first devices. For example, in a home range, the central control device may determine a camera and a smart speaker as the first device, trigger the camera to start a visual interaction composable capability to capture an image, and trigger the smart speaker to start a voice interaction composable capability to capture an audio.

In other words, the central control device may select, from the virtual aggregation device, a part of or all devices that have a capability for detecting the specific event as the first device.

For example, a device configured with a microphone, a display, a camera, an acceleration sensor, or the like has a capability for detecting an interaction operation entered by the user. The central control device may select this type of device as the first device.

For another example, a device configured with a camera and a speed sensor may be configured to detect a user status. The central control device may select this type of device as the first device.

For another example, a device configured with a camera and a distance sensor may be configured to detect a situation between the user and a device. The central control device may select this type of device as the first device.

For another example, a device configured with a temperature sensor and a humidity sensor may be configured to detect an environment status. The central control device may select this type of device as the first device.

For another example, a device having a message sending and receiving capability may be configured to receive a notification message, and a device having a schedule adding capability may be configured to obtain schedule information. The central control device may select this type of device as the first device.

If the central control device configures the virtual aggregation device in S105, the first composable capability of the virtual aggregation device is ready to be started in advance. Therefore, in S106, the central control device may quickly and conveniently trigger the first device to start the first composable capability to detect the specific event. It can be learned that, the virtual aggregation device is configured, so that efficiency of performing S106 by the communication system 10 can be improved, to provide a better service for the user.

In embodiments of this application, the central control device may trigger, by sending a notification message (for example, broadcasting or multicasting) based on a connection between devices, the first device to start the first composable capability to detect the specific event.

In some embodiments of this application, after starting the first composable capability to collect corresponding data, each first device may locally analyze the data, and send an analysis result (for example, a recognized event) to the central control device, so that the central control device learns whether the specific event is currently detected.

In some other embodiments of this application, after starting the first composable capability to collect corresponding data, one or more first devices may send the data collected by the one or more first devices to the central control device, and the central control device integrates data collected by the plurality of first composable capabilities, and analyzes whether the specific event is currently detected.

In some other embodiments of this application, after starting the first composable capability to collect corresponding data, one or more first devices may send the data collected by the one or more first devices to a second device in S107, and the second device analyzes a user intention based on the data and segments the user intention into to-be-executed tasks.

In some embodiments, one composable capability may be configured to collect data of a small amount of modality (for example, one modality), and multi-modality data needs to be collected by a plurality of composable capabilities. Different composable capabilities usually have different sampling rates. The sampling rate refers to a quantity of times that the composable capability collects data in unit time (for example, one second, ten seconds, or one minute). In the electronic device, a sampling rate of each composable capability may be independently set by the electronic device. This is not specifically limited herein.

In embodiments of this application, the specific event may be a combination of a plurality of modalities. In other words, the specific event may include multi-modality data. Based on this, in some embodiments, the central control device may determine a unified sampling rate, and trigger the first composable capability of the first device to uniformly use the sampling rate to collect data. In this way, all the first composable capabilities use a same sampling rate to collect data, and the virtual aggregation device may obtain multi-modality data with a small data amount difference, so that the multi-modality data can be fused more conveniently and quickly, to recognize the specific event. It can be learned that the first composable capability collects data by using a unified sampling rate, so that integrity of data features collected by each first composable capability can be ensured, and resources consumed for detecting the specific event can be reduced.

The central control device may determine the unified sampling rate in any one of the following manners:

Manner 1: The central control device randomly selects a policy as the unified sampling rate.

For example, the central control device may prestore the unified sampling rate. Alternatively, the central control device may randomly select a sampling rate of a composable capability from a plurality of first composable capabilities as the unified sampling rate.

Manner 2: The central control device determines a sampling rate of a first composable capability with the highest activeness as the unified sampling rate.

Specifically, the central control device may notify each first composable capability to report activeness information and a sampling rate, and determine an activeness of each first composable capability based on the activeness information reported by each first composable capability. Then, the central control device delivers a sampling rate of a first composable capability with the highest activeness to each first composable capability, and notifies each first composable capability to perform sampling based on the sampling rate.

Activeness of a composable capability reflects a frequency of using the composable capability by the user, or a frequency of reading data collected by the composable capability by the user. A higher frequency indicates a higher activeness of the composable capability.

The activeness information may include one or more of the following: a use status of a device in which the composable capability is located, a change in an amount of data collected by the composable capability twice at an initial time interval, and a degree of association between data collected by the composable capability and the user. The initial time interval may be a preset fixed system parameter, or may be a parameter obtained through adjusting according to a specific policy. The use status of the device in which the composable capability is located may include a use frequency, and the like. A higher use frequency indicates a higher activeness. A greater change in the amount of data collected by the composable capability twice at the initial time interval indicates higher activeness. A higher degree of association between the data collected by the composable capability and the user indicates a higher activeness. For example, the user spends more time in the living room in the daytime, and data collected by a composable capability of a living room device has a higher degree of association with the user compared with data collected by a composable capability of a bedroom device.

In the foregoing manner 2, the sampling rate of the first composable capability with the highest activeness is used as the unified sampling rate, so that it can be ensured that the first composable capability with the highest activeness can collect sufficient user-related data, and accuracy of detecting the specific event by the central control device is higher.

In some embodiments of this application, in step 1 in the process of initializing the virtual aggregation device in S105, the central control device may alternatively collect the environment information by using the unified sampling rate.

In embodiments of this application, the unified sampling rate mentioned above may also be referred to as a first sampling rate.

In some embodiments of this application, if the central control device performs the foregoing optional step S105, after S105, the central control device may trigger the first composable capability of the virtual aggregation device to uniformly use the sampling rate to collect data. In this way, an influence of the sampling rate on modality data fusion can be considered, and the virtual aggregation device can be equipped with an adaptive initial sensing collection policy.

S107: The central control device triggers the second device in the virtual aggregation device to analyze the user intention indicated by the specific event, and determines the to-be-executed task corresponding to the user intention.

In some embodiments of this application, the central control device may select a part of or all resources in the virtual aggregation device to analyze the user intention indicated by the specific event, and determine the to-be-executed task corresponding to the user intention. The part of or all resources may be referred to as a third resource. There may be one or more third resources. The third resource may include a resource from one electronic device, or may include resources from a plurality of electronic devices. The third resource is a composable capability, for example, may be a recognition composable capability.

In some embodiments of this application, the central control device may select a part of or all recognition composable capabilities in the configured virtual aggregation device to analyze the user intention and the to-be-executed task.

The central control device may randomly select, or select according to a specific policy, a part of the recognition composable capabilities from the recognition composable capabilities of the virtual aggregation device to recognize the user intention and the to-be-executed task corresponding to the user intention.

Specifically, the central control device may select, with reference to one or more of the following, an appropriate recognition composable capability to recognize the user intention and the to-be-executed task corresponding to the user intention: a user status, a device status, an environment status, a user profile, a global context, or a memory that is historically detected by the virtual aggregation device.

For example, the foregoing policy may include any one or a combination of the following:

Policy 1: Composable capability activeness first.

Specifically, the central control device may select one or more composable capabilities with a relatively high activeness or a highest activeness to recognize the user intention and determine the to-be-executed task corresponding to the user intention. For a manner of determining the activeness of the composable capability, refer to the foregoing description.

Policy 2: Near user first.

Specifically, the central control device may select a recognition composable capability of a device that is closer to the user to recognize the user intention and determine the to-be-executed task corresponding to the user intention. For a manner of determining the distance between the device and the user, refer to the foregoing description.

Policy 3: Same input device first.

Specifically, the central control device may preferentially select a recognition composable capability of the first device to recognize the user intention and determine the to-be-executed task corresponding to the user intention.

Policy 4: User habit first.

Specifically, the central control device may preferentially select, based on a user habit, a composable capability that is most frequently invoked in a history record to recognize the user intention and determine the to-be-executed task corresponding to the user intention.

Policy 5: User attention first.

Specifically, the central control device may preferentially select a recognition composable capability of a device on which the user focuses to recognize the user intention and determine the to-be-executed task corresponding to the user intention.

Policy 6: Inference and determining based on machine learning/deep learning.

Specifically, the central control device may collect data of association between the specific event and a started recognition composable capability within a specific time range, and predict, based on a machine learning/deep learning method and an input of the specific event, a model of a series of composable capabilities that the user may need to start. Then, based on the model, the specific event is used as an input to obtain the composable capability that needs to be started. This method can be implemented by referring to a sorting technology that has been widely used in a recommendation system. In addition, a multi-modality input needs to be considered as an extension of the specific event.

Policy 7: User selection first.

Specifically, the user may independently select a composable capability for recognizing the user intention and determining the to-be-executed task corresponding to the user intention, and the central control device may trigger the composable capability selected by the user to recognize the user intention and determine the to-be-executed task corresponding to the user intention. A manner of selecting, by the user, the composable capability for recognizing the user intention and determining the to-be-executed task corresponding to the user intention is not limited herein. For example, the composable capability may be selected by performing an operation on the central control device, or may be selected by using a voice or a gesture.

Policy 8: Capability first.

Specifically, the central control device may select a recognition composable capability of a device having a stronger capability or more capabilities to recognize the user intention and the to-be-executed task. For example, the central control device may preferentially select a recognition composable capability of a mobile phone having a stronger processing capability to recognize the user intention and the to-be-executed task.

Policy 9: Preset default sorting first.

In some embodiments, the device or the user may preset a priority of a device for recognizing the user intention and the to-be-executed task. For example, the priority may be preset when the device is delivered from the factory or preset by the user during use. The preset device priority may be stored in a cloud server, or may be stored in any one or more devices in the communication system 10.

In a specific implementation, the central control device may preferentially select, based on the preset device priority, a service composable capability of a device with a high priority, to recognize the user intention and the to-be-executed task.

The foregoing policies can be used to effectively select the appropriate recognition composable capability to recognize the user intention and determine the to-be-executed task corresponding to the user intention.

This is not limited to the foregoing several policies. In embodiments of this application, another policy may be used to select the recognition composable capability to recognize the user intention and determine the to-be-executed task corresponding to the user intention. For example, the central control device may further select a recognition composable capability of a device closer to the central control device to recognize the user intention and determine the to-be-executed task corresponding to the user intention, or select a recognition composable capability of a device that recently interacts with the central control device to recognize the user intention and determine the to-be-executed task corresponding to the user intention.

A part of or all interaction composable capabilities selected by the central control device from the virtual aggregation device for analyzing the user intention indicated by the specific event and determining the to-be-executed task corresponding to the user intention may be referred to as a third composable capability, and a physical device in which the third composable capability is located is the second device.

In other words, the central control device may select, from the virtual aggregation device, a part of or all devices that have a capability for recognizing the user intention and the to-be-executed task corresponding to the user intention as the second device.

There may be one or more third composable capabilities. There may also be one or more second devices. For example, in the home range, the central control device may determine the smart screen and the mobile phone as the second device, and trigger the smart screen and the mobile phone to start a processor to analyze the user intention indicated by the specific event and determine the to-be-executed task corresponding to the user intention.

If the central control device configures the virtual aggregation device in S105, the third composable capability of the virtual aggregation device is ready to be started in advance. Therefore, in S107, the central control device may quickly and conveniently trigger the second device to start the third composable capability to analyze the user intention indicated by the specific event and determine the to-be-executed task corresponding to the user intention. It can be learned that, the virtual aggregation device is configured, so that efficiency of performing S107 by the communication system 10 can be improved, to provide a better service for the user.

In embodiments of this application, the central control device may trigger, by sending a notification message (for example, broadcasting or multicasting) based on a connection between devices, the second device to start the third composable capability to analyze the user intention indicated by the specific event and determine the to-be-executed task corresponding to the user intention.

In some embodiments of this application, if the first device locally recognizes the specific event in S106, the first device may notify the second device of the specific event, so that the second device starts the third composable capability to analyze the user intention indicated by the specific event and determine the to-be-executed task corresponding to the user intention. Herein, after determining the second device, the central control device may notify the first device of the second device, so that the first device notifies the second device of the specific event.

In some other embodiments of this application, if the central control device learns the currently collected specific event in S106, the central control device may directly trigger or notify the second device to analyze the user intention indicated by the specific event and determine the to-be-executed task corresponding to the user intention.

In some other embodiments of this application, if in S106, after starting the first composable capability to collect corresponding data, one or more first devices send the collected data to the second device, the second device may

45

analyze the user intention based on the data and segment the user intention into the to-be-executed task.

In embodiments of this application, the second device may analyze, with reference to one or more of the following, the user intention indicated by the specific event: a user status, a device status, an environment status, a user profile, a global context, or a memory that is historically detected by the first device.

In embodiments of this application, the second device may analyze, by using an intention recognition algorithm, a neural network algorithm, or the like, the user intention indicated by the specific event.

In some embodiments, in different scenarios (for example, the home range and the office), user intentions that are indicated by a same specific event and recognized by the second device may be different.

A user intention refers to a purpose or a requirement of the user. A correspondence between the specific event and the user intention may be preset, or may be learned by a smart assistant on the virtual aggregation device in a running process.

For example, if the specific event is a voice instruction "View a situation in the living room" entered by the user, the second device may obtain, through speech recognition, that the user intention includes viewing a situation in the living room. For another example, if the specific event is a voice instruction "Turn on a light" entered by the user, the second device may obtain, through analysis based on speech recognition and a position (for example, the living room) at which the user is currently located, that the user intention includes turning on a light in the living room.

In embodiments of this application, the user intention recognized by the second device may be described in a structured data manner. Structured data refers to data expressed in specific structural logic (for example, a two-dimensional table). For example, the user intention may be "operation: turning on the light; position: living room. For example, the user intention may be "operation: playing music; content: Common Jasmin Orange".

After recognizing the user intention indicated by the specific event, the second device may determine the to-be-executed task corresponding to the user intention. If the device executes the to-be-executed task corresponding to the user intention, the user intention can be met, in other words, the user requirement can be met.

In some embodiments, in different scenarios (for example, the home range and the office), to-be-executed tasks that correspond to a same user intention and that are determined by the second device may be different.

A process of determining, by the second device, the to-be-executed task corresponding to the user intention may be considered as a process of segmenting the user intention into the to-be-executed task. There may be one or more to-be-executed tasks obtained by segmenting the user intention. The plurality of tasks may be in a parallel execution relationship, or may have a logical execution relationship. The logical execution relationship may include, for example, a sequence relationship, a loop relationship, a condition relationship, and Boolean logic.

The user intention may include a plurality of modalities or types. For example, the user intention may include a visual image playing intention, an audio playing intention, a light turning-on intention, a vibration intention, an intention of a mobile device, and the like. For example, the user intention "View a situation in the living room" includes two modalities: viewing a real-time image of the living room and listening to a real-time audio of the living room.

A task is one or more operations performed by a device. The task, namely, the operation performed by the device, may also include a plurality of modalities or service types. For example, the task may include a visual image playing task, an audio playing task, a vibration task, a flashing task, a moving task, and the like.

In some embodiments, the second device may segment the user intention into one or more to-be-executed tasks by modality.

In some embodiments, the second device may segment, with reference to one or more of the following, the user intention into to-be-executed tasks by modality: a user status, a device status, an environment status, a user profile, a global context, or a memory that is historically detected by the first device.

In some embodiments, the second device may select an appropriate segmentation method based on a modality or a type of the user intention to segment the user intention. In a specific implementation, a method for segmenting the user intention may include the following several types:

Method 1: Segment the user intention based on startup information of a historical composable capability.

Specifically, the second device may segment the user intention based on a category of a started composable capability corresponding to a historical user intention. In other words, the second device may search for a historical segmentation result of the user intention, and segment a currently recognized user intention with reference to the historical segmentation result.

Method 2: Inference and determining based on machine/deep learning.

Specifically, the second device may collect the user intention and data of association between the user status, the device status, and the environment status that are collected by the first device and a category of a composable capability that the user actually selects to start, to train, based on a machine/deep learning method, a model that can infer a composable capability category from an input of the user intention and the user/device/environment status, and finally obtain, through segmentation, a plurality of to-be-executed tasks based on the model.

Method 3: Rule determining.

Specifically, the second device may preset a user intention and a to-be-executed task corresponding to the user intention in different scenarios. After the scenario and the user intention are recognized, the scenario and the user intention may be used as an input, and after fixed logic processing of a rule is performed, one or more corresponding to-be-executed tasks are output.

In embodiments of this application, the to-be-executed task obtained by the second device through segmenting the user intention may be classified into a deterministic task and a probabilistic task. The deterministic task indicates that the communication system recognizes the segmented to-be-executed task based on an explicit user intention. The probabilistic task indicates a to-be-executed task that the user may need the device to perform when the user intention is not clear.

The probabilistic task generally corresponds to an unclear user intention. Because the probabilistic task has corresponding confidence levels for different types of to-be-executed tasks, selection may be further performed according to a rule. For example, only a to-be-executed task that meets a threshold may be determined as a to-be-executed task corresponding to a user intention.

In some embodiments, the second device obtains, through analysis, the user intention indicated by the specific event, and after determining the to-be-executed task corresponding to the user intention, the second device may further send a recognition result to the central control device. In other words, the second device may send, to the central control device, the user intention that is indicated by the specific event and obtained through analysis and/or the to-be-executed task corresponding to the user intention.

In the foregoing modality-based task segmentation manner, the virtual aggregation device can perform fine-grained control and execution on a cross-device input/output by using the user intention, while considering semantic information of sensing data and explicit and implicit intentions of an environment, to further enhance advantages of functionality and personalized outputs over a single device. A multi-device multi-modality command is processed in the foregoing manner, so that an actual capability of the communication system can be flexibly adapted to, to improve interaction experience and scenario adaptability.

Optional step S 109: The central control device reconfigures the virtual aggregation device.

In some embodiments of this application, after initializing the virtual aggregation device in S105, the central control device may further continuously detect the user status, the device status, the environment status, and the like based on an existing virtual aggregation device by using the virtual aggregation device, analyze a potential service requirement of the user based on detected information, and adaptively adjust the virtual aggregation device, that is, reconfigure the virtual aggregation device. The existing virtual aggregation device may be an initialized virtual aggregation device, or may be a virtual aggregation device reconfigured for a plurality of times. In other words, S109 may be performed for a plurality of times. In embodiments of this application, the central control device may reconfigure the virtual aggregation device after the virtual aggregation device detects a status change event.

In embodiments of this application, the status change event may also be referred to as a second event.

A process in which the central control device reconfigures the virtual aggregation device may include the following steps:

Step 1: The central control device triggers the first device to detect the status change event.

In some embodiments, the status change event may include an event that affects quality of service provided by the communication system 10. The quality of service provided by the communication system 10 may include, for example, user satisfaction, a degree of matching with a user habit, accuracy of man-machine interaction recognition, and a response speed.

The status change event may be a modality or a combination of a plurality of modalities. Modalities may include, for example, a text, a voice, a vision, an action, a situation (for example, a user position, and a distance between the user and the device), and a scenario (for example, an office scenario, a home scenario, and a commute scenario).

The status change event may include the following types:

Type 1: Interaction operation entered by the user.

The interaction operation entered by the user may include but is not limited to a voice instruction, a touch operation (for example, a tap operation, a touch and hold operation, or a double-tap operation) performed on a display, an air gesture/a mid-air gesture, an operation acting on a button of the device, a posture, an eyeball rotation instruction, a mouth movement instruction, an operation of moving or shaking the device, and the like.

For example, when using a mobile phone, if the user wants to project a screen, the user may output a voice instruction "Project a screen", or may tap a projection button on a display of the mobile phone.

Type 2: Event in which the user status changes.

The user status may include, for example, a user position, and a transaction (for example, exercising, working, or watching TV) performed by the user. The event in which the user status changes may include, for example, the user moves (for example, moves 0.5 meters), the user gets up, the user goes to sleep, the user goes out, and the user exercises.

Type 3: Event in which the device status changes.

The device status may include, for example, a device power level, power consumption, and a position. The event in which the device status changes may include a battery level is lower than a threshold, a position changes, power consumption is higher than a threshold, a new device joins or goes online in the communication system 10, a device leaves or goes offline in the communication system 10, and the like.

Type 4: Event in which a situation between the user and the device changes.

The situation between the user and the device may include, for example, a distance between the user and the device. The event in which a situation between the user and the device changes may include, for example, the user moves the device (for example, picks up a mobile phone), and the distance between the user and the device changes (for example, increases or decreases).

Type 5: Event in which the environment status changes.

The environment status may include, for example, a temperature, a humidity, an ultraviolet intensity, an air volume, ambient light, and the like of the environment. The event in which the environment status changes may include, for example, a temperature is greater than a threshold (for example, 30 degrees).

Type 6: The event in which the device obtains a notification message or obtains information about a to-be-executed schedule.

The notification message obtained by the electronic device may be actively generated by an application in the device in a running process, or may be sent by a server corresponding to the application in the device, or may be sent by another device. For example, the electronic device may receive a notification message that is sent by a trusted organization to notify of extreme weather (for example, a storm or heavy snow).

The schedule is a plan and arrangement for a specific time point or time period. The schedule may also be referred to as an event, a transaction, a trip, or another name. This is not limited herein. The schedule information may come from a memo, a calendar (calendar), an alarm clock (clock), a booking application, an online conference application, or the like in the electronic device.

In embodiments of this application, the central control device may select, from the currently configured virtual aggregation device, a composable capability that supports detection of the status change event, that is, select a part of or all interaction composable capabilities from interaction composable capabilities of the current virtual aggregation device to detect the status change event.

The central control device may randomly select, or select according to a specific policy, a part of or all interaction composable capabilities from the interaction composable capabilities of the current virtual aggregation device to detect the status change event. For example, the policy may be: selecting a composable capability of a device closer to the central control device to detect the specific event, selecting a composable capability that recently interacts with the central control device to detect the status change event, activeness first, near user first, user habit first, and the like.

In some embodiments, the central control device may select a part of interaction composable capabilities from the virtual aggregation device based on current time or a scenario to detect the status change event. For example, the scenario may include a day mode, a night mode, a movie viewing mode, a motion mode, and the like. The central control device may select different interaction composable capabilities from the virtual aggregation device in different scenarios to detect the status change event.

A part of or all interaction composable capabilities selected by the central control device for detecting the status change event are the same as the interaction composable capabilities for detecting the specific event in S106. That is, the interaction composable capability for detecting the status change event is the first composable capability, and the device for detecting the status change event by the user is the first device. For a policy for selecting the first composable capability and the first device, refer to the related descriptions in S106.

In embodiments of this application, the central control device may trigger, by sending a notification message (for example, broadcasting or multicasting) based on a connection between devices, the first device to start the first composable capability to detect the status change event.

In some embodiments of this application, after starting the first composable capability to collect corresponding data, each first device may locally analyze the data, and send an analysis result (for example, a recognized event) to the central control device, so that the central control device learns whether the status change event is currently detected.

In some other embodiments of this application, after starting the first composable capability to collect corresponding data, one or more first devices may send the data collected by the one or more first devices to the central control device, and the central control device integrates data collected by the plurality of first composable capabilities, and analyzes whether the status change event is currently detected.

In some other embodiments of this application, after starting the first composable capability to collect corresponding data, one or more first devices may send the data collected by the one or more first devices to the second device in S107, and the second device analyzes a service requirement of the user based on the data.

Step 2: The central control device triggers the second device to analyze the service requirement of the user based on the detected status change event.

After learning the status change event, the central control device may analyze or recognize the service requirement of the user based on the status change event. In other words, the central control device may predict the service requirement of the user based on the status change event.

In embodiments of this application, the service requirement of the user recognized by the central control device based on the status change event may be classified into a deterministic requirement and a probabilistic requirement.

The deterministic requirement is a recognized exact service that needs to be provided to the user, and is usually input by an explicit instruction (for example, an operation of the user on a man-machine interface of the device, an explicit voice instruction of the user, or a gesture that complies with a definition of man-machine interaction of a specific device) of the user.

The probabilistic requirement indicates a recognized potential service requirement of the user, that is, the user tends to request the service, but does not determine to provide the service immediately. The probabilistic requirement generally corresponds to a non-explicit user behavior (for example, a position change or a sleep status change) or an environment status change (for example, a temperature change). Because the probability requirement usually has a plurality of possible outputs and has corresponding confidence levels, selection may be further performed according to a rule. For example, one or more probability requirements that meet a threshold may be selected as alternatives.

As described above, the status change event may include a plurality of types. Therefore, in a specific implementation, the original virtual aggregation device may detect a plurality of status change events. The central control device may analyze the service requirement of the user based on a single status change event, or may comprehensively analyze the service requirement of the user based on a plurality of status change events.

The central control device may recognize or analyze the service requirement of the user based on the status change event in the following several manners:

Manner 1: Determine the service requirement of the user according to a fixed rule.

Specifically, a fixed determining and recognition rule is preset based on a scenario feature. After the status change event is processed by using fixed logic of the rule, a determining result is output, that is, the service requirement of the user is output. For example, there is a high probability that a kitchen appliance control event occurs when the user is in a kitchen. Therefore, if it is detected that the user enters the kitchen, it may be determined that the user has a kitchen appliance control requirement. For another example, there is a high probability that the user starts an air conditioner when a temperature is higher than 30 degrees. Therefore, if it is detected that the temperature is higher than 30 degrees, it may be determined that the user has an air conditioner starting requirement.

Manner 2: Determine the service requirement of the user based on a knowledge graph.

The knowledge graph is a knowledge base in which data is integrated through a graph-structured data model or topology. The knowledge graph is usually used to store entities that are associated with each other. In embodiments of this application, the knowledge graph displays different status change events and a data structure indicating that service requirements of the user are associated with each other. The knowledge graph may be constructed based on information about a historical interaction between the user and the communication system 10. In some other embodiments, the knowledge graph may alternatively be manually designed or obtained based on statistics of a large quantity of group users. For example, in the foregoing example of starting the air conditioner, a requirement for starting the air conditioner at "30°C" may be initially defined through manual design or statistics. In a subsequent running process, if it is gradually found that a specific user actually has the requirement at "32°C", graph content may be updated.

Different users may correspond to different knowledge graphs.

This is similar to the processing of determining the service requirement according to the fixed rule. A difference lies in that Manner 2 does not need to be implemented by using fixed determining logic, but the determining logic is processed by using an association relationship indicated by the knowledge graph. In Manner 2, a rule and a scenario for determining the service requirement can be flexibly extended.

Manner 3: Determine the service requirement of the user through machine learning.

In Manner 3, data of association between the status change event and an actual service requirement of the user in an actual scenario is collected, and a model that can infer the actual service requirement of the user from the status change event is trained based on a machine learning method, to serve as an implementation mechanism for determining the service requirement. Manner 3 may be implemented with reference to a semantic understanding technology (for example, recognizing a user intention from a user language instruction) that is currently widely used in a voice assistant. In addition, an extension of multi-modality (for example, a plurality of status change events are used as an input) recognition may be considered.

In some embodiments of this application, the central control device may further recognize the service requirement of the user with reference to a context, a user profile, a memory, a user habit, a current configuration status of the virtual aggregation device, and the like. In this way, the service requirement of the user can be recognized more accurately and effectively. The configuration status of the virtual aggregation device is formed by configuring the virtual aggregation device. In principle, the "current configuration status of the virtual aggregation device" may indicate a service requirement of the user at a past moment to some extent, and therefore may be used to infer and recognize a service requirement of the user at a current moment (for example, perform modeling by using a Markov process).

For definitions of the context, the user profile, the memory, and the user habit, refer to related descriptions in the following embodiments. For a specific implementation of recognizing, by the central control device, the service requirement of the user with reference to the context, the user profile, the memory, the user habit, and the like, refer to detailed descriptions in the following embodiments.

In some embodiments of this application, if the first device locally recognizes the status change event in step 1, the first device may notify the second device of the status change event, so that the second device starts the third composable capability to analyze the service requirement corresponding to the status change event. Herein, after determining the second device, the central control device may notify the first device of the second device, so that the first device notifies the second device of the status change event.

In some other embodiments of this application, if the central control device learns the currently collected status change event in step 1, the central control device may directly trigger or notify the second device to analyze the service requirement corresponding to the status change event.

In some other embodiments of this application, if in step 1, after starting the first composable capability to collect corresponding data, one or more first devices sends the collected data to the second device, the second device may analyze the corresponding service requirement based on the data.

Step 3: The central control device triggers the second device to determine a service solution based on the service requirement of the user.

The central control device may determine, by using a specific policy based on the service requirement (deterministic or probabilistic) of the user, a service solution to be prepared.

The service solution includes preparations required to provide a service for the user. After corresponding preparations are performed, when it is determined that the service needs to be provided for the user, the central control device may directly execute a procedure and a function involved in the service.

Specifically, the determined service solution may include a plurality of pieces of information to indicate subsequent adjustment and adaptation behavior of the communication system. The following is an example.

1. Required interaction manner, for example, an audio input/output, a video input/output, position detection, and gesture detection. In addition, for various interaction manners, other composable capability attributes such as a position (for example, in a specified room or area) and performance (for example, far-field/near-field sound pickup) may be included.

2. Capability combination policy. For example, policies such as same device first (required resources and capabilities come from a single device as far as possible), near user first (a capability for interacting with the user is as close as possible to the user), and performance indicator first (a performance requirement that can meet the required interaction manner is preferred, for example, a far-field audio is preferred when playing music) can be used to determine an aggregated composable capability.

To adjust a capability combination configuration of an environment device in advance more accurately and more suitable for a scenario, a specific implementation may include a plurality of methods and policies. The following is an example.

A currently supported simple interaction service (for example, weather or alarm clock) is directly processed by a current interaction device according to an original process, so that simple and direct user experience can be maintained.

For a service that involves multi-device interaction, a combination solution of multi-device composable capability is output based on the service. Possible methods include a pre-configuration in a corresponding service item, knowledge-based inference, and the like.

In embodiments of this application, there may be some alternatives in the service solution output by the second device. For example, image display is preferred for a service, but a voice manner may be used when an image display capability is unavailable. Alternatively, far-field sound pickup is preferred for a service, but near-field sound pickup may be used when the capability is unavailable. Alternatively, a multi-modality output is preferred for a service, but when the capability is unavailable, only a necessary modality may be used and some optional modalities may be abandoned. In a specific implementation, the foregoing possible combinations may further form a plurality of alternative service solutions for processing in subsequent steps.

Optional step 4: The central control device requests to organize the composable capability of the virtual aggregation device.

If step 3 is performed, the central control device may request, based on the service solution, to aggregate a composable capability corresponding to the service solution.

Specifically, when the composable capability is requested to be aggregated based on the service solution, matching and selection with an actual composable capability of the virtual aggregation device in a current environment are involved. An implementation solution may include any one or more of the following:

Types of a composable capability, for example, sound pickup, image display, and available service type, are selected based on the required interaction manner.

A physical position and orientation that are of a required composable capability and that may affect an interaction effect, for example, the living room and bedroom, are selected based on the user/environment status. For example, if the user is in the bedroom, a composable capability in the bedroom may be selected.

Performance requirements of a composable capability, for example, whether the sound pickup is far-field or near-field, whether the display is a public large screen or a private small screen, and whether the device is mobile, are selected based on the interaction manner and the user/environment status. For example, if there are a large quantity of users in the current environment, a private small screen may be selected to ensure user privacy.

When the foregoing plurality of methods are simultaneously implemented, a sequence of the plurality of methods is not limited.

In some embodiments, for a plurality of alternative solutions that may be obtained by using the foregoing solution and that meet the condition, the central control device may exclude an impossible solution with reference to an actually available composable capability of the current virtual aggregation device, finally select a solution with reference to a policy preconfigured by the user, and submit an aggregation application to the communication system 10.

If step 3 is not performed, the central control device may directly request, based on the service requirement obtained through analysis in step 2, to aggregate a corresponding composable capability.

After obtaining the service requirement of the user by analyzing the status change event, the central control device may directly obtain a target configuration adjustment specification of the virtual aggregation device by analyzing the service requirement of the user without independently performing the step of formulating the service solution, to support a subsequent configuration adjustment implementation.

Specifically, after obtaining the service requirement of the user, the central control device may directly select, with reference to an actual composable capability set of the communication system 10 and an attribute (performance, a position, and the like) of the composable capability in the composable capability set, a required composable capability corresponding to the service requirement. In some embodiments, the central control device may further implement the foregoing selecting process according to a fixed or configurable capability combination policy.

The target configuration adjustment specification of the virtual aggregation device can be directly obtained by analyzing the service requirement of the user, to simplify the step of formulating the service solution and facilitate the implementation. In addition, because an intermediate process of analyzing the service solution is reduced, the solution can reduce a processing capability requirement on the central control device, and can be widely used on a central control device with a low performance configuration. In this manner, when an environment device configuration is simple (for example, there is a small quantity of devices), and a service scenario is fixed (for example, the office), a requirement on flexibility of environment device intelligent collaboration is low, so that the virtual aggregation device can be reconfigured quickly and conveniently when the user requirement is met.

In step 4, the central control device can make a comprehensive decision based on a user configuration preference, man-machine interaction or a user operation history, and status information of the user, device, environment, and the like to select an appropriate composable capability.

Step 5: The central control device aggregates the composable capability corresponding to the service solution to reconfigure the virtual aggregation device.

After completing the foregoing key steps, the central control device may further reconfigure the virtual aggregation device based on an applied composable capability with reference to a current configuration status of the virtual aggregation device. The reconfiguration of the virtual aggregation device may include: changing a configuration parameter of a composable capability of the current virtual aggregation device, reselecting or updating a composable capability that forms the virtual aggregation device, and the like. Updating the composable capability of the current virtual aggregation device may include: adding a new composable capability, and releasing the original composable capability when not needed.

The reconfiguration of the virtual aggregation device in step 5 is mainly completed by a smart assistant application by invoking a specific interface of an operating system of each device. For example, the reconfiguration may be completed by using a unique distributed technology in an operating system. This is not limited herein.

In some embodiments of this application, it may be learned from comparison between the status change event in S 109 and the specific event in S106 that the specific event is a type of status change event, and the status change event includes but is not limited to the specific event. In other words, the central control device may dynamically reconfigure the virtual aggregation device after detecting the specific event, or may dynamically reconfigure the virtual aggregation device after detecting another status change event.

The following lists several examples of reconfiguring the virtual aggregation device.

Example 1:

It is assumed that the current environment is a study room, the study room is equipped with a speaker and a smart screen, and the user carries a mobile phone and a headset. In this case, the composable capability that forms the virtual aggregation device may include sound pickup (the headset and the mobile phone are near-field, and the speaker and the smart screen are far-field), sound playing (the headset and the mobile phone are near-field, and the speaker and the smart screen are far-field), display (the smart screen and the mobile phone), and image shooting (the smart screen and the mobile phone) provided by these devices, software services and capabilities provided by these devices, and other capabilities of these devices. If the user sends a voice instruction "instruction of joining a video conference" in the study room at night, to attend a meeting with a colleague who is abroad and has a jet lag, the smart assistant may analyze and determine, according to the voice instruction, that the virtual aggregation device is currently required to have capabilities of video conference, video recording, display, sound pickup, and sound playing. Therefore, the central control device may form the virtual aggregation device by using the following composable capabilities:

video recording: a camera of the smart screen has a fixed position and a wide angle, and is suitable for a video conferencing scenario;
display: a screen of the smart screen has a fixed position and a large size, and is suitable for a video conferencing scenario;
sound pickup: the speaker is equipped with a microphone array, has a better pick-up effect, and can provide a space effect; and
sound playing: the headset can avoid a disturbing sound at night.

The central control device may separately configure the composable capabilities of the foregoing devices as input components of a video conference app in the mobile phone, and start the video conference app in the mobile phone. In this way, the app runs the function in a same manner as on a single phone, but the service is provided in a manner that is more suitable for the scenario and has better experience.

Example 2:

The central control device learns, based on information such as an operation history and a user profile, that the user often goes to the living room to query a schedule on the large screen after getting up in the morning. Initially, as a common interaction device, the mobile phone generally remains as a part of the virtual aggregation device. In addition, the user sleeps in the bedroom in the morning, and a sleep detection capability of a smartwatch worn by the user is configured into the virtual aggregation device to detect a sleep status of the user. Other devices sleep because there is no related execution or detection task.
If the watch detects a status change event of the user waking up, the smart assistant may perform the following operations: (1) determining that the service requirement of the user is: the expected user goes to the living room and broadcasts a schedule on a large screen; (2) determining that the service solution is: detecting a position of the user; and (3) performing a dynamic configuration: starting indoor position detection composable capabilities (such as millimeter wave radar and a camera), that is, configuring and activating these composable capabilities as a part of the virtual aggregation device.
If a composable capability related to indoor positioning detects a status change event of the user walking to the living room, the smart assistant may perform the following operations:

(1) determining that the service requirement of the user is browsing a schedule in the living room;
(2) determining that the service solution is: obtaining schedule information (provided by the mobile phone) and an explicit capability of presenting the schedule; and (3) then performing a dynamic configuration: configuring, based on a user preference (for example, the user prefers to use the large screen in the living room for display), a display capability (one of the composable capabilities) of the large screen as a part of the virtual aggregation device, that is, the virtual aggregation device is prepared in advance for display on the large screen to the user.

If the mobile phone detects a voice instruction "Broadcast a schedule" sent by the user, the smart assistant may perform the following operations: (1) determining that the service requirement of the user is: broadcasting a schedule; (2) determining that the service solution is: broadcasting schedule information (from the mobile phone) in a display manner (the smart screen) preferred by the user; and (3) quickly responding (without temporarily performing related preparations) and executing a task by using the composable capability because the composable capability that supports the service solution has been configured as the virtual aggregation device at this time.
In the foregoing example 2, the virtual aggregation device detects three status change events in total: the status change event of the user waking up, the status change event of the user walking to the living room, and the voice instruction "Broadcast a schedule". The status change event of the user waking up and the status change event of the user walking to the living room trigger the reconfiguration of the virtual aggregation device. The voice instruction "Broadcast a schedule" triggers, as the specific event, the virtual aggregation device to respond.
In some embodiments of this application, after the foregoing 107 is performed, that is, after the second device determines the to-be-executed task, if the current virtual aggregation device cannot support execution of the to-be-executed task, the reconfiguration of the virtual aggregation device may also be triggered. Specifically, the central control device may configure a composable capability that supports the to-be-executed task as the virtual aggregation device.

In embodiments of this application, after reconfiguring the virtual aggregation device, the central control device may further trigger a part of devices in the communication system 10 to prompt the user that the virtual aggregation device has been reconfigured currently. A prompt manner is not limited. For example, refer to FIG. 5M. After reconfiguring the virtual aggregation device, the central control device may trigger the electronic device (for example, the mobile phone) to display prompt information on the user interface 63, to prompt the user that the virtual aggregation device has been reconfigured currently. In addition, the user may tap a control 635 to view composable capabilities included in the currently reconfigured virtual aggregation device.

A gradual configuration adjustment manner of reconfiguring the virtual aggregation device can avoid starting a device composable capability that is not suitable for a target scenario. In one aspect, a related status change can be continuously sensed while device resource occupation is reduced, to avoid an information loss and ensure a correct response to the user. In another aspect, risks to user privacy caused by unnecessary information sensing can be avoided.

Through the foregoing process of reconfiguring the virtual aggregation device, a dynamic and adaptive reconfiguration of the virtual aggregation device can be controlled in a scenario in which the user status, the device status, and the environment status continuously change, so that the virtual aggregation device can accurately and personalizedly meet a determined or potential (not occurred) service requirement of the user.

It can be learned by comparing the foregoing processes of initializing the virtual aggregation device and reconfiguring the virtual aggregation device that, when the virtual aggregation device is initialized, the status and capability of the front-end virtual aggregation device are not provided or used, and when the virtual aggregation device is reconfigured, the status and capability of the front-end virtual aggregation device are provided or used.

S108: The central control device triggers a third device in the virtual aggregation device to execute the to-be-executed task that meets the user intention.

In some embodiments of this application, the central control device may select a part of or all resources in the virtual aggregation device to execute the to-be-executed task that meets the user intention. The part of or all resources may be referred to as a second resource. The second resource may include a resource from one electronic device, or may include resources from a plurality of electronic devices. There may be one or more second resources. The second resource is a composable capability, for example, may be a service composable capability.

In some embodiments of this application, the central control device may select a part of or all service composable capabilities in the configured virtual aggregation device to execute the to-be-executed task. In other words, the central control device may trigger the second device to match the to-be-executed task to an appropriate composable capability, and then trigger a corresponding device in which the composable capability is located to execute the to-be-executed task.

The central control device may randomly select, or select according to a specific policy, a part of the service composable capabilities from the service composable capabilities of the virtual aggregation device to execute the to-be-executed task.

Specifically, the central control device may select, with reference to one or more of the following, an appropriate service composable capability to execute the to-be-executed task: a user status, a device status, an environment status, a user profile, a global context, or a memory that is historically detected by the communication system 10.

For example, the foregoing policy may include any one or a combination of the following:

Policy 1: Composable capability activeness first.

Specifically, the central control device may select one or more composable capabilities with a relatively high activeness or a highest activeness to execute the to-be-executed task. For a manner of determining the activeness of the composable capability, refer to the foregoing description. In this way, a service composable capability with a relatively high activeness may be selected to execute the to-be-executed task.

Policy 2: Near user first.

Specifically, the central control device may select a service composable capability of a device that is closer to the user to execute the to-be-executed task. For a manner of determining a distance between the device and the user, refer to the foregoing description.

Policy 3: Same input device first.

Specifically, the central control device may preferentially select a service composable capability of the first device to execute the to-be-executed task.

In some embodiments, the central control device may select a service composable capability of a device that collects more critical information used to recognize a specific event, to combine the to-be-executed task. For example, if the device for detecting a voice instruction in S 106 includes a mobile phone A on a tea table that is farther away from the user and a mobile phone B held by the user, the central control device may select the mobile phone A with higher collected sound intensity to respond to the voice instruction of the user.

Policy 4: User habit first.

Specifically, the central control device may preferentially select, based on a user habit, a composable capability that is most frequently invoked in a history record to execute the to-be-executed task. In this way, a service composable capability usually used by the user may be selected to execute the to-be-executed task.

Policy 5: Inference and determining based on machine learning/deep learning.

Specifically, the central control device may collect data of association between the to-be-executed task and a started service composable capability within a specific time range, and predict, based on a machine learning/deep learning method and an input of the to-be-executed task, a model of a series of composable capabilities that the user may need to start. Then, based on the model, the to-be-executed task is used as an input to obtain the composable capability that needs to be started. This method can be implemented by referring to a sorting technology that has been widely used in a recommendation system. In addition, a multi-modality input needs to be considered as an extension of the to-be-executed task.

Policy 6: User selection first.

Specifically, the user may independently select a composable capability for executing the to-be-executed task, and the central control device may trigger the service composable capability selected by the user to execute the to-be-executed task. A manner of selecting, by the user, the composable capability for executing the to-be-executed task is not limited herein. For example, the composable capability may be selected by performing an operation on the central control device, or may be selected by using a voice or a gesture. In this way, a service composable capability may be selected based on an actual requirement of the user to execute the to-be-executed task.

Policy 7: Capability first.

Specifically, the central control device may select a service composable capability of a device having a stronger capability or more capabilities to execute the to-be-executed task. For example, the central control device may preferentially select a service composable capability of a device having a screen or a speaker to execute the to-be-executed task.

Policy 8: Preset default sorting first.

In some embodiments, the device or the user may preset a priority of a device for executing the to-be-executed task. For example, the priority may be preset when the device is delivered from the factory or preset by the user during use. The preset device priority may be stored in a cloud server, or may be stored in any one or more devices in the communication system 10. For example, in descending order of preset priorities, the devices may be: a speaker with a screen, a speaker without a screen, a smart screen, a head unit, a mobile phone, a PAD, and a watch.

In a specific implementation, the central control device may preferentially select, based on the preset device priority, a service composable capability of a device with a high priority, to execute the to-be-executed task.

Policy 9: User attention first.

Attention means the user observes the external world and senses a surrounding environment.

A device on which the user focuses is a focus device, and is a device on which a face, a line of sight, and a body of the user focus.

In some embodiments of this application, the central control device may select a service composable capability of the device on which the user focuses to execute the to-be-executed task.

The central control device may determine, by using environment information collected by one or more devices in the communication system 10, the device on which the user focuses. The environment information may be uni-modality information, or may be a combination of multi-modality information. For example, the environment information may include any one or more of the following: position information, a text, an audio, a video, and the like.

Specifically, a method for determining, by the central control device, the device on which the user focuses may include the following several types:

(1) The central control device determines, by using an image captured by a device B having a camera, the device on which the user focuses.

In the method (1), the device B having the camera may also be referred to as a fourth device.

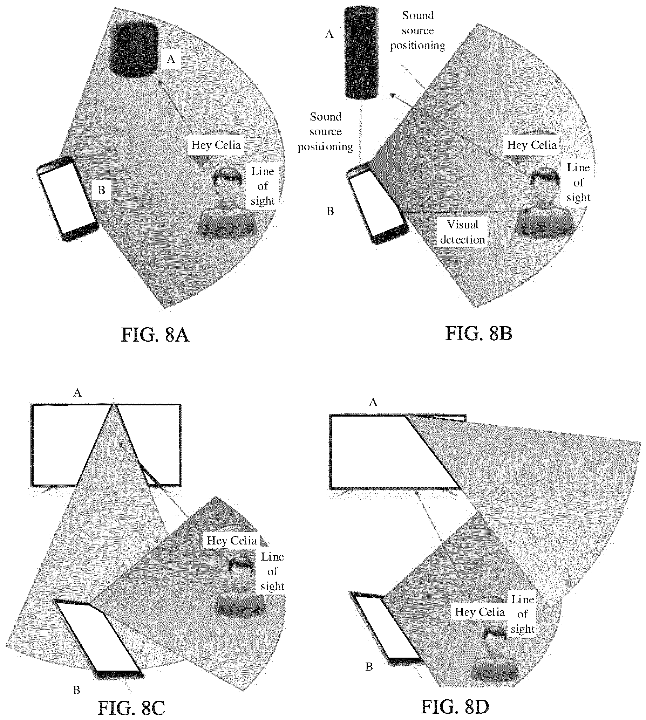

Refer to FIG. 8A. If the image captured by the device B includes a device A and the user, in other words, both the device A and the user are within a field of view of the device B, the central control device may determine, by using the following procedure, that the user focuses on the device A:

calculate world coordinates $Location\_user(X_u, Y_u, Z_u)$ of the user in a camera coordinate system of the device B;

calculate world coordinates $Location\_A(X_A, Y_A, Z_A)$ of the device A in the camera coordinate system of the device B; and

calculate a line-of-sight direction $Direction\_Gaze(Pitch_u, Yaw_u, Raw_u)$ of the user in the camera coordinate system of the device B.

Then, whether the user focuses on the device A may be calculated by using any one of the following methods:

Method 1: Calculate a direction similarity between a direction vector from the user to the device A and a line-of-sight direction, and if the direction similarity is greater than a threshold, determine that the user focuses on the device A.

Specifically, a space vector *Direction_user2A*($X_A$-$X_u$, $Y_A$-$Y_u$, $Z_A$-$Z_u$) from the user to the device A may be first calculated, and then the direction similarity between the direction vector from the user to the device A and the line-of-sight direction is calculated by using a similarity measurement method like a cosine similarity or a Euclidean distance.

Method 2: Calculate a distance between a landing point of the line of sight of the user on any coordinate plane of the device A and actual coordinates of the device A, and if the distance is less than a threshold, determine that the user focuses on the device A.

Specifically, an A_xy plane is used as an example. A landing point of the line of sight of the user on the A_xy plane is $Z'_{A\_B}$ , and a distance between $Z_A$ and $Z'_A$ is calculated. A calculation method of another plane is the same.

(2) The central control device determines, by using a device A having a microphone and a device B having a microphone and a camera, the device on which the user focuses.

In the method (2), the device A having the microphone may also be referred to as a fourth device, and the device B having the microphone and the camera may also be referred to as a fifth device.

Refer to FIG. 8B. If an image captured by the device B includes the user but does not include the device A, in other words, the user is within a field of view of the device B but the device A is not within the field of view of the device B, the central control device may determine, by using the following procedure, that the user focuses on the device A:

B locates an orientation $\alpha_1$ of A in a coordinate system B through sound source positioning;
A locates an orientation $\beta_1$ of the user in a coordinate system A through sound source positioning; and
B locates coordinates (x1, y1) of the user in the coordinate system B through visual detection.

According to (x1, y1), $\alpha_1$, and $\beta_1$, that is, known two angles and one edge of a triangle, (x2, y2), namely, coordinates of A in the coordinate system B, may be solved, to establish a relationship between the coordinate system A and the coordinate system B.

Further, the method in the previous scenario may be used to convert and map the line-of-sight direction of the user detected by the device B to the coordinate system A, and whether the user focuses on the device A is calculated by using the method in the scenario (1).

(3) The central control device determines, by using a device A and a device B that have a camera, the device on which the user focuses.

In the method (3), the device A having the camera may also be referred to as a fourth device, and the device B having the camera may also be referred to as a fifth device.

Refer to FIG. 8C. In some embodiments, if an image captured by the device A includes the device B, and an image captured by the device B includes the user, in other words, the device B is within a field of view of the device A and the user is within a field of view of the device B, the central control device may determine, by using the following procedure, that the user focuses on the device A:

$R_{A\to B}$ and $T_{A\to B}$ are transformation matrices for converting a coordinate vector (for example, normA=(x1, y1, z1)) in the coordinate system A into a coordinate vector (for example, normB=(x2, y2, z2)) in the coordinate system B: normB=normA•$R_{A\to B}$+$T_{A\to B}$.

A conversion relationship between the user and B is $R_{user\to B}$, and $T_{user\to B}$.

A line-of-sight direction *Gaze$_{coordB}$* of the user in the coordinate system B is calculated.

Then, a conversion relationship of the user face to the coordinate system A is calculated:

$$\text{normB} = \text{user} * R_{user\to B} + T_{user\to B}$$

$$\text{normA} = \text{normB} * R_{B\to A} + T_{B\to A}$$
$$= \text{user} * R_{user\to B} * R_{B\to A} + T_{user\to B} * R_{B\to A} + T_{B\to A}$$

The following can be obtained:

$$R_{user\to A} = R_{user\to B} * R_{B\to A}$$

$$T_{user \rightarrow A} = T_{user \rightarrow B} * R_{B \rightarrow A} + T_{B \rightarrow A}$$

Then, a line of sight of the user in the coordinate system A may be obtained as follows:

$$Gaze_{coordA} = Gaze_{coordB} * R_{user \rightarrow A} + T_{user \rightarrow A}$$

Then, it may be determined whether a line-of-sight landing point of the user is on the device A. If the line-of-sight landing point of the user is on the device A, it may be determined that the user focuses on the device A.

Refer to FIG. 8D. In some other embodiments, if an image captured by the device A does not include the user, and an image captured by the device B includes the user, in other words, the user is not within a field of view of the device A but is within a field of view of the device B, and there is an intersection between the field of view of the device A and the field of view of the device B, the central control device may determine, by using the following procedure, that the user focuses on the device A:

A and B determine, by using feature point matching or image matching, that the field of view of A and the field of view of B overlap.

A and B respectively obtain world coordinates of a matching point in respective coordinate systems through depth estimation.

A transformation relationship between the coordinate systems A and B is calculated by using epipolar constraint based on a common point in the coordinate systems A and B.

B obtains, through calculation, world coordinates and a line-of-sight direction of the user in the coordinate system B through visual detection.

World coordinates of A in the coordinate system B are obtained.

After a spatial mapping relationship between the coordinate system A and the coordinate system B is established, world coordinates and the line-of-sight direction of the user in the coordinate system B may be mapped to the coordinate system A. Then, whether the user focuses on the device A may be calculated by using the method in scenario (1).

The device A and the device B in the foregoing policy 9 may be any device in the communication system 10, or may be the first device selected by the central control device according to a specific policy. This is not limited herein.

It can be learned that, according to the foregoing policy 9, a service composable capability of the device on which the user focuses may be selected to execute the to-be-executed task, so that an interaction manner is more natural and more suitable for a user requirement. In addition, the user may alternatively adjust the line of sight to trigger the virtual aggregation device to select the device on which the user focuses to execute the to-be-executed task.

According to the foregoing several policies for determining the service composable capability for executing the to-be-executed task, when a to-be-executed task of a specific modality has a plurality of available composable capabilities or composable capabilities available to multi-device (namely, a plurality of devices), an appropriate service composable capability can be effectively selected to execute the to-be-executed task.

This is not limited to the foregoing several policies. In embodiments of this application, another policy may be used to select a service composable capability to execute the to-be-executed task. For example, the central control device may further select a service composable capability of a device closer to the central control device to execute the to-be-executed task, or select a service composable capability of a device that recently interacts with the central control device to execute the task.

A part of or all service composable capabilities selected by the central control device from the virtual aggregation device for executing the to-be-executed task may be referred to as a second composable capability, and a physical device in which the second composable capability is located is the third device.

There may be one or more second composable capabilities. There may also be one or more third devices. For example, in the home range, the central control device may determine the smart screen and the smart speaker as the third devices, trigger the smart screen to play an image, and trigger the smart speaker to play an audio.

In other words, the central control device may select, from the virtual aggregation device, a part of or all devices that have a capability for executing the to-be-executed task as the third device.

In some embodiments, in different scenarios (for example, the home range and the office), for a same to-be-executed task, second composable capabilities and third devices for executing the to-be-executed task may also be different.

If the central control device configures the virtual aggregation device in S105, the second composable capability of the virtual aggregation device is ready to be started in advance. Therefore, in S108, the central control device may quickly and conveniently trigger the third device to start the second composable capability to execute the to-be-executed task. It can be learned that, the virtual aggregation device is configured, so that efficiency of performing S 108 by the communication system 10 can be improved, to provide a better service for the user.

In embodiments of this application, S 108 may be delayed. In some embodiments, S108 may not be performed.

In embodiments of this application, the central control device may trigger, by sending a notification message (for example, broadcasting or multicasting) based on a connection between devices, the third device to start the second composable capability to execute the to-be-executed task. Specifically, the central control device may distribute, based on a result of selecting the composable capability, an instruction for executing the to-be-executed task to a third device in which each composable capability is located, and trigger the third device to execute the corresponding to-be-executed task according to an execution relationship between a plurality of to-be-executed tasks.

In some embodiments of this application, after determining the to-be-executed task corresponding to the user intention in S107, the third device may notify the third device of the to-be-executed task, so that the third device starts the second composable capability to execute the to-be-executed task. Herein, after determining the third device, the central control device may notify the second device of the third device, so that the second device notifies the third device of the to-be-executed task.

In some other embodiments of this application, if the central control device learns the to-be-executed task corresponding to the user intention, the central control device may directly trigger or notify the third device to execute the to-be-executed task.

The following lists several examples.

Example 1:

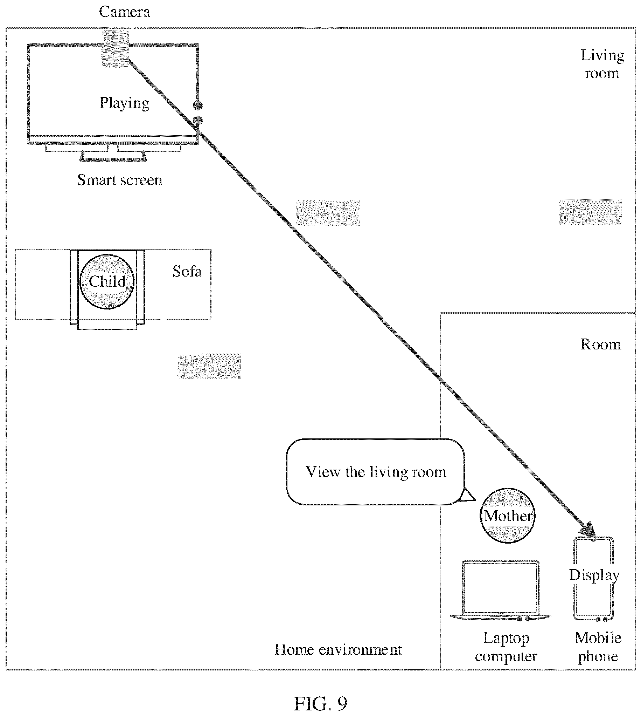

FIG. 9 shows a scenario of Example 1.

As shown in FIG. 9, it is assumed that a child watches TV and performs operations in a living room, and a mother works in a room and watches the child by using a smart screen camera in the living room. In this case, the virtual aggregation device may include a set of component capabilities in living room and room devices (this example involves the smart screen and a speaker in the living room, a mobile phone in the room, and devices related to a positioning capability for a person position in an environment). Initially, the virtual aggregation device schedules a related capability of the smart screen in the living room to serve a requirement of the child to watch TV. At the same time, because the mother is in the room, the virtual aggregation device needs to configure a related capability (for example, a capability of the mobile phone) to prepare for sensing a request of the mother.

If the mother says "View a situation in the living room" to the mobile phone in the room, a smart assistant can recognize an intention of "View the living room" and segment the intention into to-be-executed tasks of three modalities: watching a living room video, collecting a living room sound, and playing the living room sound.

There are a plurality of capability components in the current environment that may be used to perform the related tasks. Example are as follows.

Visual: Optional capability components of the virtual aggregation device include video recording capabilities of the smart screen and the mobile phone.

Audio: Optional capability components include audio capabilities of the smart screen, the mobile phone, and a speaker.

Display: Optional capability components include display capabilities of the smart screen and the mobile phone.

When selecting a corresponding device to execute the to-be-executed task, the smart assistant may select the following composable capabilities to execute the to-be-executed task:

Sound pickup capability of the speaker. In the living room, because the child is watching TV and may interact with the smart screen, display, sound playing, and sound pickup capabilities of the smart screen are occupied and are not considered. Therefore, the smart assistant may select another capability, for example, the sound pickup capability provided by the speaker.

Video recording capability of the smart screen. Although a part of the capabilities of the smart screen are occupied, the video recording capability is idle and available, and is the only choice for this type of capability in the living room. Therefore, this capability is selected to execute the task.

Playing capability of the mobile phone. The smart assistant may select the mobile phone to play an audio because only the mobile phone is available in the room or because the user is interacting with the mobile phone (sending the instruction).

In the foregoing example, when a part of the composable capabilities of the smart screen are occupied, the mother can use an idle composable capability to learn a visual situation in the living room. In the foregoing manner, a problem of composable capability allocation conflict can be resolved, and one physical device can be segmented into a plurality of composable capabilities to serve different tasks. That is, in embodiments of this application, each device can be managed and used based on a composable capability, and a plurality of users are allowed to use different composable capabilities of a same device at the same time.

Example 2:

It is assumed that the virtual aggregation device includes a set of composable capabilities in the living room and room devices. The mobile phone in the room receives a call from a relative of the user, and the smart assistant can recognize an intention "Answer the call". The smart assistant may first segment the intention "Answer the call" into a to-be-executed task of playing an audio. For the audio playing task, optional composable capabilities of the virtual aggregation device include: (1) an audio composable capability of the mobile phone; (2) an audio composable capability of the speaker; and (3) an audio composable capability of a large screen. The smart assistant may select an appropriate composable capability based on a matching degree to execute the to-be-executed task of playing an audio. For example, because the mobile phone is not used by the user in a period of time, it can be learned that the mobile phone is not a device expected by the user to execute the to-be-executed task. The large screen is playing an audio, and the audio composable capability of the speaker is an appropriate composable capability that provides a sound playing capability. Therefore, the smart assistant may distribute the to-be-executed task of playing the audio to the audio composable capability of the speaker, and distribute a volume adjustment task to a capability component conflicting with the audio composable capability.

By performing the foregoing steps S 107 and S 108, the virtual aggregation device can segment the user intention into a plurality of to-be-executed tasks, and then distribute the tasks to different composable capabilities of the virtual aggregation device, so that the capabilities of the virtual aggregation device can be fully used to provide a surround service with a wider range for the user.

In the multi-device based method for providing a service shown in FIG. 3, the first device, the second device, and the third device may include a same device, or may include different devices. Similarly, any one or more of the first resource, the second resource, and the third resource may all come from a same device, or may all or partially come from different devices. Any plurality of the first resource, the second resource, and the third resource may be the same or different. Any one or more of the first composable capability, the second composable capability, and the third composable capability may all come from a same device, or may all or partially come from different devices. Any plurality of the first composable capability, the second composable capability, and the third composable capability may be the same or different.

According to the multi-device based method for providing a service shown in FIG. 3, a cross-device task does not need to be executed based on instruction information exchange between separate voice assistants on different devices. Instead, a central control device uniformly schedules resources in a system, segments a recognized user intention into to-be-executed tasks, and distributes the to-be-executed tasks to an appropriate composable capability for execution. According to the technical solution, a process-based single-point execution manner can be changed to provide a surround service, so as to implement a dual-purpose device. In addition, the user intention and real-time scenario sensing information are also considered. Compared with that in the conventional technology, the method can reduce collaboration costs and support diversified and personalized task distribution.

In embodiments of this application, the communication system 10 may further perform the foregoing method based on a global context.

First, a global context-based interaction method is introduced. The interaction method may be applied to the foregoing steps S 107 and S 108.

Specifically, in the method, a plurality of rounds of interaction inputs may be received based on the first composable capability of the first device. The plurality of rounds of interaction inputs may come from a single device, or may come from a plurality of devices. The first composable capability may analyze the plurality of rounds of received interaction inputs to obtain the global context. Then, the third composable capability may determine a user intention based on the global context, so that the virtual aggregation device selects an appropriate second composable capability to execute a task corresponding to the user intention. The global in the global context may refer to all connected devices included in the communication system 10. For example, when the devices included in the communication system 10 are all connected devices in a user's home, the global refers to all connected devices in the user's home. The global context refers to device status information, environment information, and/or user information detected by each interaction composable capability of all the connected devices included in the communication system 10. For example, the device status information may refer to device statuses such as a battery status of the electronic device, a use status of the electronic device, and a status indicating whether a composable capability of the electronic device is available. The environment information may refer to environment statuses such as a temperature change, an illumination change, and a biological activity situation in the area that are detected by the composable capability. The user information may refer to an explicit intention input or an implicit intention input of the user, for example, a voice message entered by the user, gesture information entered by the user, and a habit of the user.

In a multi-device scenario, by using the interaction method, the virtual aggregation device obtains an interaction input and an interaction history from a plurality of devices, and performs unified management on the global context, so that the communication system 10 can more clearly recognize a real intention of the user based on the foregoing global context, to improve cross-device control efficiency.

The following uses an example in which a multi-device scenario includes a large screen, a mobile phone, a smartwatch, a smart speaker, and a doorbell to describe the global context-based interaction method provided in embodiments of this application with reference to the accompanying drawings.

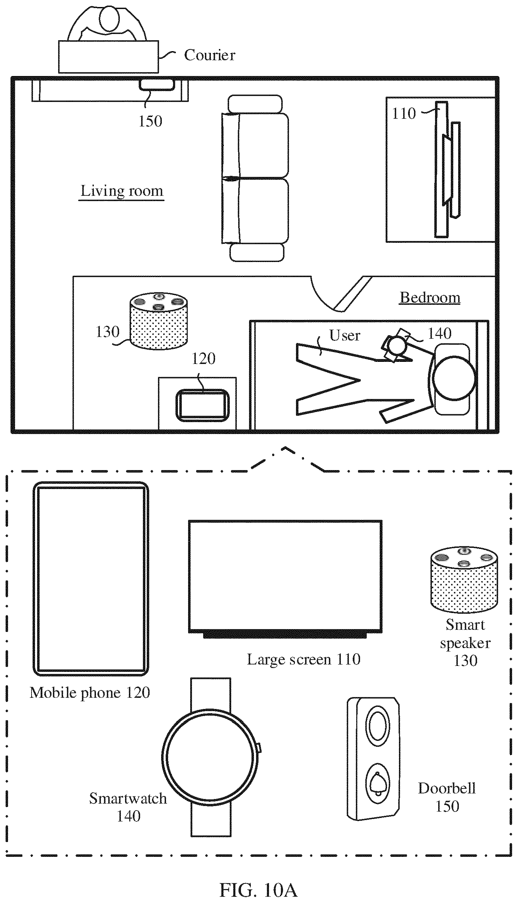

As shown in FIG. 10A, a possible multi-device scenario in embodiments of this application may include a large screen 110, a mobile phone 120, a smart speaker 130, a smartwatch 140, a doorbell 150, and the like. The large screen 110 is located in a living room, the mobile phone 120 and the smart speaker 130 are located in a bedroom in which a user is located, the smartwatch 140 is worn on an arm of the user, and the doorbell 150 is located at a living room gate. In this case, a courier outside the living room gate is triggering the doorbell 150. Devices may be connected in a wired or wireless manner to exchange data between the devices. In the multi-device scenario, global refers to the large screen 110, the mobile phone 120, the smart speaker 130, the smartwatch 140, and the doorbell 150 listed above. Composable capabilities of the foregoing devices may be included in the communication system 10 that covers the foregoing room area. For example, the composable capabilities may include a near-field voice input capability, a far-field voice input capability, a user physiological signal detection capability (for example, electroencephalogram detection, electromyographic detection, and heart rate detection), one or more sensors, a speech recognition capability, a device status detection capability, a music playing capability, a video playing capability, and the like. In this example scenario, a part of or all composable capabilities of the plurality of devices may form a virtual aggregation device. In the virtual aggregation device, the large screen 110 is used as a central control device. In other words, in the communication system 10 that includes one or more of the composable capabilities of the large screen 110, the mobile phone 120, the smart speaker 130, the smartwatch 140, and the doorbell 150, the large screen 110 may schedule and control the composable capabilities of the large screen 110, the mobile phone 120, the smart speaker 130, the smartwatch, and the doorbell 150. The virtual aggregation device may obtain a global context based on the foregoing composable capabilities, and perform unified management on the global context, to determine a user intention based on the global context, and select and control an appropriate composable capability to perform a corresponding function.

It should be noted that the multi-device scenario shown in FIG. 10A is merely used as an example for describing embodiments of this application, and does not constitute any limitation on this application. The multi-device scenario may further include more electronic devices, for example, a refrigerator, an air conditioner, and a computer. Devices included in the multi-device scenario are not limited in this application.

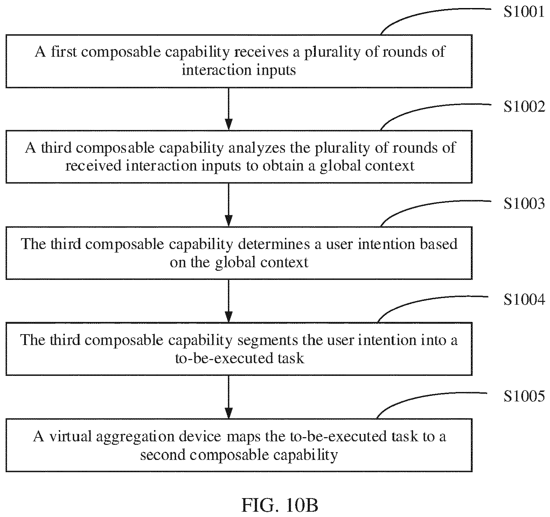

Based on the example multi-device scenario shown in FIG. 10A and with reference to the flowchart shown in FIG. 10B, a manner of obtaining and applying the global context in the interaction method is described. In the following, a first composable capability may be a first resource, a second composable capability may be a second resource, a third composable capability may be a third resource, and a first event may be a doorbell input event.

First, a manner of obtaining the global context is described.

S1001: The first composable capability receives a plurality of rounds of interaction inputs.

Specifically, in embodiments of this application, a first composable capability of a first device may receive the plurality of rounds of interaction inputs, and each round of interaction input may include related information of the round of interaction input (for example, occurrence time of the round of interaction input, an electronic device composable capability corresponding to the round of interaction input, and content of the round of interaction). There may be one or more first devices. The first composable capability may be one or more interaction composable capabilities of the first device. Categories included in the interaction composable capabilities may be shown in FIG. 4.

For a description that the central control device randomly selects, or selects according to a specific policy, a part of interaction composable capabilities from the interaction composable capabilities of the virtual aggregation device to detect a specific event, refer to the foregoing description. Details are not described herein again.

The multi-device scenario shown in FIG. 10A is used as an example. The interaction composable capabilities configured for the current virtual aggregation device may include the near-field voice input capability, the far-field voice input capability, the user physiological signal detection capability (for example, electroencephalogram detection, electromyographic detection, and heart rate detection), and the like. The interaction composable capabilities may receive an input from the doorbell 150 that doorbell triggering is detected and an input that a person is detected at the living room gate, an input from the large screen 110 that no person is detected in the living room, an input from the smartwatch 140 that the user is asleep detected based on a heart rate of the user, an input from the mobile phone 120 that a fully-charged battery status of the mobile phone 120 is detected, an input that a playing capability of the mobile phone 120 is available, and an input that the mobile phone 120 is used 30 minutes ago. In other words, the plurality of rounds of interaction inputs come from interaction composable capabilities of a plurality of devices such as an interaction composable capability of the large screen 110 (for example, a visual interaction composable capability or a voice interaction composable capability), an interaction composable capability of the mobile phone 120 (for example, a touch interaction composable capability or a posture interaction composable capability), an interaction composable capability of the smartwatch 140 (for example, a physiological signal interaction composable capability), and an interaction composable capability of the doorbell 150 (for example, a touch interaction composable capability). The plurality of rounds of interaction inputs may have a plurality of different modalities. For example, an interaction modality of an input that the doorbell is triggered in the doorbell 150 may be a doorbell triggering event, an interaction modality of an input that no person is in the living room in the large screen 110 may be a visual interaction input, and an interaction modality of an input that the user is asleep in the smartwatch 140 may be a physiological signal interaction input.

S1002: The third composable capability analyzes the plurality of rounds of received interaction inputs to obtain the global context.

Specifically, a second device may perform analysis by using the third composable capability based on a sequence of occurrence time of each round of interaction input, to determine the global context. The global context may include one or more of the following: time of receiving each round of interaction input, the first composable capability for receiving each round of interaction input, interaction content of each round of interaction input, interaction content of each round of interaction input, physiological feature information of a user corresponding to each round of interaction input, device information of an electronic device to which the first composable capability belongs (that is, the first device), or device information of a target device controlled by the interaction input.

The global context may be stored on a specified device. The specified device may be the central control device in the virtual aggregation device. In a possible implementation, if a storage space of the central control device is insufficient to store the global context, the global context may be stored in a non-central control device (for example, the mobile phone 120 or the smart speaker 130 shown in FIG. 10A) with sufficient storage resources. The non-central control device storing the global context may provide a program and/or an interface for accessing the global context, so that the third composable capability may determine the user intention based on the global context.

The multi-device scenario shown in FIG. 10A is used as an example. The first device may be the large screen 110. The global context obtained by the first composable capability may be shown in Table 4.

**Table 4**

| Interaction input identifier | Occurrence time | Composable capability of a corresponding electronic device | Interaction content |
|---|---|---|---|
| 1 | 13:03:12 | Button input capability of the doorbell 150 | The doorbell is triggered |
| 2 | 13:03:14 | Infrared image detection capability of the large screen 110 | There is no person in the living room |
| 3 | 13:03:16 | Heart rate input capability of the smartwatch 140 | The user is asleep |
| ... | | | |

As shown in Table 4, the occurrence time of the interaction input identified as "1" is 13:03:12, the composable capability of the electronic device corresponding to the interaction input is the button input capability of the doorbell 150, and the interaction content is that the doorbell is triggered; the occurrence time of the interaction input identified as "2" is 13:03:14, the composable capability of the electronic device corresponding to the interaction input is the infrared image detection capability of the large screen 110, and the interaction content is that there is no person in the living room; the occurrence time of the interaction input identified as "3" is 13:03:16, the composable capability of the electronic device corresponding to the interaction input is the heart rate input capability of the smartwatch 140, and the interaction content is that the user is asleep; and the like.

The global context that includes the plurality of rounds of interaction inputs identified as "1", "2", and "3" shown in Table 4 may be stored on the central control device, namely, the large screen 110, in the multi-device scenario shown in FIG. 10A.

After obtaining the global context, the second device may recognize the user intention based on the global context by using the third composable capability, segment the user intention into to-be-executed tasks, and enable the virtual aggregation device to map the to-be-executed tasks to an appropriate second composable capability. A specific procedure may be shown in S1003 to S1005.

S1003: The third composable capability determines the user intention based on the global context.

Specifically, the second device may recognize, by using the third composable capability based on the obtained global context, the user intention indicated by the first event.

The multi-device scenario shown in FIG. 10A is used as an example. The second device may be the large screen 110. The large screen 110 may recognize, based on the obtained global context, that a current environment status is that there is a person at the living room gate, a doorbell input is triggered, and there is no person moving in the living room, a current status of the user is asleep, and a current status of the mobile phone 120 is that the battery is fully charged, the playing capability is available, and the mobile phone 120 is used by the user 30 minutes ago. Therefore, the large screen 110 may determine, by using the third composable capability based on the global context, that the user intention indicated by the first event, namely, the doorbell input event, is "reminding the user that a person outside the living room gate requests to open the door".

S1004: The third composable capability segments the user intention into to-be-executed tasks.

Specifically, the second device may segment the user intention into the to-be-executed tasks by using the third composable capability, so that the virtual aggregation device maps the to-be-executed tasks to the appropriate second composable capability.

The multi-device scenario shown in FIG. 10A is used as an example. The user intention determined in step S1003 is "reminding the user that a person outside the living room gate requests to open the door". The large screen 110 may segment the user intention into a plurality of tasks by using a task mapping module in a service response component, for example, a task of outputting a vibration reminder to the user, a task of playing a picture outside the door, and a task of outputting a doorbell prompt tone.

S1005: The virtual aggregation device maps the to-be-executed tasks to the second composable capability.

Specifically, the virtual aggregation device may select, based on the determined user intention and/or the to-be-executed tasks, an appropriate second composable capability of a third device to execute the to-be-executed tasks. There may be one or more third devices.

The multi-device scenario shown in FIG. 10A is used as an example. The large screen 110 may map the to-be-executed tasks determined in S1004 to a second composable capability of one or more third devices. For example, the second composable capability may be a motor vibration capability of the smartwatch 140, a music playing capability of the mobile phone 120, and a video playing capability of the mobile phone 120. The smartwatch 140 may output the vibration reminder based on the motor vibration capability, the mobile phone 120 may output the doorbell prompt tone in ascending order of volumes based on the music playing capability, the mobile phone 120 may output, based on the video playing capability, the picture outside the living room gate that is obtained based on the doorbell 150, and the like.

In a possible implementation, when the interaction information includes a missing coreference or a missing slot, the third composable capability may perform a search based on the stored global context and in a specified order of interaction inputs (for example, in descending order of occurrence time of the interaction inputs), and perform matching analysis on stored historical interaction information and current interaction information according to a specified matching rule, to obtain a basis for analyzing the missing slot and recognizing the missing reference, and determine the user intention. A specific procedure in this implementation is described in detail in the following embodiments. Details are not described herein again.

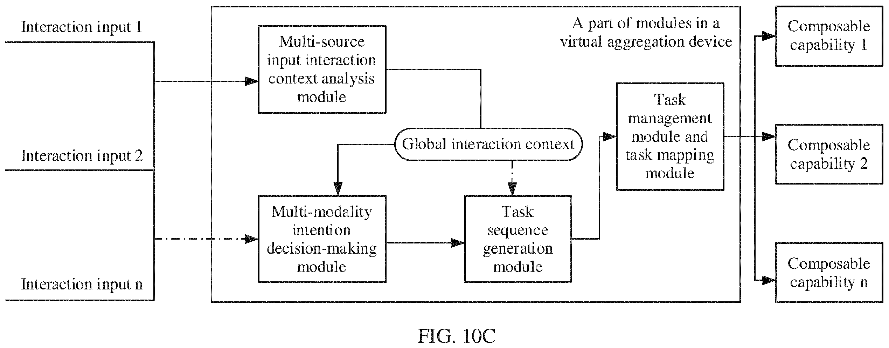

The following describes a software architecture applied to the global context-based interaction method according to an embodiment of this application. The software architecture may be used in the embodiment shown in FIG. 10C.

FIG. 10C is an example of a schematic diagram of the software architecture. As shown in FIG. 10C, the software architecture may include a multi-source input interaction context analysis module, a multi-modality intention decision-making module, a task sequence generation module, a task management module, and a task mapping module.

Specifically, when a plurality of rounds of interaction inputs come from interaction composable capabilities of a plurality of electronic devices, the multi-source input interaction context analysis module may receive the plurality of rounds of interaction inputs for analysis, to obtain the global context. When the global context has a plurality of modalities, the multi-modality intention decision-making module may obtain, through analysis, an intention recognition result based on the global context, to determine a user intention. Then, the task sequence generation module may control, based on the intention recognition result by using the task management module and the task mapping module, one or more composable capabilities to perform corresponding functions. Optionally, when the global context is a single modality, the task sequence generation module may control, by using the task management module and the task mapping module based on the user intention determined based on the global context, one or more composable capabilities to perform corresponding functions.

In a possible implementation, when the plurality of rounds of interaction inputs come from an interaction composable capability of a single electronic device, the multi-modality intention decision-making module may obtain the intention recognition result based on the plurality of rounds of interaction inputs, to determine the user intention. Then, the task sequence generation module may control, based on the intention recognition result by using the task management module and the task mapping module, one or more composable capabilities to perform corresponding functions.

According to the global context-based interaction method provided in embodiments of this application, the virtual aggregation device can more accurately recognize the user intention according to a user instruction and based on user status information, device status information, and/or environment status information that are received across devices. In addition, the virtual aggregation device may dynamically adjust and optimize a combination configuration of composable capability components in advance based on the received user status information, device status information, and/or environment status information, to shorten an instruction response delay in a multi-device scenario, and support an active service and an implementation of a long-term task in the following embodiments.

It should be noted that the foregoing software architecture provided in this embodiment of this application is merely used as an example for explaining this application. In actual application, the software architecture may include more or fewer modules than those provided in this embodiment of this application, or may include other modules. Combinations and information exchange between modules that are different from those in this embodiment of this application may alternatively exist. This is not limited in this application.

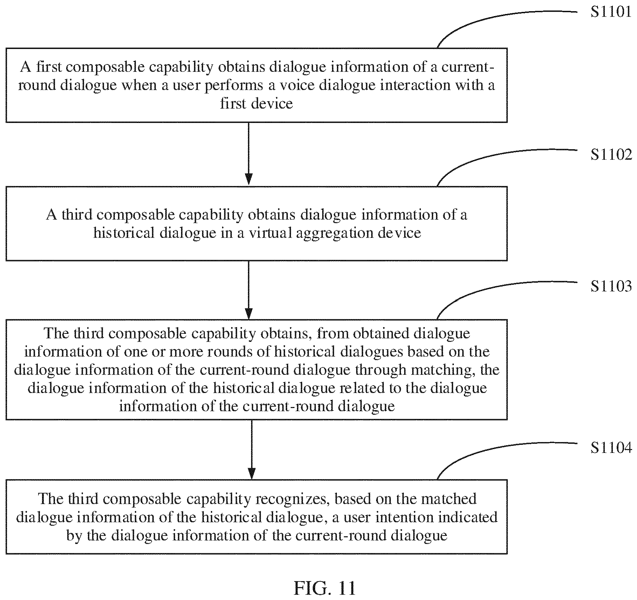

The following describes a method for performing matching analysis on stored historical interaction information and current interaction information according to a specified matching rule according to an embodiment of this application. For example, in the multi-device scenario shown in FIG. 10A, an interaction input is a voice dialogue interaction. FIG. 11 shows an example of a specific procedure of the matching analysis method according to an embodiment of this application. In this embodiment, an interaction input may include a historical input and a current input. A global context may be generated based on the historical input and the current input. Therefore, the global context may include historical interaction information and current-round interaction information. Historical interaction information associated with the current-round interaction information may be referred to as first historical interaction information. In an example in which the interaction input is a voice dialogue interaction, the historical input may be a historical voice dialogue input, the current input may be a current voice dialogue input, the historical interaction information may be dialogue information of a historical dialogue, and the current-round interaction information may be dialogue information of a current-round dialogue. A first event may be a current voice dialogue interaction event.

As shown in FIG. 11, the method may specifically include the following steps.

S1101: A first composable capability obtains dialogue information of a current-round dialogue when a user performs a voice dialogue interaction with a first device.

Specifically, the first device may obtain the dialogue information of the current-round dialogue based on the first composable capability (for example, a voice input capability).

For example, when the user performs a dialogue with the mobile phone 120, the first device may be the mobile phone 120, and the first composable capability may be a near-field voice input capability of the mobile phone 120. The first composable capability may obtain dialogue information of a current-round dialogue when the user performs a dialogue with the mobile phone 120.

In this step, the dialogue information of the current-round dialogue when the user performs the dialogue with the first device may include: dialogue content of the current-round dialogue, occurrence time of the current-round dialogue, an occurrence place of the current-round dialogue, device information (for example, a device name and a device identifier) of the first device, device information of a target device to be controlled in the current-round dialogue, physiological feature information of the user who sends the current-round dialogue, and the like. Optionally, when the target device to be controlled is not explicitly indicated in the current-round dialogue, in the dialogue information of the current-round dialogue, the device information of the target device to be controlled in the current-round dialogue may be empty.

The dialogue content of the current-round dialogue may include input information of the user in the current-round dialogue. The input information may be one or more voices sent by the user, or may be a text/word message converted from the one or more voices sent by the user. Optionally, the dialogue content of the current-round dialogue may further include a voice or a text replied by the first device to the user in the current-round dialogue.

The occurrence time of the current-round dialogue may be time at which the first device receives a voice message entered by the user in the current-round dialogue.

The occurrence place of the current-round dialogue may be a place at which the first device is located. For example, the user performs the current-round dialogue with the mobile phone 120. In this case, the occurrence place of the current-round dialogue may be a bedroom in which the mobile phone 120 is located.

The device information of the first device may be device information of an electronic device that performs a dialogue interaction with the user. For example, when the user performs the current-round dialogue with the mobile phone 120, the device information of the electronic device is device information of the mobile phone 120.

The device information of the target device to be controlled in the current-round dialogue may be device information of a target device that is actually controlled by the input information of the user in the current-round dialogue. For example, if the user performs the current-round dialogue with the mobile phone 120, and sends a voice instruction "Stop playing the large screen", the device information of the target device may be device information of the large screen 110. In a possible implementation, if the user performs the current-round dialogue with the mobile phone 120, and sends a voice instruction "Stop playing", the device information of the target device to be controlled in the current-round dialogue may be empty.

The physiological feature information of the user who sends the current-round dialogue may be voiceprint information of the user, a face profile of the user, or the like. For example, the user performs the current-round dialogue with the mobile phone 120. In this case, the physiological feature information of the user in the current-round dialogue is voiceprint information of a user currently performing a voice interaction with the mobile phone 120.

S1102: A third composable capability obtains the dialogue information of the historical dialogue in a virtual aggregation device.

Specifically, a second device may obtain the dialogue information of the historical dialogue in the virtual aggregation device based on the third composable capability.

The multi-device scenario shown in FIG. 10A is used as an example. The third composable capability may obtain the dialogue information of the historical dialogue stored in the virtual aggregation device in the foregoing scenario in FIG. 10A. The dialogue information of the historical dialogue may come from a voice input capability of the large screen 110, a voice input capability of the mobile phone 120, a voice input capability of the smart speaker 130, a voice input capability of the smartwatch 140, a voice input capability of the doorbell 150, and the like. In other words, when the user performs a dialogue interaction with the voice input capabilities of the foregoing devices, the third composable capability may obtain dialogue information received by using the devices, and store the dialogue information in the virtual aggregation device (for example, may store the dialogue information in a central control device, namely, the large screen 110, of the virtual aggregation device).

In this step, the third composable capability may obtain dialogue information of one or more rounds of historical dialogues. The dialogue information of each round of historical dialogue may include: dialogue content of the round of historical dialogue, occurrence time of the round of historical dialogue, an occurrence place of the round of historical dialogue, device information (for example, a device name and a device identifier) of an electronic device that receives the round of historical dialogue, device information of a target device to be controlled in the round of historical dialogue, physiological feature information of a user who sends the round of historical dialogue, and the like.

The dialogue content of the round of historical dialogue may include input information of the user in the round of historical dialogue. The input information may be one or more voices sent by the user, or may be a text/word converted from the one or more voices sent by the user. Optionally, dialogue content of each round of historical dialogue may further include a voice or text replied to the user by an electronic device to which a voice input capability component belongs in the round of historical dialogue.

The occurrence time of the round of historical dialogue may be time of receiving the round of historical dialogue.

The occurrence place of the round of historical dialogue may be a place at which a device receiving the round of historical dialogue is located. The multi-device scenario shown in FIG. 10A is used as an example. If a device receiving a round of historical dialogue is the large screen 110, and the large screen 110 is located in a living room, an occurrence place of the round of historical dialogue may be the living room.

Device information of the electronic device receiving the round of historical dialogue may be device information of an electronic device that performs the round of historical dialogue with the user. For example, when the user performs a round of historical dialogue with the large screen 110, the device information of the electronic device is the device information of the large screen 110.

The device information of the target device to be controlled in the round of historical dialogue may be device information of a target device that is actually controlled by the input information of the user in the round of historical dialogue. For example, if the user performs a round of historical dialogue with the large screen 110, and sends a voice instruction "Open the large screen", the device information of the target device may be the device information of the large screen 110.

The physiological feature information of the user who sends the round of historical dialogue may be voiceprint information of the user, a face profile of the user, or the like. For example, the user performs a round of historical dialogue with the large screen 110. In this case, the physiological feature information of the user in the round of historical dialogue is voiceprint information of a user who performs a voice interaction with the large screen 110 in the round of historical dialogue.

S1103: The third composable capability obtains, from the obtained dialogue information of the one or more rounds of historical dialogues based on the dialogue information of the current-round dialogue through matching, the dialogue information of the historical dialogue related to the dialogue information of the current-round dialogue.

In an example of this embodiment, the dialogue information of the historical dialogue related to the dialogue information of the current-round dialogue may be referred to as first historical interaction information.

Specifically, in this step, a procedure of obtaining, through matching based on the current-round dialogue from the information of the one or more rounds of historical dialogues, the dialogue information of the historical dialogue related to the dialogue information of the current-round dialogue may include: comparing and matching, according to a specified matching rule, the obtained dialogue information of the one or more rounds of historical dialogues with the dialogue information of the current-round dialogue, to obtain the dialogue information of the historical dialogue related to the dialogue information of the current-round dialogue.

For example, in a possible implementation, a specific specified matching rule may be described as Rule 1, Rule 2, Rule 3, Rule 4, and Rule 5. For one or more rounds of obtained historical dialogues, when dialogue information of a round of historical dialogue and the dialogue information of the current-round dialogue meet one or more of the following rules, the third composable capability may determine that the dialogue information of the round of historical dialogue is related to the dialogue information of the current-round dialogue.

Rule 1: If physiological feature information of a user in the round of historical dialogue is the same as the physiological feature information of the user in the current-round dialogue, the third composable capability may determine that the user recognized based on the round of historical dialogue and the user recognized based on the current-round dialogue are a same user. In other words, the dialogue information of the historical dialogue related to a first user that triggers an input of the current-round dialogue may be considered as the first historical interaction information.

Rule 2: An interval between occurrence time of the round of historical dialogue and the occurrence time of the current-round dialogue is less than duration 1 (which may also be referred to as first duration), and device information of an electronic device (which may also be referred to as a sixth device) receiving the round of historical dialogue is the same as the device information of the first device. The duration 1 may be 3 minutes, 5 minutes, or the like. A specific value of the duration 1 is not limited in this application. Historical interaction information that meets the rule may be considered as the first historical interaction information.

Rule 3: The interval between the occurrence time of the round of historical dialogue and the occurrence time of the current-round dialogue is less than duration 2 (which may also be referred to as the first duration), and the electronic device (which may also be referred to as the sixth device) receiving the round of historical dialogue is a near-field device of the first device. The duration 2 may be 3 minutes, 5 minutes, or the like. A value of the duration 2 may be the same as the value of the duration 1, or may be different from the value of the duration 1. This is not limited in this application. Historical interaction information that meets the rule may be considered as the first historical interaction information.

Rule 4: The interval between the occurrence time of the round of historical dialogue and the occurrence time of the current-round dialogue is less than duration 3 (which may also be referred to as second duration), and device information of a target device controlled in the round of historical dialogue is the same as the device information of the target device to be controlled in the current-round dialogue. The duration 3 may be 3 minutes, 5 minutes, or the like. A value of the duration 3 may be the same as the value of the duration 1/duration 2, or may be different from the value of the duration 1/duration 2. This is not limited in this application. That is, when a target device of the historical interaction information received at second time is the target device of the current-round interaction information, and an interval between the second time and time of receiving the current-round interaction information is less than the second duration, the historical interaction information may be considered as second historical interaction information, and the second historical interaction information is included in the first historical information.

Rule 5: The interval between the occurrence time of the round of historical dialogue and the occurrence time of the current-round dialogue is less than duration 4 (which may also be referred to as the second duration), and the target device controlled in the round of historical dialogue is a near-field device of the target device to be controlled in the current-round dialogue. The duration 4 may be 3 minutes, 5 minutes, or the like. A value of the duration 4 may be the same as the value of the duration 1/duration 2/duration 3, or may be different from the value of the duration 1/duration 2/duration 3. This is not limited in this application. That is, when the target device of the historical interaction information received at the second time is the near-field device of the target device of the current-round interaction information, and the interval between the second time and the time of receiving the current-round interaction information is less than the second duration, the historical interaction information may be considered as the second historical interaction information, and the second historical interaction information is included in the first historical information.

It should be noted that Rule 1 to Rule 5 are merely used as examples for explaining this application, and do not constitute any limitation on this application.

A near-field device of the electronic device refers to another electronic device that can be discovered by the electronic device by using a near-field recognition capability. The near-field recognition capability may be provided by a near-field device recognition module on the electronic device. The near-field device recognition module may be a capability module for detecting whether the electronic device and another electronic device are connected to a same local area network, or may be a capability module for recognizing another electronic device based on a Bluetooth or broadcast discovery capability. For example, the mobile phone 120 and the smart speaker 130 each may be configured with a near-field device recognition module. The mobile phone 120 may recognize the smart speaker 130 based on the near-field device recognition module on the mobile phone 120, and the smart speaker 130 may recognize the mobile phone 120 based on the near-field device recognition module on the smart speaker 130. In this case, the mobile phone 120 is a near-field device of the smart speaker 130, and the smart speaker 130 is a near-field device of the mobile phone 120.

When each device recognizes a corresponding near-field device based on a near-field device recognition module of the device, the virtual aggregation device may store a mapping relationship between device information of the device and device information of the corresponding near-field device. When the third composable capability matches the dialogue information of the current-round dialogue with dialogue information of a round of historical dialogue according to the specified matching rule, the third composable capability may query, according to the mapping relationship, whether information about the near-field device of the first device includes device information of an electronic device receiving the round of historical dialogue. If the information of the near-field device of the first device includes the device information of the electronic device receiving the round of historical dialogue, the electronic device receiving the round of historical dialogue is the near-field device of the first device. If the information about the near-field device of the first device does not include the device information of the electronic device receiving the round of historical dialogue, the electronic device receiving the round of historical dialogue is not the near-field device of the first device. Alternatively, when the third composable capability matches the dialogue information of the current-round dialogue with dialogue information of a round of historical dialogue according to the specified matching rule, the third composable capability may query, according to the mapping relationship, whether information about the near-field device of the target device to be controlled in the current-round dialogue includes device information of a target device actually controlled in the round of historical dialogue. If the information about the near-field device of the target device to be controlled in the current-round dialogue includes the device information of the target device actually controlled in the round of historical dialogue, the target device actually controlled in the round of historical dialogue is the near-field device of the target device to be controlled in the current-round dialogue. If the information about the near-field device of the target device to be controlled in the current-round dialogue does not include the device information of the target device actually controlled in the round of historical dialogue, the target device actually controlled in the round of historical dialogue is not the near-field device of the target device to be controlled in the current-round dialogue.

For example, the current-round dialogue is Sc, and a round of historical dialogue is So. An electronic device receiving Sc is the first device. A process of matching dialogue information of Sc with dialogue information of So according to the specified matching rule may be as follows:

When voiceprint information of a user in the dialogue information of Sc is the same as voiceprint information of a user in the dialogue information of So, the third composable capability may determine that the user recognized based on the dialogue information of Sc and the user recognized based on the dialogue information of So are a same user, and use the dialogue information of So as dialogue information related to the dialogue information of Sc.

When an interval between occurrence time of Sc and occurrence time of So is less than the duration 1, and device information of an electronic device receiving So is the same as the device information of the first device, the third composable capability uses the dialogue information of So as the dialogue information related to the dialogue information of Sc.

When the interval between the occurrence time of Sc and the occurrence time of So is less than the duration 2, and the electronic device receiving So is the near-field device of the first device, the third composable capability uses the dialogue information of So as the dialogue information related to the dialogue information of Sc.

When the interval between the occurrence time of Sc and the occurrence time of So is less than the duration 3, and device information of a target device actually controlled in So is the same as device information of a target device to be controlled in Sc, the third composable capability uses the dialogue information of So as the dialogue information related to the dialogue information of Sc.

When the interval between the occurrence time of Sc and the occurrence time of So is less than the duration 4, and the target device actually controlled in So is a near-field device of the target device to be controlled in Sc, the third composable capability uses the dialogue information of So as the dialogue information related to the dialogue information of Sc.

In a possible implementation, in a multi-device scenario, the electronic device may be further classified into a public device and a private device. The public device may refer to an electronic device that can be used by a plurality of users. The private device may refer to an electronic device that is used only by a specified user, and a user other than the specified user does not use the electronic device without authorization of the specified user. Based on the classification of the public device and the private device in the multi-device scenario, the specified matching rule may include Rule 6, Rule 7, Rule 8, and Rule 9.

Rule 6: If the physiological feature information of the user in the round of historical dialogue is the same as the physiological feature information of the user in the current-round dialogue, the electronic device receiving the round of historical dialogue is a public device or a private device of the user.

Rule 7: If the physiological feature information of the user in the round of historical dialogue is different from the physiological feature information of the user in the current-round dialogue, the electronic device receiving the round of historical dialogue is a public device.

Rule 8: Dialogue content of the round of historical dialogue is content related to a specified service (for example, weather query and news playing).

Rule 9: Both the electronic device receiving the round of historical dialogue and the electronic device actually controlled in the round of historical dialogue are public devices.

That is, when a public device and a private device are classified in the multi-device scenario, the third composable capability may first determine whether each round of historical dialogue meets any one of Rule 6 to Rule 9, and then obtain, through matching according to Rule 1 to Rule 5 from the historical dialogue meeting any one of Rule 6 to Rule 9, the dialogue information of the historical dialogue related to the dialogue information of the current-round dialogue.

In a possible implementation, when determining that a round of historical dialogue meets Rule 6 or Rule 7, the third composable capability may determine dialogue information of the round of historical dialogue as the dialogue information of the historical dialogue related to the dialogue information of the current-round dialogue.

S1104: The third composable capability recognizes, based on the matched dialogue information of the historical dialogue, a user intention indicated by the dialogue information of the current-round dialogue.

In this example, the first event may be the current voice dialogue interaction event. The current voice dialogue interaction event corresponds to the dialogue information of the current-round dialogue. The third composable capability may recognize, based on the matched dialogue information of the historical dialogue, the user intention indicated by the dialogue information of the current-round dialogue.

In a possible implementation, if the dialogue information of the current-round dialogue includes a missing coreference and/or a missing slot, the matched dialogue information of the historical dialogue may be used as a basis for analyzing the missing slot and/or a basis for recognizing the missing reference, to determine the user intention indicated by the dialogue information of the current-round dialogue. For example, if the dialogue information of the current-round dialogue includes "Book an air ticket", the dialogue information of the current-round dialogue lacks position slot information. The matched dialogue information of the historical dialogue includes "Check the weather in Beijing". In this case, it may be recognized, based on the dialogue information of the historical dialogue, that the missing position slot information in the dialogue information of the current-round dialogue is "Beijing". Therefore, the user intention indicated by the dialogue information of the current-round dialogue is "Book an air ticket to Beijing".

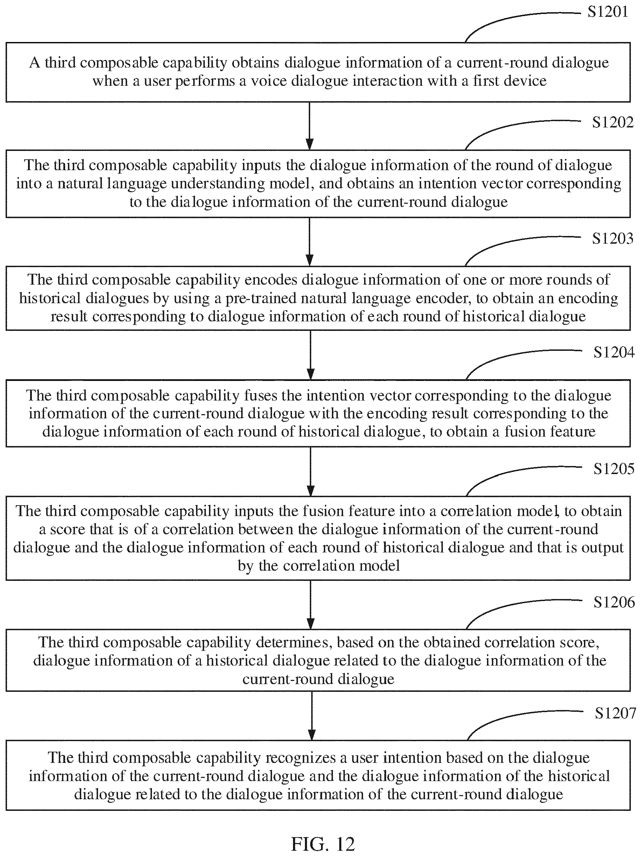

In another possible implementation, the matched dialogue information of the historical dialogue may be used to implement the procedure shown in FIG. 12. The dialogue information of the historical dialogue is encoded and fused with an intention vector corresponding to the dialogue information of the current-round dialogue. A fusion feature is input into a correlation model to calculate a correlation score. For a specific procedure of this implementation, refer to the subsequent description of the embodiment shown in FIG. 12. Details are not described herein again.

In another possible implementation, the matched dialogue information of the historical dialogue may be used to expand a search range of a keyword corresponding to the user intention with reference to the dialogue information of the current-round dialogue, to determine the user intention. For example, the dialogue information of the current-round dialogue includes "Andy Lau", and the matched dialogue information of the historical dialogue includes "Watch a movie in the evening". In this case, the dialogue information of the historical dialogue may have a behavior keyword "Watch a movie", a time keyword "In the evening", and an implicit keyword "Cinema" corresponding to a related scenario. The dialogue information of the historical dialogue expands a search range of a keyword corresponding to the user intention. With reference to the dialogue information of the current-round dialogue, it may be determined that the user intention is "Go to the cinema in the evening to watch a movie of Andy Lau".

According to the matching analysis method provided in this embodiment of this application, the virtual aggregation device can match historical dialogue information with current-round dialogue information, and determine, based on the related historical dialogue information, a user intention indicated by the current-round dialogue information, to improve efficiency of recognizing the user intention by the device. In addition, user identity recognition is used, so that user privacy can be protected in querying the historical dialogue information. In addition, in a possible implementation, a device is classified into a private device and a public device, and a type of historical dialogue information that can be shared may also be set by the user, so that a matching result is more personalized and conforms to a user habit.

The following describes a method for performing matching analysis on a stored historical interaction input instruction and a current interaction input instruction according to a specified algorithm (for example, a deep learning model) according to an embodiment of this application.

For example, in the multi-device scenario shown in FIG. 10A, the current interaction input instruction is a voice dialogue interaction instruction. FIG. 12 shows an example of a specific procedure of the matching analysis method according to an embodiment of this application. In this embodiment, an interaction input may include a historical input and a current input. A global context may be generated based on the historical input and the current input. Therefore, the global context may include historical interaction information and current-round interaction information. Historical interaction information associated with the current-round interaction information may be referred to as first historical interaction information. In an example in which the interaction input is a voice dialogue interaction, the historical input may be a historical voice dialogue input, the current input may be a current voice dialogue input, the historical interaction information may be dialogue information of a historical dialogue, and the current-round interaction information may be dialogue information of a current-round dialogue. A first event may be a current voice dialogue interaction event. Historical interaction information whose correlation with the current-round interaction information is greater than a threshold may be referred to as the first historical interaction information.

As shown in FIG. 12, the method may specifically include the following steps.

S1201: A third composable capability obtains dialogue information of a current-round dialogue when a user performs a voice dialogue interaction with a first device.

For a specific description of the step, refer to the description of the step S1101 in the embodiment shown in FIG. 11. Details are not described herein again.

S1202: The third composable capability inputs the dialogue information of the round of dialogue into a natural language understanding model, and obtains an intention vector corresponding to the dialogue information of the current-round dialogue.

Specifically, a second device may convert, into text information by using the third composable capability and a speech recognition (automatic speech recognition, ASR) technology, the dialogue information of the current-round dialogue received from a first composable capability, and input the text information into the natural language understanding model. The natural language understanding model may output, by using a natural language understanding (natural language understanding, NLU) algorithm and through processing operations such as word segmentation, part-of-speech tagging, and keyword extraction, the dialogue information of the current-round dialogue as structured semantic representation data that can be understood by an electronic device. The structured semantic representation data may be referred to as an intention vector. The NLU algorithm may be used to perform intention classification and slot keyword extraction based on textual dialogue information of the current-round dialogue.

For example, when a user voice instruction received by the first composable capability is "Book an air ticket to Beijing tomorrow", the third composable capability may convert the voice instruction into text information, and then may perform intention classification and slot keyword extraction by using the NLU algorithm. An intention classification result is "Book an air ticket", time slot keyword extraction information is "Tomorrow", and position slot keyword extraction information is "Beijing".

S1203: The third composable capability encodes dialogue information of one or more rounds of historical dialogues by using a pre-trained natural language encoder, to obtain an encoding result corresponding to dialogue information of each round of historical dialogue.

Specifically, a process in which the second device may encode dialogue information of a round of historical dialogue by using the pre-trained natural language encoder and the third composable capability may include the following steps (a) to (c):

(a) Restore the dialogue information of the round of historical dialogue to a text described in a natural language, to obtain text information corresponding to the dialogue information of the round of historical dialogue.
(b) Encode the text information corresponding to the dialogue information of the round of historical dialogue, to obtain a plurality of vectors corresponding to the dialogue information of the round of historical dialogue.
(c) Calculate an average value of the plurality of vectors corresponding to the dialogue information of the round of historical dialogue, and use the average value as an encoding result corresponding to the dialogue information of the round of historical dialogue.

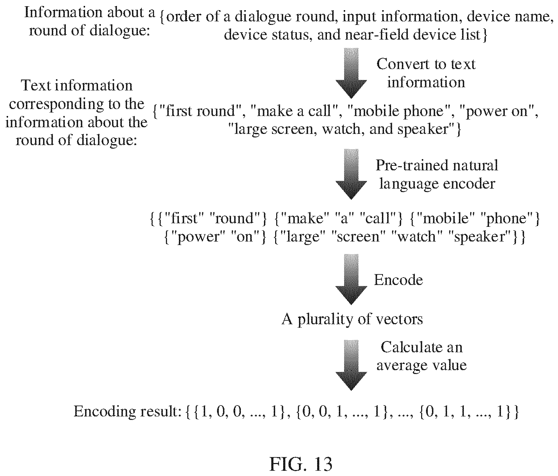

FIG. 13 shows an example of a procedure of encoding dialogue information of a round of historical dialogue. As shown in FIG. 13, the dialogue information of the round of historical dialogue may include: an order of the round of historical dialogue, input information of the user in the round of historical dialogue, a device name of a device receiving the round of historical dialogue, a device status of the device receiving the round of historical dialogue, and a near-field device list of the device receiving the round of historical dialogue. In this example, the order of the round of historical dialogue is "first round", the input information of the user in the round of historical dialogue is "make a call", the device name of the device receiving the round of historical dialogue is "mobile phone", the device status of the device receiving the round of historical dialogue is "power on", and the near-field device list of the device receiving the round of historical dialogue includes "large screen, watch, and speaker". In this case, when the dialogue information of the round of historical dialogue is encoded, the dialogue information of the round of historical dialogue may be first restored to a text described in the natural language: {"first round", "make a call", "mobile phone", "power on", "large screen, watch, and speaker"}, and {"first round", "make a call", "mobile phone", "power on", "large screen, watch, and speaker" } is encoded, to obtain a plurality of vectors corresponding to the dialogue information of the round of historical dialogue. Then, an average value of the plurality of vectors may be calculated, to obtain an encoding result corresponding to the dialogue information of the round of historical dialogue.

In a possible implementation, for the obtained dialogue information of the one or more rounds of historical dialogues, the third composable capability may first obtain, based on the dialogue information of the historical dialogues by using a recall engine implemented according to the specified matching rule shown in the embodiment in FIG. 11, the dialogue information of the historical dialogue related to the dialogue information of the current-round dialogue, and then encode the dialogue information of the historical dialogue related to the dialogue information of the current-round dialogue, to perform the following step S1204.

S1204: The third composable capability fuses the intention vector corresponding to the dialogue information of the current-round dialogue with the encoding result corresponding to the dialogue information of each round of historical dialogue, to obtain a fusion feature.

S1205: The third composable capability inputs the fusion feature into a correlation model, to obtain a score that is of a correlation between the dialogue information of the current-round dialogue and the dialogue information of each round of historical dialogue and that is output by the correlation model.

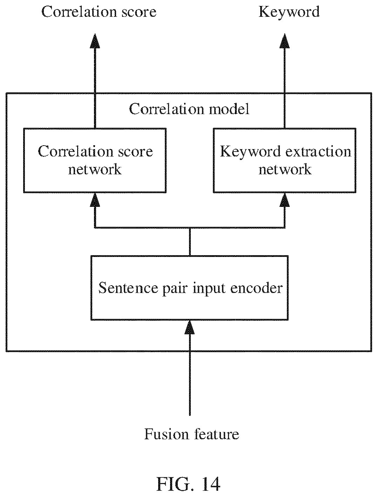

Specifically, FIG. 14 is an example of a schematic diagram of composition of a correlation model according to an embodiment of this application. The correlation model may include a sentence pair input encoder, a correlation score network, and a keyword extraction network. The sentence pair input encoder may perform encoding based on the fusion feature of the intention vector corresponding to the dialogue information of the current-round dialogue and the encoding result corresponding to the dialogue information of each round of historical dialogue. The correlation score network may generate the score of correlation between the dialogue information of the current-round dialogue and the dialogue information of each round of historical dialogue based on an encoding result of the fusion feature. The keyword extraction network may extract a keyword in the dialogue information of each round of historical dialogue based on the encoding result of the fusion feature. That the correlation score network generates the score of correlation between the dialogue information of the current-round dialogue and the dialogue information of each round of historical dialogue based on the encoding result of the fusion feature, to obtain the dialogue information of the historical dialogue related to the dialogue information of the current-round dialogue may include: For the dialogue information of each round of historical dialogue, when a score of correlation between the dialogue information of the round of historical dialogue and the dialogue information of the current-round dialogue is greater than a threshold 1 (for example, 0.8), it is determined that the dialogue information of the round of historical dialogue is the dialogue information of the historical dialogue related to the dialogue information of the current-round dialogue. The threshold 1 may be a manually configured preset value, and a value of the threshold 1 is not limited in this application.

S1206: The third composable capability determines, based on the obtained correlation score, the dialogue information of the historical dialogue related to the dialogue information of the current-round dialogue.

In an example of this embodiment, the dialogue information of the historical dialogue related to the dialogue information of the current-round dialogue may be referred to as the first historical interaction information.

S1207: The third composable capability recognizes a user intention based on the dialogue information of the current-round dialogue and the dialogue information of the historical dialogue related to the dialogue information of the current-round dialogue.

For a specific description of the step, refer to the description of the step S1104. Details are not described herein again.

According to the matching analysis method provided in this embodiment of this application, historical dialogue information (including an input text, a device status, and the like) of a plurality of devices may be uniformly encoded by using a natural language encoder, so that accuracy and efficiency of matching between current-round dialogue information and historical dialogue information can be improved. In addition, dialogue information is described by using a natural language. When new dialogue information is added, a code of the dialogue information may be automatically generated, and a key-value pair in a dictionary does not need to be manually defined, so that the code can better represent content of the dialogue information.

In some embodiments, when interaction information entered by a user includes a pronoun, a user intention may be further determined by using a coreference resolution method.

In some scenarios, when the user sends a voice instruction or a text instruction to a first composable capability based on a dialogue interaction, a single-round dialogue entered by the user to a first device usually includes a plurality of consecutive instructions. In addition, in the single-round dialogue including the plurality of instructions, one or more instructions include a pronoun, for example, "this", "that", "here", and "there". When a third composable capability determines the user intention based on the voice instruction entered by the user, the third composable capability needs to replace the pronoun with a specific target object name. The foregoing application scenario in which the pronoun in the voice instruction is replaced with the specific target object name may be referred to as a coreference resolution scenario.

Therefore, in embodiments of this application, the intention classification method and the slot keyword extraction method in the foregoing embodiment may be applied to the coreference resolution scenario, so that the third composable capability can more accurately determine the user intention, and a virtual aggregation device can control, based on the determined user intention, a corresponding second composable capability to execute a corresponding function.

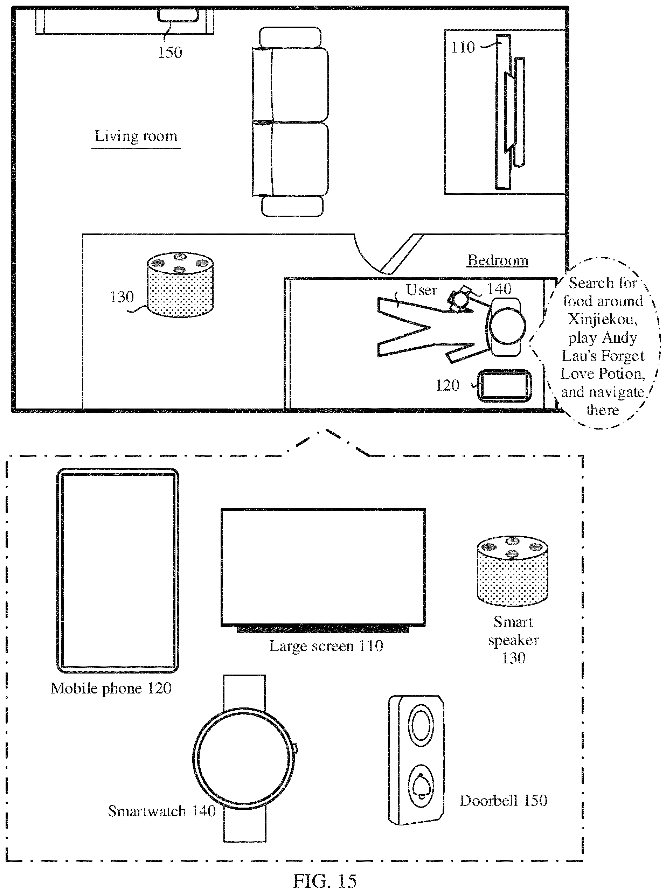

A multi-device scenario shown in FIG. 15 is used as an example. A user is located in a bedroom, and sends a round of voice dialogue including content "Search for food around Xinjiekou, play Andy Lau's Forget Love Potion, and navigate there" to the mobile phone 120. In this example, a first event may be an event in which the user sends a round of voice dialogue to the mobile phone 120. For each electronic device in the scenario shown in FIG. 15, refer to the multi-device scenario shown in FIG. 10A. Details are not described herein again. The single-round dialogue includes a plurality of instructions: "Search for food around Xinjiekou", "Play Andy Lau's Forget Love Potion", and "Navigate there". The last of the plurality of instructions includes a pronoun "there".

With reference to the application scenario shown in FIG. 15, the following describes a multi-instruction coreference resolution method in a single-round dialogue according to an embodiment of this application.

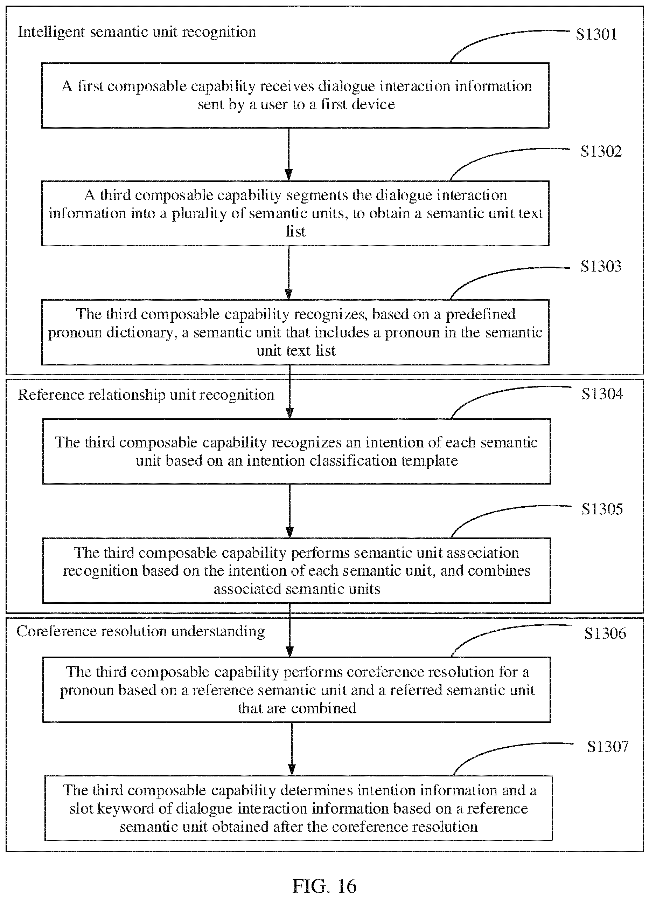

FIG. 16 shows an example of a specific procedure of the multi-instruction coreference resolution method in the single-round dialogue. As shown in FIG. 16, the method may specifically include the following steps.

S1301: A first composable capability receives dialogue interaction information (which may also be referred to as first dialogue information) sent by a user to a first device.

The multi-device scenario shown in FIG. 15 is used as an example. The first device may be the mobile phone 120 that performs a voice dialogue interaction with the user, and the first composable capability may be a voice interaction component disposed on the mobile phone 120. The voice interaction component may receive a current single-round voice dialogue that is entered by the user to the mobile phone 120 and that includes dialogue interaction information "Search for food around Xinjiekou, play Andy Lau's Forget Love Potion, and navigate there".

S1302: A third composable capability may segment the dialogue interaction information into a plurality of semantic units, to obtain a semantic unit text list.

Specifically, a second device may obtain, by using the third composable capability, the dialogue interaction information received by the first composable capability. Then, the second device may recognize boundaries of the semantic units in the dialogue information by using the third composable capability based on an intelligent semantic unit recognition model of multi-task adversarial learning, to obtain the semantic unit text list including the semantic units in the dialogue information. The semantic unit may also be referred to as an instruction. The plurality of semantic units include a first instruction and a second instruction, and the first instruction includes a first pronoun. Similarly, S1303 to S1307 in subsequent steps may be performed by the second device by using the third composable capability.

For example, in the dialogue interaction information "Search for food around Xinjiekou, play Andy Lau's Forget Love Potion, and navigate there" shown in the scenario shown in FIG. 15, a single semantic unit may be a single-instruction statement "Search for food around Xinjiekou" or the like in the dialogue interaction information.

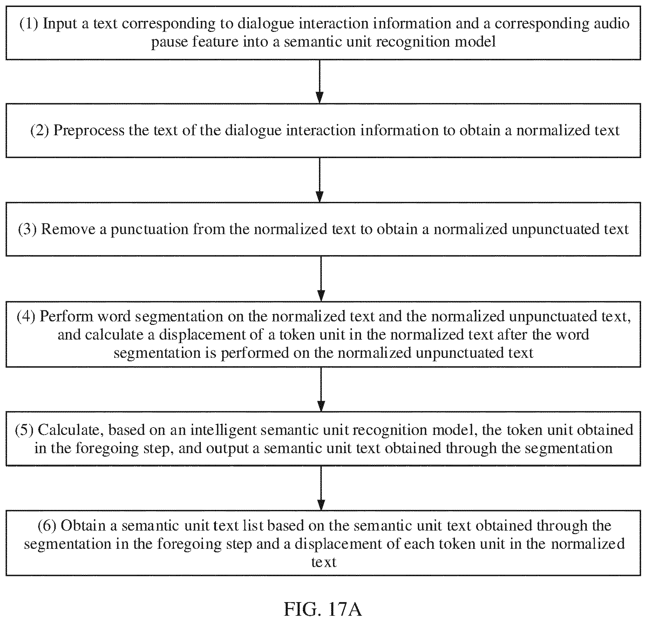

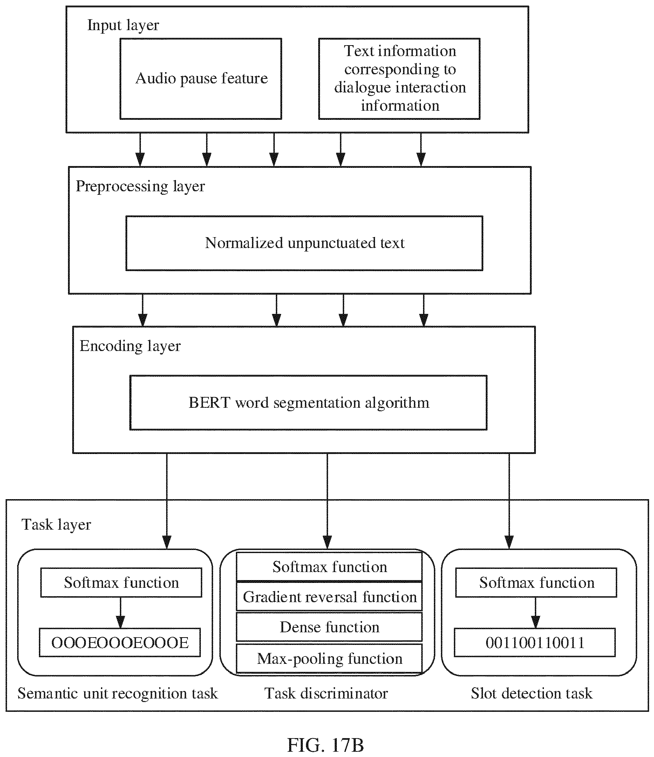

FIG. 17A shows a process in which the third composable capability may segment, based on a semantic unit recognition model shown in FIG. 17B, obtained dialogue information into a plurality of semantic units, to obtain a semantic unit text list. A specific procedure of the method may be shown in the following step (1) to step (6).

(1) Input a text corresponding to dialogue interaction information and a corresponding audio pause feature into a semantic unit recognition model.

The audio pause feature may mean: That a token unit in the text corresponding to the dialogue interaction information corresponds to an audio pause in an audio corresponding to the dialogue interaction information is the audio pause feature in the text information. Optionally, the audio pause feature in the text corresponding to the dialogue interaction information may be represented by a code whose value is "1", and a token unit of another non-audio pause feature may be represented by a code whose value is "0". The token unit may be a unit that is predefined in the text and that includes semantic information. The token unit may include a single word, a single phrase, a single punctuation, a single paragraph, and/or the like.

The multi-device scenario shown in FIG. 15 is used as an example. The text corresponding to the dialogue interaction information may be "Search for food around Xinjiekou, play Andy Lau's Forget Love Potion, and navigate there". The token unit in the text is defined as a unit that includes a single word in the text. If there is a pause in a voice of a token unit of a word "Xinjiekou" entered by the user, there is a pause in a voice of a token unit of a word "Potion" entered by the user, there is a pause in a voice of a token unit of a word "there" entered by the user, and there is no audio pause in voices of other token units in the text, the audio pause feature of the text identified by code values "1" and "0" in the foregoing text may be "00000000000100000000100000001".

(2) Preprocess the text of the dialogue interaction information to obtain a normalized text.

The foregoing preprocessing may include punctuation normalization, removal of a punctuation in the middle of a statement, and retention of a punctuation in an acronym/a decimal. Punctuation normalization may mean deleting special punctuations at a statement header and a statement tail in the dialogue interaction information. For example, a statement in the dialogue interaction information includes "/Navigate there/". In this case, in the punctuation normalization operation, a special punctuation "/" at the statement header and the special punctuation "/" at the statement tail in the dialogue interaction information may be deleted, to obtain the statement "Navigate there". Removal of a punctuation in the middle of a statement may be deleting a special punctuation in the middle of a statement and replacing a punctuation between English words. For example, deleting a special punctuation in the middle of a statement may be as follows: If a statement in the dialogue interaction information includes a phone number "010-65234", the special punctuation "-" in the phone number is deleted, and a statement obtained after the special punctuation in the phone number is deleted is "01065234". For another example, replacing a punctuation between English words may be as follows: A punctuation between English words may be replaced with a predefined word corresponding to the punctuation, for example, "&" may be replaced with a word "and", "\" may be replaced with "or", and "=" may be replaced with "equal". If a statement in the dialogue interaction information includes English words "you&me", and a punctuation "&" is inserted in the middle of the English words, the punctuation in the middle of the English words may be replaced with a predefined English word "and" corresponding to the punctuation "&". For example, retention of a punctuation in an acronym/a decimal may be as follows: If the dialogue information includes an acronym "e.g." and/or a decimal "12.35", the punctuation between the acronym and the decimal can be retained.

(3) Remove a punctuation from the normalized text to obtain a normalized unpunctuated text.

The dialogue interaction information entered by the user to the mobile phone 120 in the multi-device scenario shown in FIG. 15 is used as an example. A normalized text corresponding to the dialogue interaction information may be "Search for food around Xinjiekou, play Andy Lau's Forget Love Potion, and navigate there". After punctuations are removed from the foregoing example normalized text based on this step, a normalized unpunctuated text "Search for food around Xinjiekou play Andy Lau's Forget Love Potion and navigate there" corresponding to the normalized text may be obtained.

(4) Perform word segmentation on the normalized text and the normalized unpunctuated text, and calculate a displacement of a token unit in the normalized text after the word segmentation is performed on the normalized unpunctuated text.

For the normalized text and the normalized unpunctuated text, word segmentation may be performed based on a BERT algorithm. Specifically, the BERT algorithm may include a BasicTokenizer (which may also be referred to as a BT) and a WordpieceTokenizer (which may also be referred to as a WPT). The BT is a preliminary tokenizer. A process of the BT may be as follows: converting a to-be-processed text into a unicode character string, removing strange characters, processing Chinese characters, performing word segmentation with spaces, removing redundant characters, performing word segmentation with punctuations, and performing word segmentation with spaces again. The WPT may segment, based on a vocabulary predefined by the BERT, a word segmentation result obtained by the BT, that is, segment a word into a plurality of subwords from left to right, where each subword is as long as possible. Optionally, for word segmentation of a Chinese text, the BT has segmented the Chinese text into a single character. Therefore, the WPT may not need to segment a result output by the BT.

Then, after word segmentation is performed on the normalized text and the normalized unpunctuated text, the displacement of the token unit in the normalized unpunctuated text in the normalized text may be calculated.

(5) Calculate, based on an intelligent semantic unit recognition model, the token unit obtained in the foregoing step, and output a semantic unit text obtained through the segmentation.

Specifically, for the token unit obtained in the foregoing step, the intelligent semantic recognition model may perform semantic encoding by using four layers of BERT. The intelligent semantic recognition model may perform multi-task comparison learning based on the foregoing semantic encoding. The multi-task comparison learning may include a semantic unit recognition task module, a slot detection task module, and a task discriminator. The semantic unit recognition task module may determine, based on a Softmax function and the audio pause feature input in the foregoing, whether to perform segmentation after a token unit. If the token unit needs to be segmented, the token unit is represented by a character "E". If the token unit does not need to be segmented, the token unit is represented by a character "O". The slot detection task module may determine, based on the Softmax function, whether a token unit belongs to a slot (for example, a time slot or a position slot). If the token unit belongs to the slot, the token unit may be represented by using a code whose value is "1". If the token unit does not belong to the slot, the token unit may be represented by using a code whose value is "0". The slot detection task module can prevent incorrect segmentation in the middle of the slot. The task discriminator may perform multi-task adversarial learning based on a Maxpooling function, a Gradient Reversal function, a Dense function, and/or the Softmax function, to recognize a task label, and prevent a shared semantic control from learning task-related information from a multi-intention recognition task.

(6) Obtain a semantic unit text list based on the semantic unit text obtained through the segmentation in the foregoing step and a displacement of each token unit in the normalized text.

The dialogue interaction information input in the multi-device scenario shown in FIG. 15 is used as an example. The text corresponding to the dialogue interaction information may be "Search for food around Xinjiekou, play Andy Lau's Forget Love Potion, and navigate there". After the text is processed in the foregoing step, the semantic unit text list may be obtained as follows: {"Search for food around Xinjiekou"} (which may also be referred to as a second instruction), {"Play Andy Lau's Forget Love Potion"}, and {"Navigate there"} (which may also be referred to as a first instruction).

S1303: The third composable capability recognizes, based on a predefined pronoun dictionary, a semantic unit that includes a pronoun in the semantic unit text list.

Specifically, if the semantic unit text includes a pronoun in the predefined pronoun dictionary, the third composable capability may determine the semantic unit text as a semantic unit that includes a pronoun, and recognize a type of the pronoun. If the semantic unit text does not include a pronoun in the predefined pronoun dictionary, the third composable capability may determine the semantic unit text as a semantic unit that does not include a pronoun.

For example, in the dialogue interaction information input in the multi-device scenario shown in FIG. 15, a semantic unit text list corresponding to the dialogue interaction information may be as follows: {"Search for food around Xinjiekou"}, {"Play Andy Lau's Forget Love Potion"}, and {"Navigate there"}. The third composable capability recognizes, based on the predefined pronoun dictionary, that a semantic unit that includes a pronoun in the semantic unit text list is {"Navigate there"}, where a type of the pronoun "there" is an indication pronoun, and the pronoun "there" may also be referred to as a first pronoun; and semantic units that do not include a pronoun in the semantic unit text list are {"Search for food around Xinjiekou"} and { "Play Andy Lau's Forget Love Potion"}. The semantic unit that includes a pronoun may be referred to as a reference semantic unit.

S1304: The third composable capability recognizes an intention of each semantic unit based on an intention classification template.

The dialogue interaction information input in the multi-device scenario shown in FIG. 15 is used as an example. Semantic units in the semantic unit text list in the scenario are classified into a reference semantic unit {"Navigate there"}, and semantic units that do not include a pronoun: { "Search for food around Xinjiekou"} and { "Play Andy Lau's Forget Love Potion"}. The third composable capability may recognize, based on the intention classification template, that an intention of the semantic unit {"Navigate there"} is "navigating a position route", where the intention may be referred to as a reference intention; that an intention of the semantic unit { "Search for food around Xinjiekou"} is "Search for food"; and that an intention of the semantic unit { "Play Andy Lau's Forget Love Potion"} is "Play music". The intentions "Search for food" and "Play music" of the semantic units that do not include a pronoun may be referred to as referred intentions, and a plurality of referred intentions may form a referred intention list.

S1305: The third composable capability performs semantic unit association recognition based on the intention of each semantic unit, and combines associated semantic units.

Specifically, the semantic unit recognition and combination of associated semantic units in this step may mean determining, based on a predefined intention association template, a reference intention, a referred intention, and a pronoun type, a referred semantic unit associated with a semantic unit that includes a pronoun, and combining the two.

Specifically, the intention association template may be generated in the following step (1) and step (2).

(1) For each pronoun type (for example, a personal pronoun or a demonstrative pronoun), all possible combinations of a reference intention and a referred intention may be determined based on a slot type and an intention corresponding to the slot type in a predefined intention slot association system. For example, in the predefined intention slot association system, it may be defined that a slot type 1 (for example, a person slot type or a position slot type) corresponds to an intention 1, and a pronoun type corresponding to the slot type 1 (for example, a personal pronoun corresponding to the person slot type, or a demonstrative pronoun corresponding to the position slot type) corresponds to an intention 2. In this case, a combination of the intention 1 and the intention 2 may be considered as a possible combination of a reference intention and a referred intention. The intention 1 may be referred to as a referred intention, and the intention 2 may be referred to as a reference intention.

(2) Obtain, from a cloud server, a plurality of rounds of dialogue interactions related to a reference scenario, and collect, based on the plurality of rounds of dialogue interactions, a probability of occurrence of association between each reference intention and each referred intention. If the probability of occurrence of association between the reference intention and the referred intention is greater than a threshold 2, a combination of the reference intention and the referred intention is determined as a combination of a corresponding pronoun type in the intention association template. A value of the threshold 2 may be a value less than 1, for example, 0.6, 0.7, or 0.8. The value of the threshold 2 is not limited in this application. The example in step (1) is used as an example. If a probability of occurrence of the combination of the intention 1 and the intention 2 is greater than the threshold 2 in the plurality of rounds of dialogue interactions that are related to the reference scenario and that are obtained from the cloud server, the combination of the intention 1 and the intention 2 is determined as a combination of the pronoun type corresponding to the slot type 1 in the intention association template.

For example, the intention association template may be shown in Table 5.

**Table 5**

| Pronoun type | Referred intention | Reference intention |
|---|---|---|
| Demonstrative pronoun | Search for food | Navigate a position route |
| | Book an air ticket | Query weather |
| | ... | ... |
| Personal pronoun | Play music | Play a video |
| | ... | ... |

As shown in Table 5, when the pronoun type is the demonstrative pronoun, combinations in the intention association template may include a combination of a referred intention "Search for food" and a reference intention "Navigate a position route", a combination of a referred intention "Book an air ticket" and a reference intention "Query weather", and the like. When the pronoun type is the personal pronoun, combinations in the intention association template may include a combination of a referred intention "Play music" a reference intention "Play a video", and the like.

It should be noted that Table 5 is merely used as an example for explaining this application, and does not constitute a limitation on this application.

The dialogue interaction information input in the multi-device scenario shown in FIG. 15 is used as an example. The third composable capability may determine, based on the predefined intention association template, the reference intention, the referred intention, and the pronoun type, that a reference semantic unit { "Navigate there"} corresponds to a referred semantic unit { "Search for food around Xinjiekou"}, and then combine the two semantic units as {"Search for food around Xinjiekou and navigate there"}.

S1306: The third composable capability performs coreference resolution for a pronoun based on the reference semantic unit and the referred semantic unit that are combined.

Specifically, the third composable capability may perform, in a concurrent manner, serial manner, or batch manner, coreference resolution for a pronoun based on the reference semantic unit and the referred semantic unit that are combined. In other words, a pronoun in the semantic unit text list is replaced with a specific target object name.

The dialogue interaction information input in the multi-device scenario shown in FIG. 15 is used as an example. In the foregoing step, the reference semantic unit {"Navigate there"} and the referred semantic unit {"Search for food around Xinjiekou"} are combined into a text {"Search for food around Xinjiekou and navigate there"}. After the coreference resolution processing in this step, the pronoun "there" in the text may be replaced with a specific place name "Xinjiekou". In other words, the reference semantic unit {"Navigate there"} may be replaced with a semantic unit that includes a specific place name {"Navigate to Xinjiekou"}.

S1307: The third composable capability determines intention information and a slot keyword of the dialogue interaction information based on the reference semantic unit obtained after the coreference resolution.

After the first pronoun in the first dialogue information is replaced with an object corresponding to the second instruction, second dialogue information may be obtained. The third composable capability may determine, based on the second dialogue information, the intention information and the slot keyword of the dialogue interaction information, to recognize a user intention indicated by a first event.

The dialogue interaction information input in the multi-device scenario shown in FIG. 15 is used as an example. The first dialogue information may be "Search for food around Xinjiekou, play Andy Lau's Forget Love Potion, and navigate there". After the coreference resolution processing procedure in the foregoing step, the first pronoun "there" is replaced with the object corresponding to the second instruction, and the obtained second dialogue information may be a dialogue of "Search for food around Xinjiekou, play Andy Lau's Forget Love Potion, and navigate to Xinjiekou. In this case, the dialogue interaction information may include the following plurality of specific single-instruction statements: (a) Search for food around Xinjiekou; (b) "Play Andy Lau's Forget Love Potion"; and (c) Navigate to Xinjiekou. An interaction instruction recognition module may determine, based on the foregoing plurality of specific single-instruction statements, that an intention 1 of the dialogue interaction information is "Search for food", and a position slot keyword corresponding to the intention is " Xinjiekou"; an intention 2 is "Play music", a person slot keyword corresponding to the intention is "Andy Lau", and a song slot keyword is "Forget Love Potion"; and an intention 3 is "Navigate a position route", and a position slot keyword corresponding to the intention is "Xinjiekou".

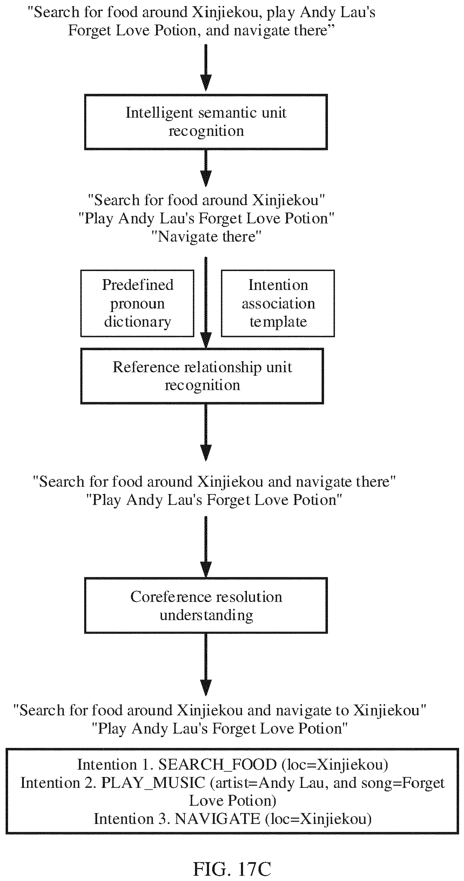

A complete process of finally determining a corresponding intention and slot keyword based on the specific method shown in FIG. 16 for the dialogue interaction information shown in FIG. 15 may be shown in FIG. 17C. For descriptions of steps in FIG. 17C, refer to descriptions in step S1301 to step S1307. Details are not described herein again.

According to the coreference resolution method provided in this embodiment of this application, when a user enters single-round dialogue information that includes a plurality of instructions, a virtual aggregation device can more accurately recognize a user intention, and execute a corresponding function based on the user intention. This improves instruction recognition efficiency, and provides the user with more natural and smooth interaction experience.

In embodiments of this application, a method for implementing interaction and execution of a long-term task may be further provided, and the method is applied to the foregoing steps S107 and S108.

In some application scenarios, an interaction instruction entered by the user to the first device may include one or more specified logical relationships (for example, a sequence relationship, a loop relationship, a condition relationship, and Boolean logic). Then, the third composable capability may recognize a service intention of the user based on the interaction instruction, and determine information about one or more response subservices and a logical relationship between the response subservices based on the service intention of the user and the one or more specified logical relationships in the interaction instruction. Then, the virtual aggregation device may map the one or more response subservices to the corresponding second composable capability, and arrange a processing procedure of the subservices based on the logical relationship between the response subservices, to complete a task corresponding to the service intention. That the user inputs the interaction instruction to the first device may be referred to as the first event, and a task including the one or more response subservices that include one or more specified logical relationships may be referred to as a long-term task.

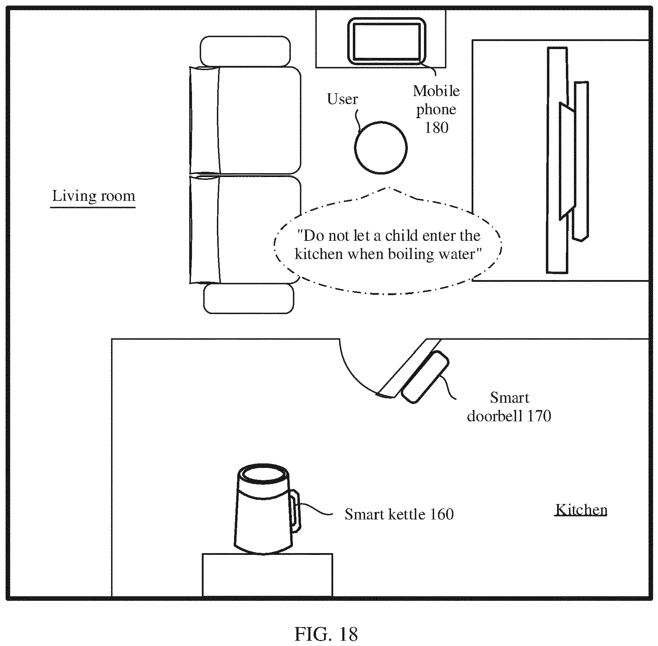

For example, a multi-device scenario shown in FIG. 18 is used to describe this method. As shown in FIG. 18, the multi-device scenario may include a smart kettle 160, a smart lock 170, and a mobile phone 180. The mobile phone 180 may be located in a bedroom in which a user is located, and the smart kettle 160 and the smart lock 170 may be located in a kitchen. For hardware structures and software architectures of the smart kettle 160, the smart lock 170, and the mobile phone 180, refer to descriptions in the foregoing embodiments. Details are not described herein again. Composable capabilities of the foregoing devices may be included in a virtual aggregation device that covers the foregoing room area. In the virtual aggregation device, the mobile phone 180 is used as a central control device. In other words, in the virtual aggregation device including one or more composable capabilities of the smart kettle 160, the smart lock 170, and the mobile phone 180, the mobile phone 180 may schedule and control the one or more composable capabilities of the mobile phone 180, the smart kettle 160, and the smart lock 170. In the multi-device scenario, the user may enter a voice instruction "Do not let a child enter the kitchen when boiling water" to the mobile phone 180.

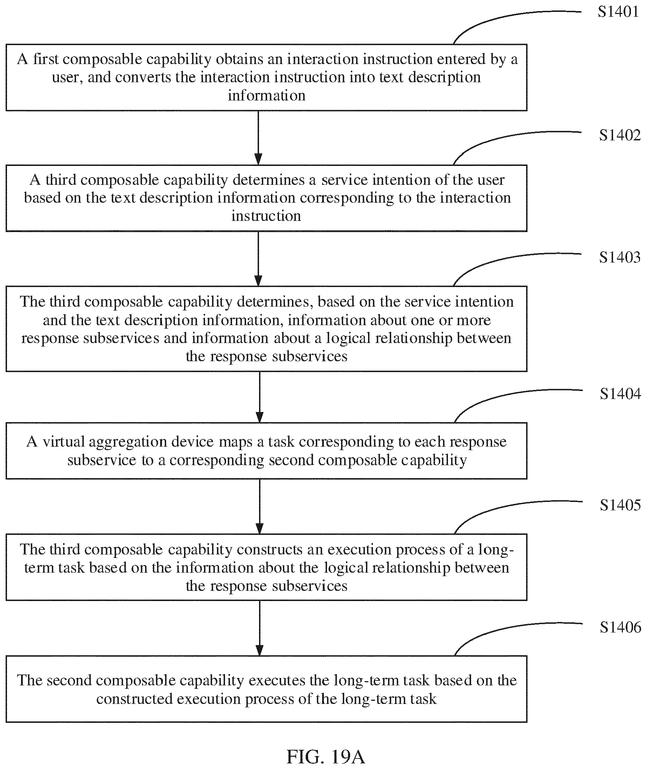

The following describes a specific procedure in which the virtual aggregation device executes a long-term task shown in FIG. 19A with reference to the multi-device scenario shown in FIG. 18. As shown in FIG. 19A, the procedure may specifically include the following steps.

S1401: A first composable capability obtains an interaction instruction entered by a user, and converts the interaction instruction into text description information.

Specifically, a first device may receive, by using the first composable capability, the interaction instruction entered by the user for the first device. Then, the first composable capability may convert the interaction instruction into equivalent text description information. In other words, description content entered by the user in the interaction instruction is the same as description content entered by the user in the text description information. The interaction instruction may be a voice instruction, a text instruction, or an interaction instruction entered in another form. This is not limited in this application.

The multi-device scenario shown in FIG. 18 is used as an example. When the user enters the voice instruction "Do not let a child enter the kitchen when boiling water" to the mobile phone 180, a near-field voice input capability of the mobile phone 180 may receive the voice instruction, and convert the voice instruction into equivalent text description information. Description content entered by the user in the text description information is the same as description content entered by the user in the voice instruction, that is, "Do not let a child enter the kitchen when boiling water".

S1402: A third composable capability determines a service intention of the user based on the text description information corresponding to the interaction instruction.

Specifically, a second device may determine, by using the third composable capability and according to a specified algorithm, the service intention of the user from the obtained text description information corresponding to the interaction instruction. The specified algorithm may be the NLU algorithm in the foregoing embodiment. An algorithm used by an interaction instruction recognition module in this step is not limited in embodiments of this application. It should be noted that S1403 to S1405 in subsequent steps may also be performed by the second device by using the third composable capability.

The multi-device scenario shown in FIG. 18 is used as an example. The second device may be the mobile phone 180. The mobile phone 180 may obtain, by using the third composable capability, the text description information corresponding to the voice instruction sent by the user to the mobile phone 180. Description content entered by the user in the text description information is "Do not let a child enter the kitchen when boiling water". The third composable capability may determine, from the text description information by using the NLU algorithm, that the service intention of the user is "When the kettle 160 in the kitchen boils water, electronic devices such as the smart lock 170 and the mobile phone 180 prohibit a child from entering the kitchen".

S1403: The third composable capability determines, based on the service intention and the text description information, information about one or more response subservices and information about a logical relationship between the response subservices.

Specifically, after determining the service intention of the user, the second device may determine, by using the third composable capability, based on the service intention and the text description information, and according to the specified algorithm, the information about the one or more response subservices and the information about the logical relationship between the response subservices. The specified algorithm may be the NLU algorithm in the foregoing embodiment. An algorithm used by the interaction instruction recognition module in this step is not limited in embodiments of this application. The information about the response subservices may include information such as types of the response subservices, parameters (for example, content descriptions of the response subservices), and a composable capability for executing the response subservices. The information about the logical relationship between the response subservices may include a logical dependency relationship between the response subservices when the response subservices are executed, for example, a sequence relationship, a condition relationship, a loop relationship, and Boolean logic.

The multi-device scenario shown in FIG. 18 is used as an example. The information about the one or more response subservices and the information about the logical relationship between the response subservices that may be determined by the mobile phone 180 by using the third composable capability based on the service intention and the text description information according to the NLU algorithm may be represented in a slot padding form, and may be shown in Table 6.

**Table 6**

| Information type | Slot type | Slot information | Composable capability |
|---|---|---|---|
| Intention slot information | Subservice 1 | Detect a status of the smart kettle 160 | Smart kettle 160 status obtaining capability |
| | Subservice 2 | Detect a child | Facial recognition capability |
| | | | Fingerprint recognition capability |
| | Subservice 3 | Prohibit the child from entering the kitchen | Voice broadcast capability |
| | | | Door locking capability |
| Logical slot information | Conditional logic 1 | if subservice 1 then subservice 2 | Null |
| | Conditional logic 2 | if subservice 2 then subservice 3 | Null |

As shown in Table 6, the slot information of the response subservice 1 is "Detect a status of the smart kettle 160", and the corresponding composable capability is "Smart kettle 160 status obtaining capability"; the slot information of the response subservice 2 is "Detect a child", and the corresponding composable capability is "Facial recognition capability" and "Fingerprint recognition capability"; and the slot information of the response subservice 3 is "Prohibit the child from entering the kitchen", and the corresponding composable capability is "Voice broadcast capability" and "Door locking capability". The logical relationship between the response subservices may be shown in Table 6. There is a conditional logical relationship between the response subservice 1 and the response subservice 2. To be specific, if the smart kettle 160 status obtaining capability in the response subservice 1 detects that the smart kettle 160 is boiling water, the response subservice 2 is executed, so that the facial recognition capability and/or the fingerprint recognition capability detect whether there is a child nearby. There is a conditional logic relationship between the response subservice 2 and the response subservice 3. To be specific, if the facial recognition capability and/or the fingerprint recognition capability in the response subservice 2 detect/detects that there is a child nearby, the response subservice 3 is executed, so that the voice broadcast capability sends a voice prompt, and the smart lock 170 is controlled to be locked based on the door locking capability.

It should be noted that Table 6 is merely used as an example for explaining this application, and does not constitute a specific limitation on this application.

S1404: A virtual aggregation device maps a task corresponding to each response subservice to a corresponding second composable capability.

Specifically, based on the multi-modality decision-making module and the task sequence generation module in the foregoing embodiment, the task corresponding to each response subservice is generated based on the information about the one or more response subservices determined in step S1403. Then, a smart assistant on the virtual aggregation device may configure and invoke an appropriate second composable capability on a connected electronic device, to execute the task corresponding to each response subservice.

Optionally, for a procedure of configuring and invoking, by the smart assistant on the virtual aggregation device, the second composable capability that is on the connected electronic device and that is configured to execute the task corresponding to the response subservice, refer to the procedure described in the foregoing embodiment. Details are not described herein again.

Optionally, a second composable capability that is most suitable for executing a task corresponding to a response subservice may be selected according to a preset rule. For example, a second composable capability on an electronic device with low power consumption, and/or long power supply time, and/or a fixed installation position, and/or low use frequency may be selected according to a sustainability rule of a long-term task.

Optionally, the user may manually set a second composable capability for a task corresponding to a response subservice. Then, a task mapping module may send the task and a corresponding execution instruction to an electronic device to which the most appropriate composable capability belongs.

The multi-device scenario shown in FIG. 18 is used as an example. The third composable capability may generate, based on the information shown in Table 6 and the determined information about the one or more response subservices, a task corresponding to each response subservice and a corresponding execution instruction. The smart assistant on the virtual aggregation device may configure and invoke an appropriate second composable capability on a connected electronic device, to execute the task corresponding to each response subservice. For example, the smart assistant on the virtual aggregation device may configure and invoke the smart kettle 160 status obtaining capability of the smart kettle 160, to execute a task corresponding to the response subservice 1 "Detect a status of the smart kettle 160". The smart assistant on the virtual aggregation device may configure and invoke the facial recognition capability and the fingerprint recognition capability of the smart lock 170, to execute a task corresponding to the response subservice 2 "Detect a child". The smart assistant on the virtual aggregation device may configure and invoke the voice broadcast capability and the door locking capability of the smart lock 170, to execute a task corresponding to the response subservice 3 "Prohibit the child from entering the kitchen".

S1405: The third composable capability constructs an execution process of a long-term task based on the information about the logical relationship between the response subservices.

Optionally, the long-term task process may be described by using a structured language like XML or JSON, or a user-defined data structure. The long-term task process and a structured description of the long-term task process may be in a hierarchical nesting mode. When in the long-term task, a plurality of composable capabilities are used to execute a task corresponding to a single response subservice, the third composable capability may construct an independent execution pipeline for an execution process of each composable capability; or may construct a same execution pipeline for the plurality of composable capabilities for executing a task corresponding to a single response subservice, and the pipeline separately runs in a manner of a multi-branch or multi-thread/multi-process in the pipeline.

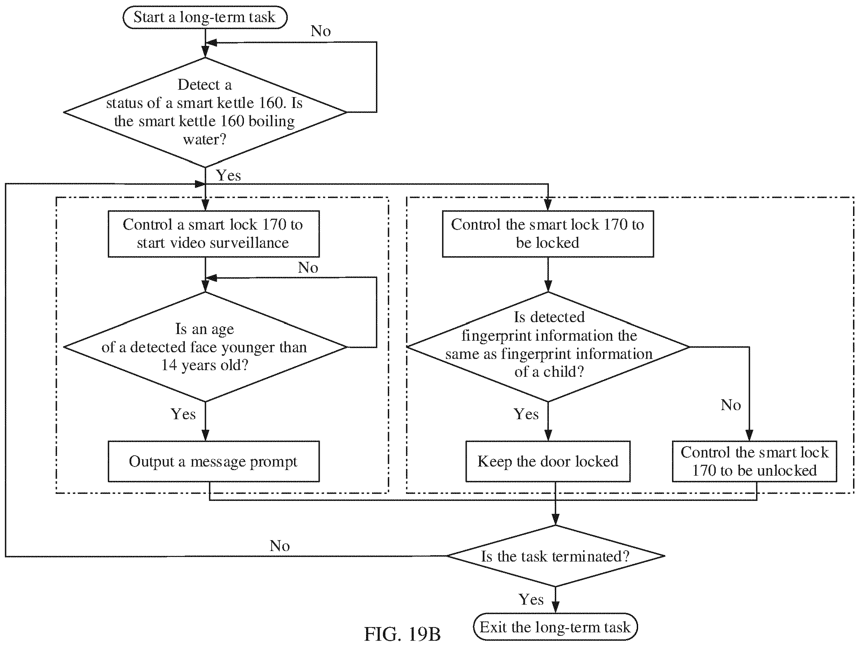

The multi-device scenario shown in FIG. 18 is used as an example. FIG. 19B shows an example of an execution process of a long-term task constructed by the third composable capability in the scenario based on the information about the logical relationship between the response subservices. As shown in FIG. 19B, a specific execution process of the long-term task may be shown in the following step (a) to step (e):

(a) Detect a status of the smart kettle 160.
(b) When it is detected that the smart kettle 160 is boiling water, video surveillance on the smart lock 170 is started and the smart lock 170 is locked.
(c) When the smart lock 170 recognizes, based on the facial recognition capability, that an age of a nearby face is less than 14 years old, a message reminder is output based on the voice broadcast capability, to prompt the user that a child is approaching the kitchen. When the smart lock 170 recognizes, based on the fingerprint recognition capability, that fingerprint information is the same as fingerprint information of the child, the lock keeps locked. In a possible implementation, when the smart lock 170 recognizes, based on the fingerprint recognition capability, that the fingerprint information is different from the fingerprint information of the child, the fingerprint lock may be unlocked.
(d) Detect whether the long-term task is suspended or terminated.
(e) When it is detected that the long-term task is suspended or terminated, the execution process of the long-term task is exited. When it is detected that the long-term task is not suspended or terminated, the long-term task may continue to be executed based on the execution process of the long-term task.

S1406: The second composable capability executes the long-term task based on the constructed execution process of the long-term task.

Specifically, the task execution Runtime in the foregoing embodiment may wake up, based on the execution process of the long-term task constructed in the foregoing step, the foregoing selected second composable capability to execute the long-term task. Termination of the long-term task may be triggered by a detected user instruction, and/or a detected device status, and/or detected environment status information.

The multi-device scenario shown in FIG. 18 is used as an example. In the scenario, termination of the long-term task may be triggered by a voice instruction "Stop detecting a child when boiling water" entered by the user. Alternatively, when the smart lock 170 recognizes, based on the facial recognition capability, that the age of the nearby face is greater than 14 years old, and recognizes, based on the fingerprint recognition capability, that the fingerprint information is different from the fingerprint information of the child, so that the fingerprint lock is unlocked, the status of the smart kettle 160 may be detected. When it is detected that the smart kettle 160 is not boiling water, the long-term task is suspended or terminated. If it is detected that the smart kettle 160 is still boiling water, the long-term task may continue to be executed based on the execution process of the long-term task.

According to the long-term task execution method provided in this embodiment of this application, a virtual aggregation device in a multi-device scenario can execute a plurality of instructions that have a logical dependency relationship, so that types of tasks that can be processed by the virtual aggregation device are more abundant, and resource utilization of each device and efficiency and an automation level of task execution in the multi-device scenario are improved.

In embodiments of this application, a memory model construction method may be further provided, and the method is applied to step S107.

In some application scenarios, the first composable capability may receive an interaction input within first preset time. An interaction operation record may be formed based on the received interaction input. The third composable capability in the second device may obtain the interaction operation record. The interaction operation record may include interaction information between the user and a device (for example, the user queries news through a browser), and/or information indicating that the device detects that the user is in a specified state (for example, an electronic device detects a state in which the user runs for 30 minutes), and/or interaction information between a plurality of electronic devices. The third composable capability may construct a memory model (which may also be referred to as a memory) based on the interaction operation record. The memory model may include a short-term memory model (which may also be referred to as a short-term memory) and a long-term memory model (which may also be referred to as a long-term memory). Then, the third composable capability may recognize, based on the memory model, the user intention indicated by the first event.

The memory model may indicate a habit or preference of an interaction between the user and the device based on the received interaction input. The short-term memory model may indicate a habit or preference of an interaction between the user and the device based on an interaction operation record that meets a first condition. The long-term memory model may indicate a habit or preference of an interaction between the user and the device based on an interaction operation record that meets a second condition.

In a possible implementation, the first condition may be that the interaction operation record is received within preset time window (which may also be referred to as the first preset time, for example, within the latest 6 hours). The second condition may be that the interaction operation record is consecutively received in a plurality of preset time windows (for example, within 6 hours or within 8 hours).

In another possible implementation, the first condition may be that in a specified time period 1 (which may also be referred to as the first preset time, for example, from 00:00 to 24:00), a quantity of times for receiving the interaction operation record is greater than a third threshold. The second condition may be that in a plurality of consecutive specified time periods 1 (for example, from 00:00 to 24:00), a quantity of times for receiving the interaction operation record in each specified time period 1 is greater than the third threshold.

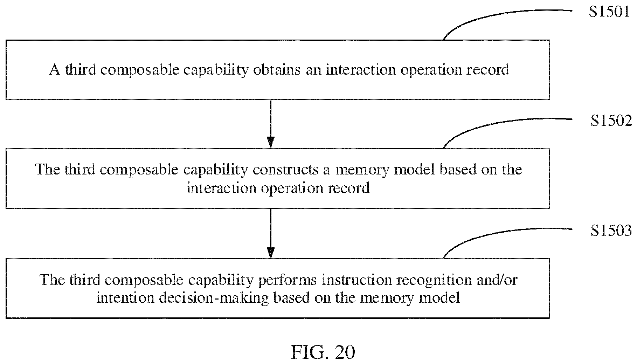

For example, FIG. 20 shows a specific procedure of the personalized interaction method. As shown in FIG. 20, the method may specifically include the following steps.

S1501: A third composable capability obtains an interaction operation record.

Specifically, a second device may obtain interaction operation records on a plurality of devices by using the third composable capability.

For a description of the interaction operation record, refer to the foregoing description. Details are not described herein again. The interaction operation record may be stored on a central control device. Optionally, when storage resources of the central control device are insufficient to store the interaction operation record, the central control device may select a device with abundant storage resources to store the interaction operation record. The device that stores the interaction operation record may provide a specified interface for the central control device, so that the central control device can obtain the interaction operation record from the device.

S1502: The third composable capability constructs a memory model based on the interaction operation record.

Specifically, the memory model may be constructed based on an explicit form, for example, a label structured data form. The memory model may alternatively be constructed based on an implicit form, for example, a tensor form or a neural network parameter form. The memory model may be classified into a short-term memory model and a long-term memory model. The short-term memory model may be constructed by using the interaction operation record as an input, and data (for example, a value of a short-term memory label corresponding to the interaction operation record) expected by the short-term memory model as an output; and the long-term memory model may be constructed by using data of the short-term memory model as an input, and data (for example, a value of a long-term memory label corresponding to the interaction operation record) expected by the long-term memory model as an output. The short-term memory model and the long-term memory model may be constructed by using a principal component analysis algorithm, or one or more artificial neural network algorithms such as CNN, RNN, and LSTM.

Optionally, the short-term memory model/long-term memory model may use a method for collecting statistics on parameters of the interaction operation record, for example, calculating a receiving time interval of the interaction operation record and a quantity of times for receiving the interaction operation record. When the parameters of the interaction operation record meet a predefined rule, (for example, when the receiving time interval of the interaction operation record is less than a specified time interval, or the quantity of times for receiving the interaction operation record is greater than a specified threshold), corresponding data in the short-term memory model/long-term memory model is collected.

Optionally, the short-term memory model may alternatively use a FIFO data structure to record an interaction operation record in a preset time window (for example, within the latest 6 hours), and update, based on the record, the value of the short-term memory label corresponding to the interaction operation record, without constructing a model based on the foregoing principal component analysis algorithm or artificial neural network algorithm.

For example, a memory model is constructed in a label structured data form. The third composable capability may obtain the interaction operation record. For a description of the interaction operation record, refer to the foregoing description. Details are not described herein again. The third composable capability may determine whether receiving time of an interaction operation record is within a preset time window (for example, within 6 hours or within 8 hours). If the receiving time of the interaction operation record is within the preset time window, the third composable capability may set the value of the short-term memory label corresponding to the interaction operation record to "True". When duration of the value "True" of the short-term memory label corresponding to the interaction operation record is greater than a second time threshold (for example, 7 days or 10 days), the value of the long-term memory label corresponding to the interaction operation record is set to "True". When duration of the value "True" of the short-term memory label corresponding to the interaction operation record is less than the second time threshold (for example, 7 days or 10 days), or when duration of a value "False" of the short-term memory label corresponding to the interaction operation record is greater than the second time threshold (for example, 7 days or 10 days), the value of the long-term memory label corresponding to the interaction operation record is set to "False". Optionally, in addition to the Boolean data of "True" and "False", the value of the short-term memory label and the value of the long-term memory label may also be character data, for example, a name of an app that performs a corresponding function in response to a user operation.

With reference to the foregoing example implementations, if a plurality of obtained interaction operation records in a preset time window (for example, within the latest 6 hours) include "Running for 30 minutes at 07:00", "Opening a browser to query news at 08:00", "Opening the G navigation app to query a route at 08:15", and the like. A short-term memory label corresponding to each interaction operation record, a value of the label, a long-term memory label, and a value of the label may be shown in Table 7.

**Table 7**

| Interaction operation record | Short-term memory | | Long-term memory | |
|---|---|---|---|---|
| | Label | Value | Label | Value |
| Running for 30 minutes at 07:00 | Recent exercise | True | Prefer exercise | True |
| - | Recent shopping | False | Prefer shopping | False |
| Opening a browser to query news at 08:00 | Recent reading news | True | Prefer reading news | True |
| Opening the G navigation app to query a route at 08:15 | Recent navigation app | G | Common navigation app | B |
| ... | | | | |

As shown in Table 7, recording time of the interaction operation record "Running for 30 minutes at 07:00" is within a preset time window (for example, within the latest 6 hours), a corresponding short-term memory label is "Recent exercise", and a value of the short-term memory label is "True". Duration of the value "True" of the short-term memory label is greater than a second time threshold (for example, 7 days). Therefore, the value of the corresponding long-term memory label "Prefer exercise" is "True". There is no shopping operation record in the interaction operation record. Therefore, the value of the corresponding short-term memory label "Recent shopping" is False. Duration of the value "False" of the short-term memory label is greater than the second time threshold (for example, 7 days). Therefore, the value of the corresponding long-term memory label "Prefer shopping" is "False". The interaction operation record "Opening a browser to query news at 08:00" is within the preset time window (for example, within the latest 6 hours), and the value of the corresponding short-term memory label "Recent reading news" is "True". Duration of the value "True" of the short-term memory label is greater than the second time threshold (for example, 7 days). Therefore, the value of the corresponding long-term memory label "Prefer reading news" is "True". The interaction operation record "Opening the G navigation app to query a route at 08:15" is within the preset time window (for example, within the latest 6 hours), and the value of the corresponding short-term memory label "Recent navigation app" is a name "G" of the navigation app in the record. The value of the navigation app name of the long-term memory label "Common navigation app" is "B". That is, before the value "G" of the short-term memory label "Recent navigation app" is recorded, duration of the value "B" of the short-term memory label "Recent navigation app" is greater than the second time threshold (for example, 7 days).

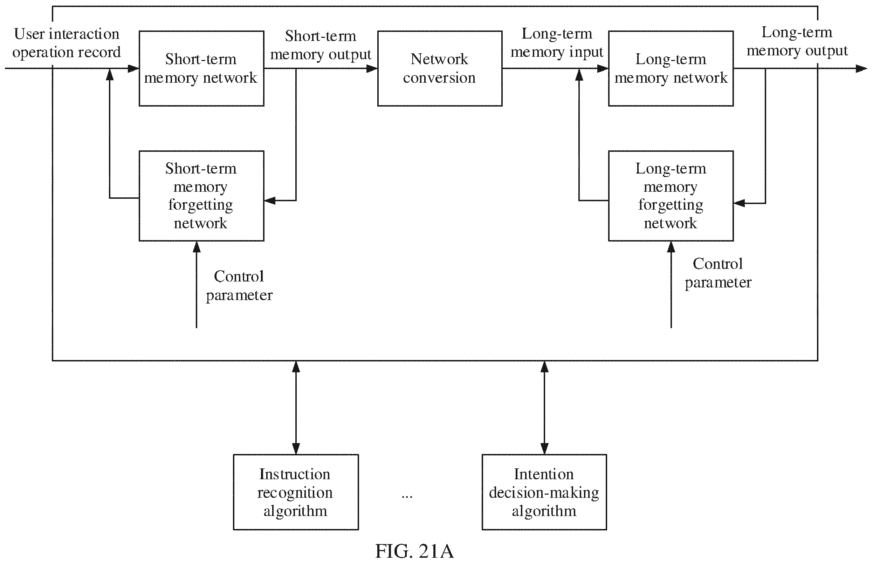

A memory model constructed in the label structured data form shown in Table 7 may be shown in FIG. 21A. The short-term memory model in this example may include a short-term memory network and a short-term memory forgetting network, and the long-term memory model may include a long-term memory network and a long-term memory forgetting network. The short-term memory model and the long-term memory model may be constructed by using one or more artificial neural network algorithms such as CNN, RNN, and LSTM. The short-term memory network may be trained and constructed by using the interaction operation record as an input, and a short-term memory label value or a parameter value corresponding to the interaction operation record as an expected output; and the long-term memory network may be trained and constructed by using an output of the short-term memory network as an input, and a corresponding long-term memory label value or a parameter value as an expected output. The short-term memory forgetting network and the long-term memory forgetting network may be used for reverse feedback, to implement forgetting degradation of the short-term memory and the long-term memory. Optionally, the short-term memory forgetting network/long-term memory forgetting network may control forgetting degradation of memory information at different rates or weights by adjusting a control parameter of the short-term memory forgetting network/long-term memory forgetting network. Optionally, the memory model may convert an output of the short-term memory network into an input of the long-term memory network by using a specified conversion network.

S1503: The third composable capability performs instruction recognition and/or intention decision-making based on the memory model.

Specifically, the memory model may be stored in a form of a database, so that an interaction instruction recognition module and a multi-modality intention decision-making module can read. The memory model (for example, the short-term memory network and the long-term memory network in the foregoing example of FIG. 21A) may alternatively be stored in a form of a machine learning model like an artificial neural network or a decision tree, and used as a component part of an algorithm in a module like the interaction instruction recognition module or the multi-modality intention decision-making module in the second device, so that the interaction instruction recognition module can recognize the user intention based on the memory model, and the multi-modality intention decision-making module can perform intention decision-making based on the memory model.

According to the foregoing personalized interaction method provided in this embodiment of this application, the virtual aggregation device can more accurately recognize, based on a high-frequency operation behavior of the user included in the interaction operation record, an instruction entered by the user. This improves accuracy of the interaction between the user and the device, improves efficiency of recognizing the user intention, and more conforms to a personal use habit of the user.

In embodiments of this application, a user profile-based interaction method may be further provided, and the method is applied to the foregoing steps S107 and S108.

The virtual aggregation device may determine a user profile of the user, explore a user requirement based on the user profile, analyze a user preference, and provide the user with more efficient and targeted information transmission and user experience that more conforms to a personal habit. The user profile can be used to construct descriptive labels for the user in a plurality of dimensions to outline real personal characteristics of the user in a plurality of aspects. The user profile refers to a labeled user model abstracted based on information such as a basic attribute, a user preference, a living habit, and a user behavior of the user. The user profile may be obtained by using the third composable capability from user information synchronized between devices. The user information may include inherent attributes of the user, for example, a gender and an age of the user, and may further include interaction information between the user and the device, for example, a quantity of times that the user starts the device, a quantity of times that the user shuts down the device, and operations triggered to perform by the device in different scenarios. The third composable capability may recognize, based on the user profile, the user intention indicated by the first event.

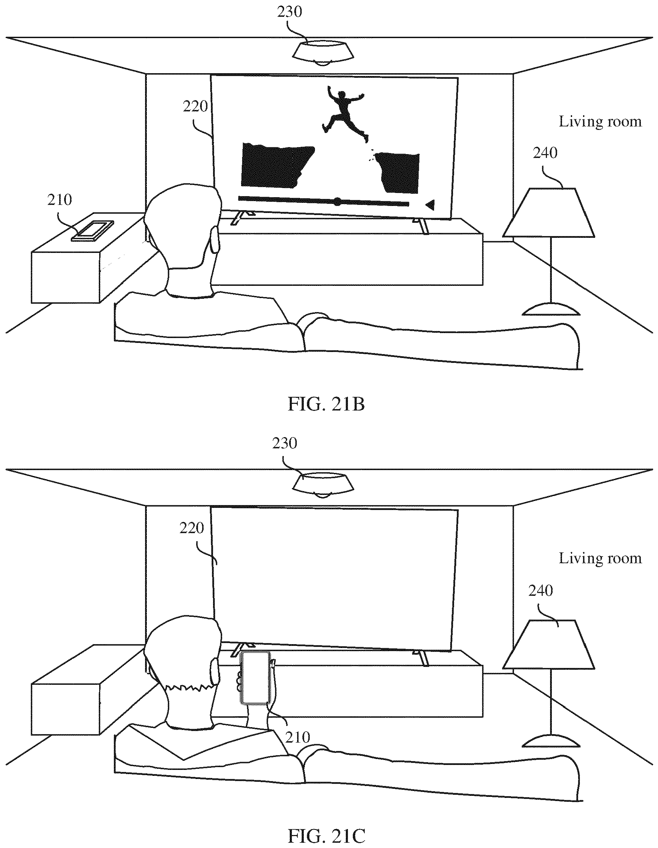

A living room scenario shown in FIG. 21B and a living room scenario shown in FIG. 21C are used as examples. In the living room scenarios in the foregoing two examples, a virtual aggregation device may include the following plurality of devices: a mobile phone 210, a smart screen 220, a headlamp 230, and a floor lamp 240. In the virtual aggregation device, the mobile phone 210 may be used as a central control device. A user A shown in FIG. 21B is sitting on a sofa and watching a video played on the smart screen 220. The floor lamp 240 is turned on. The user A may send a voice instruction "brighter" (which may also be referred to as a first event). A user B shown in FIG. 21C is sitting on a sofa and reading information on the mobile phone 210. The headlamp 230 is turned on. The user B may also send a voice instruction "brighter" (which may also be referred to as the first event). It can be learned that the user A and the user B send the same voice instruction. After receiving the voice instruction of the user A and the user B, the mobile phone 210 may determine a user intention A of the user A and a user intention B of the user B based on a user profile A corresponding to the user A and a user profile B corresponding to the user B. Then, the mobile phone 210 may trigger a task mapping module to arrange a to-be-executed task A based on the user intention A, and arrange a to-be-executed task B based on the user intention B. The mobile phone 210 may trigger a service capability scheduling module to map the to-be-executed task A and the to-be-executed task B to a composable capability of each device.

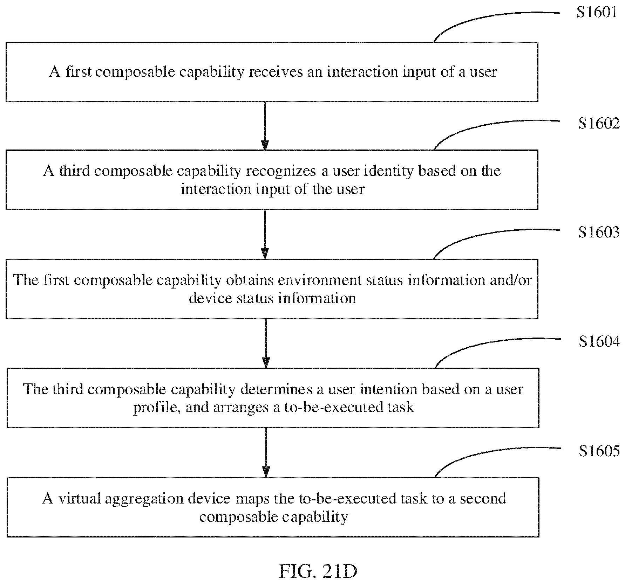

Based on the application scenarios shown in FIG. 21B and FIG. 21C and with reference to FIG. 21D, the user profile-based interaction method provided in this embodiment of this application is specifically described below. As shown in FIG. 21D, the user profile-based interaction method may specifically include the following steps.

S 1601: A first composable capability receives an interaction input of a user.

Specifically, in this embodiment of this application, a first composable capability of a first device may receive the interaction input of the user. There may be one or more first devices. The first composable capability may be one or more interaction composable capabilities of the first device. Categories included in the interaction composable capabilities may be shown in FIG. 4.

For example, in the application scenario shown in FIG. 21B, when the user A sends the voice instruction "brighter", the smart screen 220 may receive the voice instruction by using a near-field voice input capability running on the smart screen 220. In the application scenario shown in FIG. 21C, when the user B sends the voice instruction "brighter", the mobile phone 210 may receive the voice instruction by using a near-field voice input capability running on the mobile phone 210. Optionally, in the application scenario shown in FIG. 21B, the voice instruction of the user A may alternatively be received by using the near-field voice input capability running on the mobile phone 210. In the application scenario shown in FIG. 21C, the voice instruction of the user B may alternatively be received by using the near-field voice input capability running on the smart screen 220. In other words, a type of the first device is not limited in this embodiment of this application.

S1602: A third composable capability recognizes a user identity based on the interaction input of the user.

Specifically, in this embodiment of this application, a third composable capability of a second device may recognize the user identity based on user physiological feature information included in the interaction input. For example, the third composable capability may recognize the user identity based on voiceprint information included in the interaction input, or the third composable capability may recognize the user identity based on facial feature information included in the interaction input.

For example, in the application scenarios shown in FIG. 21B and FIG. 21C, the second device may be the mobile phone 210. The mobile phone 210 may recognize, by using the third composable capability and based on voiceprint information included in the voice instruction entered by the user A, that a user identity corresponding to the voice instruction is the "user A". Similarly, the mobile phone 210 may recognize, by using the third composable capability and based on voiceprint information included in the voice instruction entered by the user B, that a user identity corresponding to the voice instruction is the "user B".

S1603: The first composable capability obtains environment status information and/or device status information.

Specifically, in this embodiment of this application, the first composable capability of the first device may obtain the environment status information and/or device status information. There may be one or more first devices. The first composable capability may be the recognition composable capability shown in FIG. 4.

For example, in the application scenario in FIG. 21B, a third device may be the smart screen 220. The smart screen 220 may detect that the smart screen 220 is playing a video, and recognize, by using an environment recognition composable capability running on the smart screen 220, yellow light emitted by the floor lamp 240. In the application scenario in FIG. 21C, the third device may be the mobile phone 210. The mobile phone 210 may detect that the mobile phone 210 is used by the user, and recognize, by using an environment recognition composable capability running on the mobile phone 210, white light emitted by the headlamp 230.

S1604: The third composable capability determines a user intention based on a user profile, and arranges a to-be-executed task.

Specifically, a virtual aggregation device may create and maintain the user profile of the user based on a status of an interaction between the user and each device. The third composable capability of the second device may determine the user intention based on the user identity recognized in step S1602 and the user profile corresponding to the user. Then, the third composable capability may arrange the to-be-executed task based on the user intention.

For example, in the application scenario in FIG. 21B, the second device may be the mobile phone 210. The mobile phone 210 recognizes, in step S1602, that the identity of the user that sends the voice instruction is the "user A". The mobile phone 210 may obtain the user profile A of the user A from a user profile module. The mobile phone 210 may obtain, from the user profile A by using the third composable capability, that the user A turns on the floor lamp 240 when watching a video on the smart screen 220, and then determines that the user intention A is to increase brightness of the floor lamp 240. The mobile phone 210 may trigger the task mapping module to arrange the to-be-executed task A based on the user intention A, that is, increase brightness of the floor lamp 240. In the application scenario in FIG. 21C, the second device may be the mobile phone 210. The mobile phone 210 recognizes, in step S 1602, that the identity of the user that sends the voice instruction is the "user B". The mobile phone 210 may obtain the user profile B of the user B from the user profile module. The mobile phone 210 may obtain, from the user profile B by using the third composable capability, that the user B turns on the headlamp 230 when using the mobile phone 210, and then determines that the user intention B is to increase brightness of the headlamp 230. The mobile phone 210 may trigger the third composable capability to arrange the to-be-executed task B based on the user intention B, that is, increase brightness of the headlamp 230.

S1605: The virtual aggregation device maps the to-be-executed task to a second composable capability.

Specifically, in this embodiment of this application, the virtual aggregation device may map the to-be-executed task arranged by the third composable capability of the second device to a second composable capability of the third device, so that the second composable capability performs a corresponding operation.

For example, in the application scenario in FIG. 21B, the virtual aggregation device may map the to-be-executed task A, that is, increase brightness of the floor lamp 240, to a light adjustment capability of the floor lamp 240, so that the floor lamp 240 can implement the user intention A, and yellow light emitted by the floor lamp 240 is brighter. In the application scenario in FIG. 21C, the virtual aggregation device may map the to-be-executed task B, that is, increase brightness of the headlamp 230, to a light adjustment capability of the headlamp 230, so that the headlamp 230 can implement the user intention B, and white light emitted by the headlamp 230 is brighter.

According to the user profile-based interaction method provided in this embodiment of this application, the virtual aggregation device can more accurately recognize a user intention, and efficiency of recognizing the user intention is improved.

To more clearly describe the multi-device based method for providing a service according to embodiments of this application, a procedure of the method is described below by using a typical application scenario as an example.

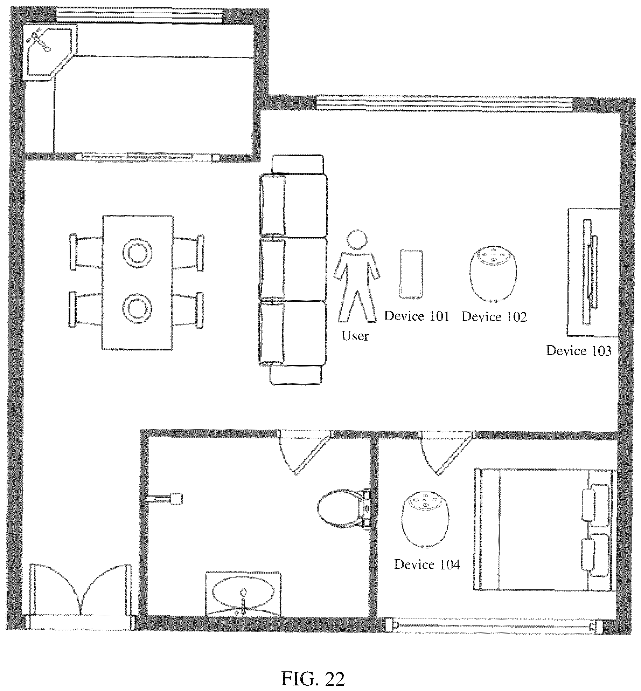

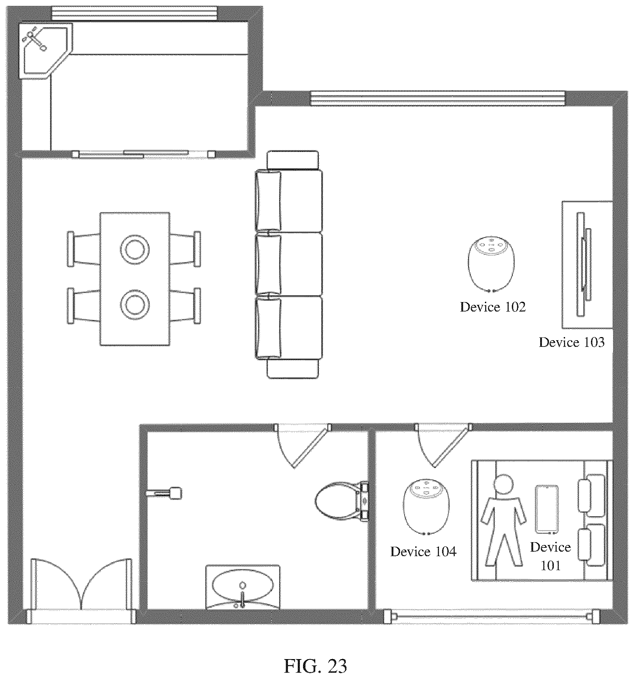

In a home scenario, a user carries a smartphone (device 101), a smart speaker (device 102) and a smart screen (device 103) are installed in a living room, a smart speaker (device 104) is installed in a bedroom, and millimeter wave sensors (devices 105, not shown in FIG. 22 and FIG. 23) that can sense a user position are installed in rooms such as the living room and the bedroom. In this case, the user performs the following activities or interaction operations: (1) returning to the smart home scenario from outside; (2) using the smartphone (device 101) while sitting on a sofa in the living room; (3) moving to the bedroom, and using the smartphone (device 101) while lying on a bed in the bedroom; and (4) sending a voice instruction "Play the music Common Jasmin Orange". With reference to the procedure shown in FIG. 2, a basic working procedure of the system is as follows:

S101: As shown in FIG. 22, after the user returns from outside, the smartphone (device 101) automatically connects to a pre-stored Wi-Fi network, and establishes interconnections with the devices 102 to 105. The devices 101 to 105 have logged in to a user account with a same ID. The user account is used as an authentication and authorization basis. The devices can completely request and access software and hardware resources of each other.

S102: After the interconnections are established, the devices 101 to 105 exchange information such as an available status of a composable capability, power consumption, and computing resources.

S103: Select, by using a static or dynamic policy, a device from the devices 101 to 105 as a central control device for controlling a service of a smart assistant. For example, if system power consumption and a processing capability are mainly considered, and an optimization objective is to select a device that runs online stably and has a specific processing capability as a central control device, the smart screen (device 103) can be selected as the central control device because the smart screen is powered by a mains supply (while the mobile phone is powered by a battery), and has a specific computing capability (while the smart speaker depends on a cloud service and basically has no computing capability).

S104: The central control device smart screen (device 103), controls an initialization configuration of the virtual aggregation device, and constructs an available composable capability set or list in a distributed system. An example of the set or list is shown in Table 8.

S105: Optionally, the central control device smart screen (device 103) may control a part of composable capabilities in the system to start, for example, a user position detection capability of the millimeter wave sensor (device 105), to support subsequent decision-making and/or a subsequent service.

**Table 8 Partial example of an available composable capability set in a distributed system**

| Device | Composable capability type | Parameter/Attribute | Available status |
|---|---|---|---|
| Smartphone (device 101) | Near-field sound pickup | 0 m to 0.5 m | True |
| | Near-field ASR recognition | 0 m to 0.5 m | True |
| | Device-side NLU recognition | - | True |
| | Music playing | 2-channel | True |
| | ... | ... | ... |
| Smart speaker (devices 102&104) | Far-field sound pickup | 0 m to 5 m | True |
| | Cloud-side far-field ASR recognition | 0 m to 5 m | True |
| | Cloud-side NLU recognition | - | True |
| | Music playing | 5.1-channel | True |
| | ... | ... | ... |
| Smart screen | Far-field sound pickup | 0 m to 5 m | True |

(continued)

| Device | Composable capability type | Parameter/Attribute | Available status |
|---|---|---|---|
| (device 103) | Cloud-side far-field ASR recognition | 0 m to 5 m | True |
| | Cloud-side NLU recognition | - | True |
| | Device-side NLU recognition | Broadcast control vertical domain | True |
| | Music playing | 5.1-channel | True |
| | ... | ... | ... |
| Millimeter wave sensor (device 105) | User position detection | - | True |

S101, S102, 103, S104, and S105 may be considered as S102, S103, S104, and S105 in the method in FIG. 3.

S201: A system senses, by using a user position detection capability, that a user sits on a sofa in a living room and uses an indoor mobile phone (device 101).

S202: Predict, with reference to information such as a historical operation record of the user, a man-machine interaction history, and current time/schedule, that a potential service requirement of the user is audio and video playing.

S203 is optional: Determine, based on the potential service requirement (audio and video playing) of the user, and information such as a user preference and an operation/interaction history, that a service solution to be used by the virtual aggregation device is audio and video playing controlled by a voice interaction.

S204: Apply, based on the service solution of the virtual aggregation device, for a composable capability that supports the solution in the distributed system, for example, far-field sound pickup (device 102), cloud-side far-field ASR recognition (device 102), cloud-side NLU recognition (device 102), and music playing (device 102). The process of applying for the composable capability includes performing initialization and occupation of the composable capability across devices (for example, setting the available status to False). As shown in FIG. 22, in this scenario, there are three optional voice interaction control channels including the smartphone (device 101), the smart speaker (device 102), and the smart screen (device 103), and a dynamic or static policy may be used to select a most appropriate (for example, a latest invoked) voice interaction control channel. Alternatively, all of the three voice interaction control channels may be selected, and a part of processing results are selected in a subsequent process, or the processing results are combined. Herein, only the voice interaction control channel of the smart speaker (device 102) is selected as an example. To be specific, the far-field sound pickup capability of the device 102 is selected as an interaction entry, and matching cloud-side far-field ASR recognition (device 102, device 103, or device 104) and cloud-side NLU recognition (device 102, device 103, or device 104) capabilities are used as recognition components.

S205: The central control device smart screen (device 103) controls reconfiguration of the virtual aggregation device, including releasing a composable capability that is temporarily not used and related to the device 104; and configures the virtual aggregation device, for example, configures the far-field sound pickup capability of the device 102 as an interaction entry of the virtual aggregation device.

S201 to S205 may be considered as S109 in the method shown in FIG. 3, that is, a process of reconfiguring the virtual aggregation device.

S206: The virtual aggregation device continuously monitors a status change event. As shown in FIG. 23, after it is detected that the user moves to the bedroom, the central control device smart screen (device 103) controls the virtual aggregation device to be reconfigured. The interaction entry of the virtual aggregation device is switched from the far-field sound pickup capability of the device 102 to the far-field sound pickup capability of the device 104, and a composable capability that is temporarily not used and related to the device 102 is released.

S206 may be considered as S109 in the method shown in FIG. 3, that is, another process of reconfiguring the virtual aggregation device.

S301: The virtual aggregation device continuously monitors a user triggering instruction, for example, picks up a voice wake-up word by using the far-field sound pickup capability of the device 104, and triggers a voice interaction procedure.

S302: The user enters an interaction instruction, for example, a user voice instruction "Play the music Common Jasmin Orange" is picked up by using the far-field sound pickup capability of the device 104.

S303: Recognize a user intention, for example, recognize, by using capabilities such as cloud-side far-field ASR recognition and cloud-side NLU recognition of the device 104, that a service requirement type of the user is "playing music" and playing content is "Common Jasmin Orange".

S304: Segment a user intention recognition result into a to-be-executed task, for example, segment and map the user service requirement into a to-be-executed task "playing music" that can be executed by a single composable capability.

S305: Match the to-be-executed task to a composable capability, for example, map the to-be-executed task "playing music" to the music playing composable capability of the device 104. As shown in Table 1, because the devices 101 to 104 all have the music playing composable capability, a process in which the music playing composable capability of the device 104 needs to be selected may be decided with reference to a plurality of factors such as a current position (the bedroom) and a preference (preferring to use a speaker) of the user.

S306: Control the composable capability to execute the to-be-executed task, for example, control the music playing composable capability of the device 104 to execute the to-be-executed task "playing music" until the end. The example involves only a single to-be-executed task. Optionally, in a scenario involving a plurality of to-be-executed tasks, the plurality of to-be-executed tasks may be organized into a directed acyclic graph according to a time sequence and a logical relationship, and controlled to be executed sequentially.

S301 and S302 may be considered as S106 in the method shown in FIG. 3, S303 and S304 may be considered as S107 in the method shown in FIG. 3, and S305 and S306 may be considered as S108 in the method shown in FIG. 3.

An embodiment of this application further provides a computer-readable storage medium. The computer-readable storage medium stores a computer program. When the computer program is run on a computer, the computer is enabled to perform related steps separately performed by the foregoing devices such as the central control device, the first device, the second device, and the third device, to implement the multi-device based method for providing a service according to the foregoing embodiments.

An embodiment of this application further provides a computer program product. When the computer program product runs on a computer, the computer is enabled to perform related steps separately performed by the foregoing devices such as the central control device, the first device, the second device, and the third device, to implement the multi-device based method for providing a service according to the foregoing embodiments.

In addition, an embodiment of this application further provides an apparatus. The apparatus may be specifically a component or a module, and the apparatus may include one or more processors and memories that are connected. The memory is configured to store a computer program. When the computer program is executed by the one or more processors, the apparatus is enabled to perform related steps separately performed by the foregoing devices such as the central control device, the first device, the second device, and the third device.

The apparatus, the computer-readable storage medium, the computer program product, or a chip provided in embodiments of this application are all configured to perform the multi-device based method for providing a service provided above. Therefore, for beneficial effects that can be achieved, refer to beneficial effects in the corresponding method provided above. Details are not described herein again.

The multi-device based method for providing a service according to embodiments of this application can achieve the following technical effects.

1. Consistent experience: The technical solutions in this application are similar to PaaS (Platform-as-a-Service) in cloud computing in a sense. Resources of different devices are abstracted and aggregated into a virtual aggregation device, and the virtual aggregation device is used as a running bearer platform of a smart assistant. On the platform, only a unique application instance of the smart assistant is run to provide a man-machine interaction service. This ensures consistency of an interaction context, a user profile, and personalized data, and avoids experience inconsistency during interaction entry device switching because each device independently runs a smart assistant instance when a user interacts with a plurality of devices.

2. Low power consumption: As described above, because only one application instance of the smart assistant runs in the distributed system, system processing power consumption can be reduced to some extent.

3. High interaction accuracy: In the technical solutions of this application, the distributed system may adaptively select, based on an environment status, an appropriate composable capability, for example, a sound pickup microphone, a camera, or an AI algorithm model. In one aspect, an interaction peripheral that is close to the user, that is of interest to the user, and/or that has low interference may be selected, to avoid impact on interaction accuracy caused by an interaction signal picked up by an ineffective and inefficient peripheral. In another aspect, capabilities of a part of devices with insufficient resources can be expanded, and an AI algorithm model with high accuracy and a large computing amount in the system is selected, to improve interaction recognition accuracy.

4. Easy ecosystem expansion: The abstract resource description method described in this application is decoupled from elements such as a device model, a manufacturer, and an ecosystem. A device that complies with the description specification and/or a component interface standard may adaptively access the distributed system described in this application. The solution has good universality and reduces adaptation difficulty.

The implementations of this application may be randomly combined to achieve different technical effects.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Persons of ordinary skill in the art may understand that all or some of the processes of the methods in embodiments may be implemented by a computer program instructing related hardware. The program may be stored in a computer-readable storage medium. When the program is run, the processes of the methods in embodiments are performed. The foregoing storage medium includes any medium that can store program code, for example, a ROM, a random access memory RAM, a magnetic disk, or an optical disc.

In conclusion, the foregoing descriptions are merely embodiments of the technical solutions of this application, but are not intended to limit the protection scope of this application. Any modification, equivalent replacement, and improvement made according to the disclosure of this application shall fall within the protection scope of this application.

**Claims**

1. A multi-device based communication system for providing a service, wherein the communication system comprises a plurality of electronic devices, the plurality of electronic devices comprise a central control device, and the central control device is configured to manage a plurality of resources to enable the plurality of resources to perform the following steps:

   detecting, by a first resource in the plurality of resources, a first event, wherein there is one or more first resources; and

   executing, by a second resource in the plurality of resources, a to-be-executed task corresponding to the first event, wherein there is one or more second resources, and all resources comprised in the first resource and/or the second resource come from at least two different electronic devices, wherein

   the plurality of resources managed by the central control device comprise a part of or all resources of the plurality of electronic devices.

2. The communication system according to claim 1, wherein the central control device is further configured to manage the plurality of resources to enable the plurality of resources to perform the following step:
   before the executing, by a second resource, a to-be-executed task corresponding to the first event, recognizing, by a third resource in the plurality of resources, a user intention indicated by the first event, and determining the to-be-executed task that meets the user intention.

3. The communication system according to claim 1 or 2, wherein the resource is a composable capability, and the composable capability is a resource described in a preset manner; and
   the first resource is a first composable capability, and the second resource is a second composable capability.

4. The communication system according to claim 3, wherein the central control device is further configured to:

   before the central control device manages the plurality of resources to enable the plurality of resources to perform the steps in claim 1, configure composable capabilities of a part of or all the plurality of electronic devices into a virtual aggregation device, wherein

   both the first composable capability and the second composable capability are composable capabilities of the virtual aggregation device.

**5.** The communication system according to claim 4, wherein
the central control device is specifically configured to configure parameters of the composable capabilities of the part of or all the plurality of electronic devices.

**6.** The communication system according to claim 4 or 5, wherein

the central control device is further configured to: before configuring the composable capabilities of the part of or all the plurality of electronic devices into the virtual aggregation device, receive composable capability information sent by a device other than the central control device, wherein the composable capability information indicates a composable capability provided by the corresponding device; and
the central control device is specifically configured to configure, based on composable capability information of the plurality of electronic devices, the composable capabilities of the part of or all the plurality of electronic devices into the virtual aggregation device.

**7.** The communication system according to any one of claims 4 to 6, wherein
the virtual aggregation device is configured to run a single smart assistant, and the single smart assistant is configured to support the central control device in managing the plurality of resources to enable the plurality of resources to perform the steps in claim 1.

**8.** The communication system according to any one of claims 4 to 7, wherein

the central control device is specifically configured to configure the following items into the virtual aggregation device: a composable capability of the central control device, and a fourth composable capability of an electronic device other than the central control device in the communication system, wherein
the fourth composable capability is determined by the central control device according to a preset policy, or the fourth composable capability is determined based on environment information after the central control device learns the environment information by using the composable capability of the central control device.

**9.** The communication system according to claim 8, wherein the fourth composable capability is determined by the central control device according to the preset policy, and the fourth composable capability specifically comprises:

all composable capabilities of the electronic device other than the central control device in the communication system;
a composable capability that is for collecting non-privacy content and that is of the electronic device other than the central control device in the communication system; or
a composable capability of an electronic device that is connected to a power supply and that is other than the central control device in the communication system.

**10.** The communication system according to claim 8 or 9, wherein

the central control device is further configured to manage the plurality of resources to enable the plurality of resources to perform the following steps: after the central control device configures the composable capabilities of the part of or all the plurality of electronic devices into the virtual aggregation device, detecting, by the first composable capability, a second event, and determining, by the second composable capability, a service solution based on the second event; and
the central control device is further configured to reconfigure a composable capability corresponding to the service solution into the virtual aggregation device.

**11.** The communication system according to any one of claims 4 to 10, wherein the central control device is specifically configured to configure the composable capabilities of the part of or all the plurality of electronic devices into the virtual aggregation device based on one or more of the following: a user status, a device status, an environment status, a user profile, a global context, or a memory.

**12.** The communication system according to any one of claims 1 to 11, wherein the first event comprises any one of the following:

a first operation entered by a user;
an event in which the user status changes;

an event in which a distance between the user and the electronic device changes;
an event in which the environment status changes; and
an event in which the electronic device obtains a notification message or obtains information about a to-be-executed schedule.

**13.** The communication system according to any one of claims 3 to 11, wherein

the first composable capability comprises a plurality of composable capabilities for collecting first modality data;
the first composable capability is determined by the central control device based on one or more of a user habit, activenesses of composable capabilities, distances between the composable capabilities and a user, and a default sorting;
the first composable capability comprises a composable capability selected by a user; or
the first composable capability comprises a composable capability of an electronic device on which a user focuses.

**14.** The communication system according to any one of claims 3 to 11, and 13, wherein

the second composable capability comprises a composable capability of a device in which the first composable capability is located;
the second composable capability is determined by the central control device based on one or more of the user habit, the activenesses of the composable capabilities, the distances between the composable capabilities and the user, and the default sorting;
the second composable capability comprises the composable capability selected by the user; or
the second composable capability comprises the composable capability of the device on which the user focuses.

**15.** The communication system according to claim 13 or 14, wherein

the central control device is further configured to determine, based on an image captured by a fourth device, the device on which the user focuses;
the central control device is further configured to determine, based on an audio captured by a fourth device and an audio and an image captured by a fifth device, the device on which the user focuses; or
the central control device is further configured to determine, based on an image captured by a fourth device and an image captured by a fifth device, the device on which the user focuses.

**16.** The communication system according to any one of claims 1 to 15, wherein the plurality of electronic devices are configured to determine the central control device from the plurality of electronic devices in any one of the following cases:

an electronic device in the plurality of electronic devices receives a second operation;
preset time is reached;
an electronic device joins or leaves the communication system; or
the plurality of electronic devices form the communication system for preset duration.

**17.** The communication system according to any one of claims 1 to 16, wherein the plurality of electronic devices are specifically configured to:

determine the central control device from the plurality of electronic devices based on one or more of resource stability, a device modality, or the user habit;
determine an electronic device of a preset type in the plurality of electronic devices as the central control device;
determine an electronic device selected by the user as the central control device; or
determine the central control device from the plurality of electronic devices based on historical interaction information of each electronic device.

**18.** The communication system according to claim 17, wherein the plurality of electronic devices are specifically configured to:

determine an electronic device with a largest average quantity of online devices as the central control device, wherein an average quantity of online devices is an average quantity that is of online devices in the communication system in unit time and that is collected by an electronic device in a statistical time period;

determine an electronic device with a largest normalized standard deviation of the average quantity of online devices as the central control device;

determine, as the central control device, an electronic device whose average quantity of online devices is greater than a first value and whose normalized standard deviation of the average quantity of online devices is greater than a second value; or

determine an electronic device whose average quantity of online devices has a largest mathematical expectation value as the central control device.

19. The communication system according to any one of claims 1 to 18, wherein there are a plurality of central control devices, and the plurality of central control devices are connected to all of the electronic devices in the communication system at same time or in a same space.

20. The communication system according to claim 2, wherein the central control device is specifically configured to manage the plurality of resources to enable the plurality of resources to perform the following steps:

segmenting, by the third resource, the user intention into a plurality of to-be-executed tasks by modality; and
executing, by different second resources, the to-be-executed tasks in different modalities.

21. The communication system according to claim 2, wherein

the to-be-executed task that meets the user intention comprises a plurality of tasks having a logical relationship, wherein the logical relationship comprises any one or more of the following: a sequence relationship, a condition relationship, a cyclic relationship, or Boolean logic; and
the central control device is specifically configured to manage the plurality of resources to enable the plurality of resources to perform the following step: executing, by the second resource according to the logical relationship, the plurality of tasks having the logical relationship.

22. The communication system according to claim 2, wherein
the central control device is further configured to manage the plurality of resources to enable the plurality of resources to perform the following steps:

before the recognizing, by a third resource, a user intention indicated by the first event, receiving, by a plurality of first resources, an interaction input; and
generating, by the third resource, a global context based on the interaction input, wherein the global context comprises one or more of the following: time at which the first resource receives the interaction input, the first resource, interaction content of the interaction input, physiological feature information of a user corresponding to the interaction input, device information of an electronic device to which the first resource belongs, or device information of a target device controlled by the interaction input; and
the central control device is specifically configured to manage the plurality of resources to enable the plurality of resources to perform the following step: recognizing, by the third resource based on the global context, the user intention indicated by the first event.

23. The communication system according to claim 22, wherein the interaction input comprises a historical input and a current input, and the global context comprises historical interaction information and current-round interaction information; and
the central control device is specifically configured to manage the plurality of resources to enable the plurality of resources to perform the following steps:

obtaining, by the first resource, the historical interaction information based on the historical input, and obtaining the current-round interaction information based on the current input;
matching, by the third resource from the historical interaction information, first historical interaction information associated with the current-round interaction information; and
recognizing, by the third resource based on the first historical interaction information, the user intention indicated by the first event.

24. The communication system according to claim 23, wherein the first historical interaction information comprises:

historical interaction information related to a first user, wherein the first user is a user that triggers the current input;

historical interaction information received by a sixth device at first time, wherein the sixth device is a first device or a near-field device of the first device, and an interval between the first time and time of receiving the current-round interaction information is less than first duration;

second historical interaction information received at second time, wherein a target device of the second historical interaction information is a target device or a near-field device of the current-round interaction information, and an interval between the second time and time of receiving the current-round interaction information is less than second duration; or

historical interaction information whose correlation with the current-round interaction information is greater than a threshold.

25. The communication system according to claim 2, wherein the first event comprises first dialogue information, the first dialogue information comprises a first instruction and a second instruction, an intention corresponding to the first instruction is associated with an intention corresponding to the second instruction, and the first instruction comprises a first pronoun;

the central control device is further configured to manage the plurality of resources to enable the plurality of resources to perform the following step: before the recognizing, by the second resource, the user intention indicated by the first event, replacing an object indicated by the first pronoun in the first dialogue information with an object corresponding to the second instruction, to obtain second dialogue information; and

the central control device is specifically configured to manage the plurality of resources to enable the plurality of resources to perform the following step: recognizing, by the third resource based on the second dialogue information, the user intention indicated by the first event.

26. The communication system according to claim 2, wherein
the central control device is further configured to manage the plurality of resources to enable the plurality of resources to perform the following steps:

before the recognizing, by a third resource, a user intention indicated by the first event, receiving, by the first resource, an interaction input within first preset time, and determining, by the third resource, a memory based on the interaction input, wherein the memory indicates a habit or preference for an interaction between a user and a device; and

the central control device is specifically configured to manage the plurality of resources to enable the plurality of resources to perform the following step: recognizing, by the third resource based on the memory, the user intention indicated by the first event.

27. The communication system according to claim 2, wherein

the central control device is further configured to manage the plurality of resources to enable the plurality of resources to perform the following step: before the recognizing, by a third resource, a user intention indicated by the first event, obtaining, by the third resource, a user profile; and

the central control device is specifically configured to manage the plurality of resources to enable the plurality of resources to perform the following step: recognizing, by the third resource based on the user profile, the user intention indicated by the first event.

28. The communication system according to any one of claims 2 and 20 to 27, wherein the central control device is specifically configured to manage the plurality of resources to enable the plurality of resources to perform the following steps:

recognizing, by the third resource based on any one or more of the following: a user status, a device status, an environment status, the user profile, the global context, or the memory, the user intention indicated by the first event, and determining the to-be-executed task that meets the user intention.

29. The communication system according to any one of claims 1 to 28, wherein the first event comprises a plurality of types of modality data, and the central control device is specifically configured to manage the plurality of resources to enable the plurality of resources to perform the following step:

collecting, by the first resource, corresponding modality data by using a first sampling rate, wherein the first sampling rate is a preset sampling rate, or the first sampling rate is a sampling rate of a resource with a highest activeness in a plurality of resources comprised in the first resource.

30. The communication system according to claim 3, wherein

composable capabilities of the plurality of electronic devices comprise an interaction composable capability and a service composable capability; and
the first composable capability belongs to the interaction composable capability, and the second composable capability belongs to the service composable capability.

31. The communication system according to claim 3, wherein composable capabilities of the plurality of electronic devices comprise any one or more of the following: a camera resource, a microphone resource, a sensor resource, a display resource, or a computing resource that is described in the preset manner.

32. The communication system according to claim 4, wherein composable capability information further comprises any one or more of the following: a position, an orientation, a category, performance, a parameter, a version, or a size of the composable capability.

33. The communication system according to any one of claims 1 to 32, wherein the plurality of electronic devices perform communication by using any one or more of the following technologies: a WLAN, Wi-Fi P2P, BT, NFC, IR, ZigBee, UWB, a hotspot, a Wi-Fi softAP, a cellular network, or a wired technology.

34. A multi-device based method for providing a service, wherein the method is applied to a central control device, and the method comprises:
managing, by the central control device, a plurality of resources to enable the plurality of resources to perform the following steps:

detecting, by a first resource in the plurality of resources, a first event, wherein there is one or more first resources; and
executing, by a second resource in the plurality of resources, a to-be-executed task corresponding to the first event, wherein there is one or more second resources, and all resources comprised in the first resource and/or the second resource come from at least two different electronic devices, wherein
the plurality of resources managed by the central control device comprise a part of or all resources of a plurality of electronic devices, and the plurality of electronic devices comprise the central control device.

35. The method according to claim 34, wherein before the executing, by a second resource, a to-be-executed task corresponding to the first event, the method further comprises:
managing, by the central control device, the plurality of resources to enable the plurality of resources to perform the following steps: recognizing, by a third resource in the plurality of resources, a user intention indicated by the first event, and determining the to-be-executed task that meets the user intention.

36. The method according to claim 34 or 35, wherein the resource is a composable capability, and the composable capability is a resource described in a preset manner; and
the first resource is a first composable capability, and the second resource is a second composable capability.

37. The method according to claim 36, wherein before the central control device manages the plurality of resources to enable the plurality of resources to perform the steps in claim 34, the method further comprises:

configuring, by the central control device, composable capabilities of a part of or all the plurality of electronic devices into a virtual aggregation device, wherein
both the first composable capability and the second composable capability are composable capabilities of the virtual aggregation device.

38. The method according to claim 37, wherein the configuring, by the central control device, composable capabilities of a part of or all the plurality of electronic devices into a virtual aggregation device specifically comprises:
configuring, by the central control device, parameters of the composable capabilities of the part of or all the plurality of electronic devices.

39. The method according to claim 37 or 38, wherein

before the configuring, by the central control device, composable capabilities of a part of or all the plurality of electronic devices into a virtual aggregation device, the method further comprises: receiving, by the central control device, composable capability information sent by a device other than the central control device, wherein the composable capability information indicates a composable capability provided by the corresponding device; and

configuring, by the central control device based on composable capability information of the plurality of electronic devices, the composable capabilities of the part of or all the plurality of electronic devices into the virtual aggregation device.

40. The method according to any one of claims 37 to 39, wherein
the virtual aggregation device is configured to run a single smart assistant, and the single smart assistant is configured to support the central control device in managing the plurality of resources to enable the plurality of resources to perform the steps in claim 34.

41. The method according to any one of claims 37 to 40, wherein the configuring, by the central control device, composable capabilities of a part of or all the plurality of electronic devices into a virtual aggregation device specifically comprises:

configuring, by the central control device, the following items into the virtual aggregation device: a composable capability of the central control device, and a fourth composable capability of an electronic device other than the central control device in a communication system, wherein
the fourth composable capability is determined by the central control device according to a preset policy, or the fourth composable capability is determined based on environment information after the central control device learns the environment information by using the composable capability of the central control device.

42. The method according to any one of claims 37 to 41, comprising: after the configuring, by the central control device, composable capabilities of a part of or all the plurality of electronic devices into a virtual aggregation device,

managing, by the central control device, the plurality of resources to enable the plurality of resources to perform the following steps: detecting, by the first composable capability, a second event, and determining, by the second composable capability, a service solution based on the second event; and
reconfiguring, by the central control device, a composable capability corresponding to the service solution into the virtual aggregation device.

43. The method according to any one of claims 34 to 42, wherein the first event comprises any one of the following:

a first operation entered by a user;
an event in which a user status changes;
an event in which a distance between the user and the electronic device changes;
an event in which an environment status changes; and
an event in which the electronic device obtains a notification message or obtains information about a to-be-executed schedule.

44. The method according to claim 35, comprising: managing, by the central control device, the plurality of resources to enable the plurality of resources to perform the following steps:

segmenting, by the third resource, the user intention into a plurality of to-be-executed tasks by modality; and
executing, by different second resources, the to-be-executed tasks in different modalities.

45. The method according to claim 35, wherein the to-be-executed task that meets the user intention comprises a plurality of tasks having a logical relationship, wherein the logical relationship comprises any one or more of the following: a sequence relationship, a condition relationship, a cyclic relationship, or Boolean logic; and the method further comprises:
managing, by the central control device, the plurality of resources to enable the plurality of resources to perform the following step:
executing, by the second resource according to the logical relationship, the plurality of tasks having the logical relationship.

46. The method according to claim 35, wherein the method further comprises: managing, by the central control device, the plurality of resources to enable the plurality of resources to perform the following steps:

    before the recognizing, by a third resource, a user intention indicated by the first event, receiving, by a plurality of first resources, an interaction input;
    generating, by the third resource, a global context based on the interaction input, wherein the global context comprises one or more of the following: time at which the first resource receives the interaction input, the first resource, interaction content of the interaction input, physiological feature information of a user corresponding to the interaction input, device information of an electronic device to which the first resource belongs, or device information of a target device controlled by the interaction input; and
    recognizing, by the third resource based on the global context, the user intention indicated by the first event.

47. The method according to claim 46, wherein the interaction input comprises a historical input and a current input, and the global context comprises historical interaction information and current-round interaction information; and the method further comprises:
    managing, by the central control device, the plurality of resources to enable the plurality of resources to perform the following steps:

    obtaining, by the first resource, the historical interaction information based on the historical input, and obtaining the current-round interaction information based on the current input;
    matching, by the third resource from the historical interaction information, first historical interaction information associated with the current-round interaction information; and
    recognizing, by the third resource based on the first historical interaction information, the user intention indicated by the first event.

48. The method according to claim 35, wherein the first event comprises first dialogue information, the first dialogue information comprises a first instruction and a second instruction, an intention corresponding to the first instruction is associated with an intention corresponding to the second instruction, and the first instruction comprises a first pronoun; and the method further comprises:
    managing, by the central control device, the plurality of resources to enable the plurality of resources to perform the following steps:

    before recognizing, by the second resource, the user intention indicated by the first event, replacing an object indicated by the first pronoun in the first dialogue information with an object corresponding to the second instruction, to obtain second dialogue information; and
    recognizing, by the third resource based on the second dialogue information, the user intention indicated by the first event.

49. The method according to claim 35, comprising: managing, by the central control device, the plurality of resources to enable the plurality of resources to perform the following steps:

    before the recognizing, by a third resource, a user intention indicated by the first event, receiving, by the first resource, an interaction input within first preset time, and determining, by the third resource, a memory based on the interaction input, wherein the memory indicates a habit or preference for an interaction between a user and a device; and
    recognizing, by the third resource based on the memory, the user intention indicated by the first event.

50. An electronic device, comprising a memory and one or more processors, wherein the memory is coupled to the one or more processors, the memory is configured to store computer program code, the computer program code comprises computer instructions, and the one or more processors invoke the computer instructions, so that the electronic device performs the method according to any one of claims 34 to 49.

51. A computer-readable storage medium, wherein the computer-readable storage medium stores computer program instructions, and when the computer program instructions are executed by an electronic device, the electronic device is enabled to implement the method according to any one of claims 34 to 49.

52. A computer program product, comprising computer-readable code or a nonvolatile computer-readable storage medium carrying computer-readable code, wherein when the computer-readable code is run on an electronic device, a processor in the electronic device implements the method according to any one of claims 34 to 49.

53. A communication system, wherein the communication system comprises a plurality of electronic devices, the plurality of electronic devices comprise a central control device, and the central control device is configured to perform the method according to any one of claims 34 to 49.

FIG. 1A

FIG. 1B

Electronic device 100

Antenna 1 Antenna 2

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Charging management module [140]

Power management module [141]

Battery [142]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 2

| Electronic device (central control device) | ... | Electronic device (first device) | Electronic device (second device) | Electronic device (third device) |
|---|---|---|---|---|

S101: Deconstruct a resource into a composable capability

S101: Deconstruct a resource into a composable capability

S101: Deconstruct a resource into a composable capability

S101: Deconstruct a resource into a composable capability

S102: Form a communication system 10

S103: Synchronize device information with each other based on connections between devices

S104: Determine the central control device

S105: Initialize a virtual aggregation device

S106: Detect a specific event

S107: Analyze a user intention indicated by the specific event, and determine a to-be-executed task corresponding to the user intention

S109: Reconfigure the virtual aggregation device

S108: Execute the to-be-executed task that meets the user intention

FIG. 3

**Interaction composable capability**

Voice/Text interaction
- Far-field voice input
- Near-field voice input
- Text input
- ...

Visual interaction
- Visible light image
- Infrared image
- Depth image
- Skeleton point
- Eye movement/Line of sight
- ...

Touch interaction
- Touch input
- Knuckle input
- Button input
- ...

Physiological signal interaction
- Electromyographic input
- Electroencephalogram input
- Heart rate input
- Blood oxygen input
- ...

Posture interaction
- Inertial sensing input
- ...

...

Interaction capability

User

Service capability

Connection capability

Recognition capability

MediaPad

**Connection composable capability**

Short-range connection
- Wi-Fi connection
- Bluetooth connection
- NFC connection
- UWB connection
- ...

Long-range connection
- 5G connection
- 4G connection
- LAN connection
- Optical fiber connection
- ...

...

**Service composable capability**

Environment adjustment
- Heating/Cooling
- Humidification/Dehumidification
- Light adjustment
- ...

Control
- Device startup/shutdown
- Device pairing
- Parameter adjustment
- ...

Information service
- Searching
- Navigation
- Meal ordering
- ...

Data processing
- Music playing
- Video playing
- Data synchronization
- ...

...

**Recognition composable capability**

Speech recognition
- ASR recognition
- NLU recognition
- ...

Visual recognition
- Gesture recognition
- Posture recognition
- ...

Environment recognition
- User position recognition
- User interest recognition
- ...

FIG. 4

User interface 51

08:08

← Settings   WLAN

Wireless local area network ⬤

501 ~ Wi-Fi 1                🔒 🛜 ⏻

501 ~ Wi- Fi 2               🔒 🛜 ⏻

501 ~ Wi-Fi 3               🔒 🛜 ⏻

501 ~ Wi-Fi 4               🔒 🛜 ⏻

FIG. 5A

User interface 52

08:08

← Settings   Enter the password

502

Password

Enter the password of Wi-Fi 1!

FIG. 5B

User interface 53

08:08

←

Huawei account

503

139********

504

******

**SMS verification login**          **Retrieving the password**

Login

Registration

FIG. 5C

.ıll ..ıll 🛜 🔋 8:00

Home >
Five devices

**Discovered devices**  Virtual aggregation device

+

Router
Online|Bedroom

Air conditioner
Off|Living room

Speaker
Online|Bedroom

Headlamp
Off|Living room

Smart screen
Online|Living room

Home  Mall  Content  Scenario  My

**FIG. 5D**

User interface 61

.ıll ..ıll 🛜 🔋 8:00

Home >
Five devices

**Discovered devices**  Virtual aggregation device

+
Add a device

Router
Online|Bedroom

Air conditioner
Off|Living room

Speaker
Online|Bedroom

Headlamp
Off|Living room

Smart screen
Online|Living room

Home  Mall  Content  Scenario  My

**FIG. 5E**

EP 4 407 410 A1

98

## User interface 62

◀ Add a device 〰 622

**Scanning**
Make sure the smart device is plugged in and near the mobile phone

623

**Desktop computer**
Online|Bedroom    (Add)
624A

624

Add manually
625

Scan to add
626

621

**FIG. 5F**

## User interface 61

Home >
Six devices                               +

**Discovered devices**    Virtual aggregation device

Router
Online|Bedroom

Air conditioner
Off|Living room

Speaker
Online|Bedroom

Headlamp
Off|Living room

Smart screen
Online|Living room

Desktop computer
Online|Bedroom
618A

618

Home    Mall    Content    Scenario    My

**FIG. 5G**

User interface 54

User interface 55

08:08

08:08

Open composable capabilities

505

∫

Enter a face to join the communication system 10!

506 ～ Interaction composable capability

506 ～ Connection composable capability

506 ～ Recognition composable capability

506 ～ Service composable capability

FIG. 5H

FIG. 5I

EP 4 407 410 A1

**EP 4 407 410 A1**

ııll ..ıll 📶  8:00

Home >
Five devices  +

Discovered
devices

**Virtual aggregation
device**

632

🎤  Near-field voice
input capability
Available|Speaker  ⏻  ✕

631

🔊  Music playing capability
Available|Speaker  ⏻  ✕

👤  Infrared image detection
capability
Available|Smart screen  ⏻  ✕

+
Add a physical device

633

**FIG. 5J**

Home  Mall  Content  Scenario  My

ııll ..ıll 📶  8:00

Home >
Five devices  +

Discovered
devices

**Virtual aggregation
device**

🎤  Near-field voice
input capability
Available|Speaker  ⏻  ✕

🔊  Music playing capability  ⏻  ✕

**Add a composable capability**  ✕

💬  Text input capability
Available|Desktop
computer  Add

633C

🙂  Face detection  633A
capability
Available|Smart screen  Add

633D

633B

633E

**FIG. 5K**

Home  Mall  Content  Scenario  My

## User interface 63

Home >
Five devices                                                    +

Discovered    **Virtual aggregation**
devices            **device**

Near-field voice input
capability
Available|Speaker

Music playing capability
Available|Speaker

Infrared image detection
capability
Available|Smart screen

Text input capability
Available|Desktop
computer    634A  634B

634

+

Home    Mall    Content    Scenario    My

**FIG. 5L**

## User interface 63

Home >
Five devices                                                    +

Discovered    **Virtual aggregation**
devices            **device**

Near-field voice input
capability
Available|Speaker

The virtual aggregation device has been
reconfigured. Do you want to view?

Cancel            View

635

+

Home    Mall    Content    Scenario    My

**FIG. 5M**

FIG. 6A

Mobile phone A

Smart screen C in a living room (central control device)

Tablet computer B

Smart screen H in a bedroom

Smart screen C in the living room (central control device)

Mobile phone A

Group information 1

Group information 1

Tablet computer B

Smart screen H in the bedroom

Group 1

Mobile phone A

Smart screen C in the living room (central control device)

Group 2

Group information 2

Tablet computer B (central control device)

Smart screen H in the bedroom

FIG. 6B

FIG. 6C

EP 4 407 410 A1

FIG. 6D

Central control device

**Interaction composable capability**

Near-field voice

Far-field voice

Gesture video

...

Mux

**Recognition composable capability**

Near-field ASR

NLU

Far-field ASR

NLU

Palm detection

Keypoint detection

DM

...

**Service composable capability**

Skill 1

Skill 2

...

Skill N

Execution device/ platform

Virtual aggregation device example

FIG. 7

FIG. 8A

FIG. 8B

FIG. 8C

FIG. 8D

Camera

Living
room

Playing

Smart screen

Sofa

Child

Room

View the living room

Mother

Display

Laptop
computer

Mobile
phone

Home environment

FIG. 9

FIG. 10A

S1001

A first composable capability receives a plurality of rounds of interaction inputs

S1002

A third composable capability analyzes the plurality of rounds of received interaction inputs to obtain a global context

S1003

The third composable capability determines a user intention based on the global context

S1004

The third composable capability segments the user intention into a to-be-executed task

S1005

A virtual aggregation device maps the to-be-executed task to a second composable capability

FIG. 10B

Interaction input 1 → Multi-source input interaction context analysis module

Interaction input 2

Interaction input n

A part of modules in a virtual aggregation device

Global interaction context

Multi-modality intention decision-making module → Task sequence generation module

Task management module and task mapping module

Composable capability 1

Composable capability 2

Composable capability n

FIG. 10C

EP 4 407 410 A1

A first composable capability obtains dialogue information of a current-round dialogue when a user performs a voice dialogue interaction with a first device — S1101

A third composable capability obtains dialogue information of a historical dialogue in a virtual aggregation device — S1102

The third composable capability obtains, from obtained dialogue information of one or more rounds of historical dialogues based on the dialogue information of the current-round dialogue through matching, the dialogue information of the historical dialogue related to the dialogue information of the current-round dialogue — S1103

The third composable capability recognizes, based on the matched dialogue information of the historical dialogue, a user intention indicated by the dialogue information of the current-round dialogue — S1104

FIG. 11

S1201

A third composable capability obtains dialogue information of a current-round dialogue when a user performs a voice dialogue interaction with a first device

S1202

The third composable capability inputs the dialogue information of the round of dialogue into a natural language understanding model, and obtains an intention vector corresponding to the dialogue information of the current-round dialogue

S1203

The third composable capability encodes dialogue information of one or more rounds of historical dialogues by using a pre-trained natural language encoder, to obtain an encoding result corresponding to dialogue information of each round of historical dialogue

S1204

The third composable capability fuses the intention vector corresponding to the dialogue information of the current-round dialogue with the encoding result corresponding to the dialogue information of each round of historical dialogue, to obtain a fusion feature

S1205

The third composable capability inputs the fusion feature into a correlation model, to obtain a score that is of a correlation between the dialogue information of the current-round dialogue and the dialogue information of each round of historical dialogue and that is output by the correlation model

S1206

The third composable capability determines, based on the obtained correlation score, dialogue information of a historical dialogue related to the dialogue information of the current-round dialogue

S1207

The third composable capability recognizes a user intention based on the dialogue information of the current-round dialogue and the dialogue information of the historical dialogue related to the dialogue information of the current-round dialogue

FIG. 12

Information about a round of dialogue: {order of a dialogue round, input information, device name, device status, and near-field device list}

⬇ Convert to text information

Text information corresponding to the information about the round of dialogue: {"first round", "make a call", "mobile phone", "power on", "large screen, watch, and speaker"}

⬇ Pre-trained natural language encoder

{{"first" "round"} {"make" "a" "call"} {"mobile" "phone"} {"power" "on"} {"large" "screen" "watch" "speaker"}}

⬇ Encode

A plurality of vectors

⬇ Calculate an average value

Encoding result: {{1, 0, 0, ..., 1}, {0, 0, 1, ..., 1}, ..., {0, 1, 1, ..., 1}}

FIG. 13

Correlation score          Keyword

Correlation model

Correlation score network

Keyword extraction network

Sentence pair input encoder

Fusion feature

FIG. 14

FIG. 15

Intelligent semantic unit recognition — S1301

A first composable capability receives dialogue interaction information sent by a user to a first device

— S1302

A third composable capability segments the dialogue interaction information into a plurality of semantic units, to obtain a semantic unit text list

— S1303

The third composable capability recognizes, based on a predefined pronoun dictionary, a semantic unit that includes a pronoun in the semantic unit text list

Reference relationship unit recognition — S1304

The third composable capability recognizes an intention of each semantic unit based on an intention classification template

— S1305

The third composable capability performs semantic unit association recognition based on the intention of each semantic unit, and combines associated semantic units

Coreference resolution understanding — S1306

The third composable capability performs coreference resolution for a pronoun based on a reference semantic unit and a referred semantic unit that are combined

— S1307

The third composable capability determines intention information and a slot keyword of dialogue interaction information based on a reference semantic unit obtained after the coreference resolution

FIG. 16

(1) Input a text corresponding to dialogue interaction information and a corresponding audio pause feature into a semantic unit recognition model

(2) Preprocess the text of the dialogue interaction information to obtain a normalized text

(3) Remove a punctuation from the normalized text to obtain a normalized unpunctuated text

(4) Perform word segmentation on the normalized text and the normalized unpunctuated text, and calculate a displacement of a token unit in the normalized text after the word segmentation is performed on the normalized unpunctuated text

(5) Calculate, based on an intelligent semantic unit recognition model, the token unit obtained in the foregoing step, and output a semantic unit text obtained through the segmentation

(6) Obtain a semantic unit text list based on the semantic unit text obtained through the segmentation in the foregoing step and a displacement of each token unit in the normalized text

FIG. 17A

Input layer

Audio pause feature

Text information corresponding to dialogue interaction information

Preprocessing layer

Normalized unpunctuated text

Encoding layer

BERT word segmentation algorithm

Task layer

Softmax function

OOOEOOOEOOOE

Semantic unit recognition task

Softmax function

Gradient reversal function

Dense function

Max-pooling function

Task discriminator

Softmax function

001100110011

Slot detection task

FIG. 17B

"Search for food around Xinjiekou, play Andy Lau's
Forget Love Potion, and navigate there"

```
┌─────────────────────────────┐
│   Intelligent semantic unit  │
│        recognition           │
└─────────────────────────────┘
```

"Search for food around Xinjiekou"
"Play Andy Lau's Forget Love Potion"
"Navigate there"

```
┌──────────────┐   ┌──────────────┐
│  Predefined  │   │  Intention   │
│   pronoun    │   │ association  │
│  dictionary  │   │  template    │
└──────────────┘   └──────────────┘

┌─────────────────────────────┐
│  Reference relationship unit │
│        recognition           │
└─────────────────────────────┘
```

"Search for food around Xinjiekou and navigate there"
"Play Andy Lau's Forget Love Potion"

```
┌─────────────────────────────┐
│   Coreference resolution     │
│       understanding          │
└─────────────────────────────┘
```

"Search for food around Xinjiekou and navigate to Xinjiekou"
"Play Andy Lau's Forget Love Potion"

```
┌───────────────────────────────────────────────────────┐
│   Intention 1. SEARCH_FOOD (loc=Xinjiekou)             │
│ Intention 2. PLAY_MUSIC (artist=Andy Lau, and song=Forget │
│                   Love Potion)                         │
│   Intention 3. NAVIGATE (loc=Xinjiekou)                │
└───────────────────────────────────────────────────────┘
```

FIG. 17C

FIG. 18

A first composable capability obtains an interaction instruction entered by a user, and converts the interaction instruction into text description information — S1401

A third composable capability determines a service intention of the user based on the text description information corresponding to the interaction instruction — S1402

The third composable capability determines, based on the service intention and the text description information, information about one or more response subservices and information about a logical relationship between the response subservices — S1403

A virtual aggregation device maps a task corresponding to each response subservice to a corresponding second composable capability — S1404

The third composable capability constructs an execution process of a long-term task based on the information about the logical relationship between the response subservices — S1405

The second composable capability executes the long-term task based on the constructed execution process of the long-term task — S1406

FIG. 19A

```
                    ( Start a long-term task )        No
                              │           ◄──────────────┐
                              ▼                           │
                         ╱─────────╲                      │
                        ╱  Detect a  ╲                    │
                       ╱ status of a smart kettle 160. Is ╲──┘
                       ╲  the smart kettle 160 boiling    ╱
                        ╲       water?                   ╱
                         ╲─────────╱
                              │ Yes
       ┌──────────────────────┼───────────────────────────────────────────────┐
       │   ┌ ─ ─ ─ ─ ─ ─ ─ ─ ─┼─ ─ ─ ─ ─ ─ ┐   ┌ ─ ─ ─┼─ ─ ─ ─ ─ ─ ─ ─ ─ ─ ─ ┐│
       │   │                  ▼              │   │      ▼                       ││
       │   │  ┌──────────────────────────┐  │   │  ┌──────────────────────┐    ││
       │   │  │ Control a smart lock 170 to│ │  │   │ Control the smart lock 170 to │
       │   │  │   start video surveillance │ │  │   │      be locked        │    ││
       │   │  └──────────────────────────┘  │   │  └──────────────────────┘    ││
       │   │              │          No      │   │          │                   ││
       │   │              ▼      ◄────────┐  │   │          ▼                   ││
       │   │         ╱─────────╲          │  │   │     ╱─────────╲              ││
       │   │        ╱  Is an age ╲         │ │   │    ╱ Is detected ╲            ││
       │   │       ╱ of a detected face younger than╲─┘│  ╱ fingerprint information the ╲  │
       │   │       ╲   14 years old?      ╱         │  ╲ same as fingerprint information ╱ │
       │   │        ╲─────────╱                     │   ╲    of a child?   ╱           ││
       │   │              │ Yes                     │     ╲─────────╱                  ││
       │   │              ▼                         │  Yes │         │ No              ││
       │   │  ┌──────────────────────────┐         │      ▼         ▼                 ││
       │   │  │  Output a message prompt  │         │ ┌──────────┐ ┌──────────────┐    ││
       │   │  └──────────────────────────┘         │ │ Keep the │ │ Control the smart lock │
       │   └ ─ ─ ─ ─ ─ ─ ─ ─ ─ ─ ─ ─ ─ ─ ─ ─ ─ ┘ │ │ door locked│ │ 170 to be unlocked │ │
       │                                           │ └──────────┘ └──────────────┘    ││
       │                                           └ ─ ─ ─ ─ ─ ─ ─ ─ ─ ─ ─ ─ ─ ─ ─ ─ ┘│
       │                                                        │                      │
       │                                                        ▼                      │
       │              No                              ╱─────────────────╲              │
       └──────────────────────────────────────────── ╲ Is the task terminated? ╱◄──────┘
                                                       ╲─────────────────╱
                                                              │ Yes
                                                              ▼
                                                    ( Exit the long-term task )
```

FIG. 19B

A third composable capability obtains an interaction operation record — S1501

The third composable capability constructs a memory model based on the interaction operation record — S1502

The third composable capability performs instruction recognition and/or intention decision-making based on the memory model — S1503

FIG. 20

User interaction operation record

Short-term memory network

Short-term memory output

Network conversion

Long-term memory input

Long-term memory network

Long-term memory output

Short-term memory forgetting network

Long-term memory forgetting network

Control parameter

Control parameter

Instruction recognition algorithm

...

Intention decision-making algorithm

FIG. 21A

FIG. 21B

FIG. 21C

S1601

A first composable capability receives an interaction input of a user

S1602

A third composable capability recognizes a user identity based on the interaction input of the user

S1603

The first composable capability obtains environment status information and/or device status information

S1604

The third composable capability determines a user intention based on a user profile, and arranges a to-be-executed task

S1605

A virtual aggregation device maps the to-be-executed task to a second composable capability

FIG. 21D

Device 101    Device 102

User

Device 103

Device 104

FIG. 22

FIG. 23

## INTERNATIONAL SEARCH REPORT

| International application No. |
|---|
| **PCT/CN2022/131166** |

### A. CLASSIFICATION OF SUBJECT MATTER

G06F 3/01(2006.01)i

According to International Patent Classification (IPC) or to both national classification and IPC

### B. FIELDS SEARCHED

Minimum documentation searched (classification system followed by classification symbols)

H04L; G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 智能, 智慧, 家居, 家电, 家具, 车载, 检测, 监测, 控制, 中控, 管理, 调用, 多, 资源, 业务, 助手, 执行, 运行, 操作, 对应, 映射, 关联, intelligence, smart, home, appliance, furniture, in-vehicle, detection, monitor, control, central control, management, invocation, multiple, resource, business, assistant, execution, running, operation, mapping, association

### C. DOCUMENTS CONSIDERED TO BE RELEVANT

| Category* | Citation of document, with indication, where appropriate, of the relevant passages | Relevant to claim No. |
|---|---|---|
| X | CN 112397062 A (HUAWEI TECHNOLOGIES CO., LTD.) 23 February 2021 (2021-02-23) description, paragraphs 149-400 | 1-53 |
| A | WO 2021180062 A1 (HUAWEI TECHNOLOGIES CO., LTD.) 16 September 2021 (2021-09-16) entire document | 1-53 |
| A | CN 109814717 A (ZHUHAI GREE ELECTRIC APPLIANCES INC.) 28 May 2019 (2019-05-28) entire document | 1-53 |
| A | CN 108062031 A (NINGXIA YULONG SCIENCE & TECHNOLOGY CO., LTD.) 22 May 2018 (2018-05-22) entire document | 1-53 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 January 2023** | **16 January 2023** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/131166**

| Patent document cited in search report | | | Publication date (day/month/year) | Patent family member(s) | | | Publication date (day/month/year) |
|---|---|---|---|---|---|---|---|
| CN | 112397062 | A | 23 February 2021 | WO | 2021027267 | A | 18 February 2021 |
| | | | | US | 2021183386 | A1 | 17 June 2021 |
| | | | | EP | 3933830 | A1 | 05 January 2022 |
| | | | | JP | 2022534371 | W | 29 July 2022 |
| WO | 2021180062 | A1 | 16 September 2021 | CN | 113377899 | A | 10 September 2021 |
| CN | 109814717 | A | 28 May 2019 | None | | | |
| CN | 108062031 | A | 22 May 2018 | None | | | |

Form PCT/ISA/210 (patent family annex) (January 2015)

**EP 4 407 410 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111340372
- CN 202111633492